# EUROPEAN PATENT APPLICATION

(11) **EP 3 101 583 A1**
(43) Date of publication of application: **07.12.2016**
(21) Application number: 15742681.8
(22) Date of filing: 21.01.2015
(51) Int. Cl.: G06F 21/62, G06F 21/33, H04L 12/70, H04L 29/06, H04L 29/08

(54) **MANAGEMENT SYSTEM, PROGRAM, AND MANAGEMENT METHOD**

(30) Priority: 31.01.2014 JP 2014016955
(71) Applicant: Ricoh Company, Ltd., Tokyo 143-8555 (JP)
(72) Inventor: TAKAYASU, Osamu, Tokyo 143-8555 (JP); MAEDA, Kaoru, Tokyo 143-8555 (JP)
(74) Representative: Schwabe - Sandmair - Marx
(86) International application number: PCT/JP2015/051546
(87) International publication number: WO 2015/115273

(57) **Abstract**

A management system includes a sorting unit configured to receive an access request to access a protection resource, an access to which is protected, transmitted from a communication apparatus, and sort a forwarding destination of the access request to a first forwarding destination or a second forwarding destination based on a transmission path of the access request; an allowance determination unit configured to determine whether an access to the protection resource by the access request sorted to the first forwarding destination is allowed; and a readout processing unit configured to access the protection resource by the access request, the access of which is determined to be allowed by the allowance determination unit, or the access request sorted to the second forwarding destination by the sorting unit, and disclose the protection resource to the communication apparatus.

## Description

### BACKGROUND OF THE INVENTION

### 1. Field of the Invention

0001 The present invention relates to a management system for managing a state of a transmission terminal that transfers content data.

### 2. Description of the Related Art

0002 Video conference systems that perform a video conference via a communication network such as the Internet have become popular in recent years due to a demand for reducing travel costs and time of parties. In such a communication system when a speech starts between a plurality of communication terminals, speech data such as image data or sound data are sent/received, thereby realizing a video conference.

0003 When a speech starts between two bases that mean two speech terminals, in an IP telephone which is one of services of speech, an SIP (Session Initiation Protocol) has been used as a communication protocol for establishing a session between the two bases. According to this communication protocol, an SIP server performs call control that means control for sending/receiving call information between the speech terminals and for establishing a call, and thereby establishing the session between the speech terminals and allowing an immediate communication of sound data or the like between the speech terminals.

0004 On the other hand, OAuth2.0 allows accessing a protected resource by a client acquiring an access token. The access token is issued for the client by an allowance server accompanied by permission by an owner of the resource. The client uses the access token in order to access the protected resource that a resource server has.

0005 Technologies that enhance security by issuing an allowance token after confirming whether an object service, which issues an allowance token, has sufficient authority for issuing the allowance token have been known (For example, see Patent Document 1).

### [Citation List]

### [Patent Literature]

0006 [PTL 1] Japanese Unexamined Patent Application Publication No. 2013-145506

### SUMMARY OF THE INVENTION

### [Technical Problem]

0007 However, in the conventional OAuth2.0, it is not possible to switch the access to a resource depending on whether the specific resource needs protection. For example, for an access from an external network such as the Internet, it is necessary to examine an access token to protect the resource. However, for an access from an internal network, it is not always necessary to examine the access token. In order to realize switching between the case of examining the access token and the case of not examining the access token, there is a problem in the aspect of transmission efficiency or security, such as issuing a special access token for the access from the internal network.

0008 It is an object of one embodiment of the present invention to reduce processing load regarding the access to the resource that requires protection.

### [Solution to Problem]

0009 According to an aspect of the invention a management system includes a sorting unit configured to receive an access request to access a protection resource, an access to which is protected, transmitted from a communication apparatus, and sort a forwarding destination of the access request to a first forwarding destination or a second forwarding destination based on a transmission path of the access request; an allowance determination unit configured to determine whether an access to the protection resource by the access request sorted to the first forwarding destination is allowed; and a readout processing unit configured to access the protection resource by the access request, the access of which is determined to be allowed by the allowance determination unit, or the access request sorted to the second forwarding destination by the sorting unit, and disclose the protection resource to the communication apparatus.

### [Advantageous effect of invention]

0010 According to an aspect of the invention, it becomes possible to reduce the processing load regarding the access to the resource that requires protection.

### [Brief Description of Drawings]

0011
[FIG. 1]

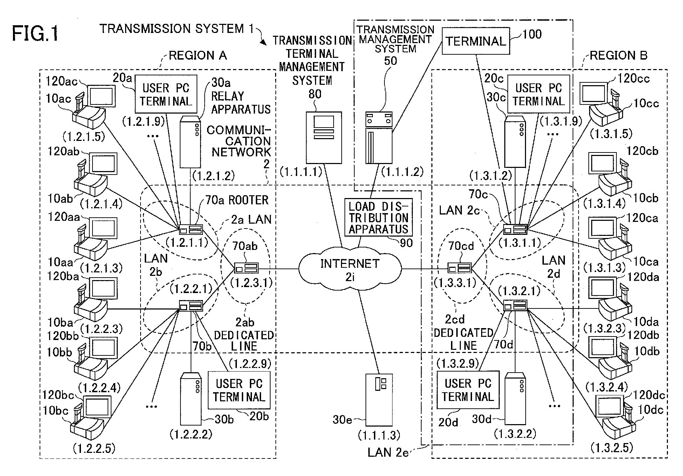

   FIG. 1 is a schematic view of a transmission system according to an embodiment.
[FIG. 2]

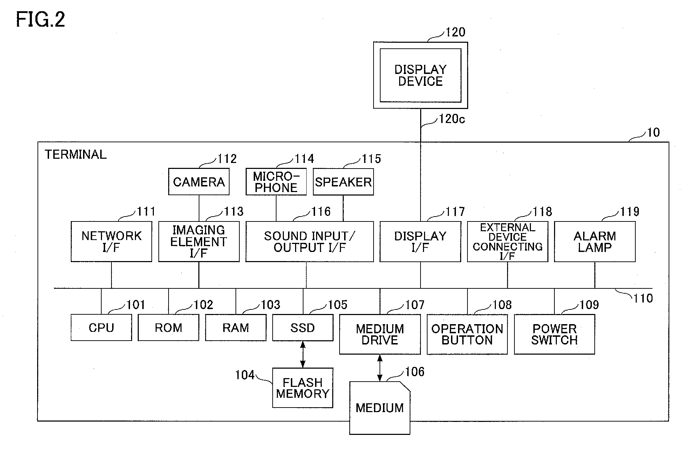

   FIG. 2 is a hardware configuration diagram of a transmission terminal according to the embodiment.
[FIG. 3]

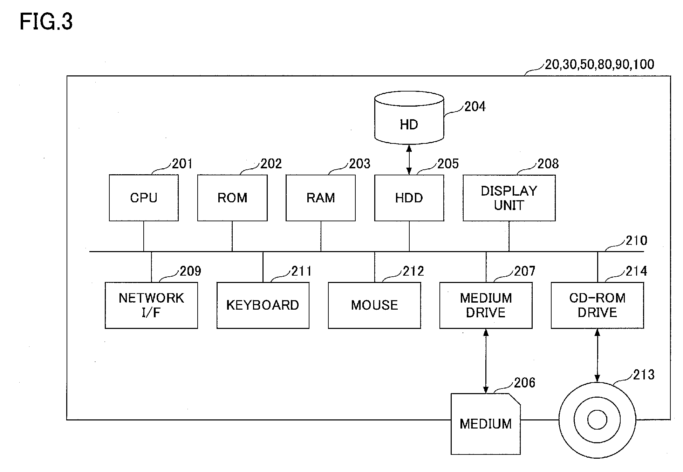

   FIG. 3 is a hardware configuration diagram of a transmission management system, a user PC terminal, a relay apparatus, a transmission terminal management system, a load distribution apparatus, or a terminal according to the embodiment.
[FIG. 4]

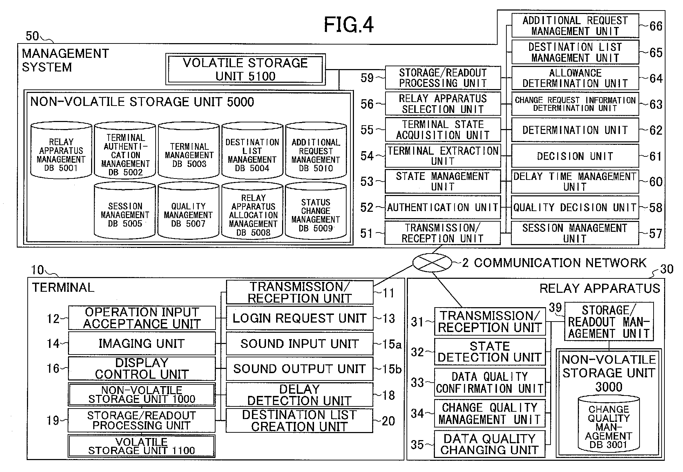

   FIG. 4 is a functional block diagram of respective terminals, an apparatus and a system of the transmission system according to the embodiment.
[FIG. 5]

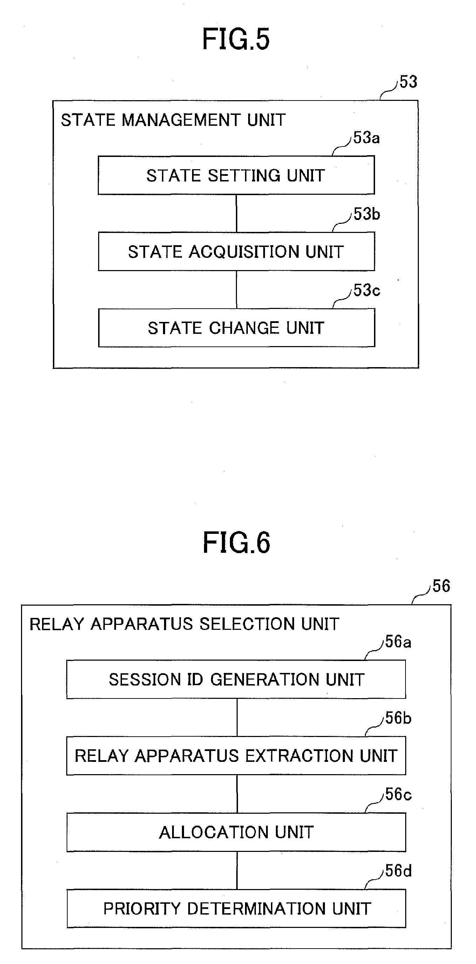

   FIG. 5 is a functional block diagram depicting in detail the state management unit 53 in FIG. 4.
[FIG. 6]
   FIG. 6 us a functional block diagram depicting in detail the relay apparatus selection unit 56 in FIG. 4.
[FIG. 7]

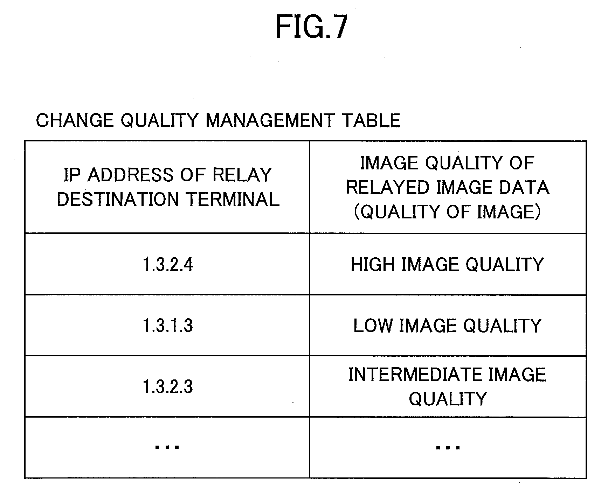

   FIG. 7 is a conceptual diagram depicting a change quality management table.
[FIG. 8]

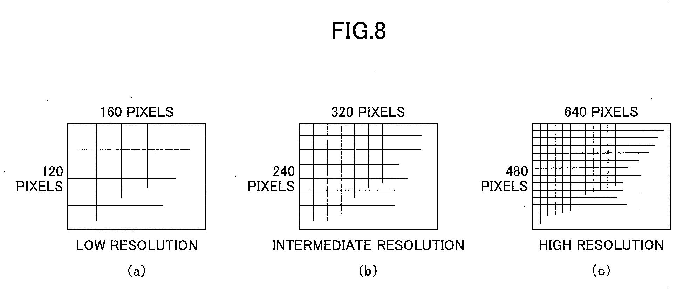

   FIG. 8 is a conceptual diagram for explaining an image quality of image data.
[FIG. 9]

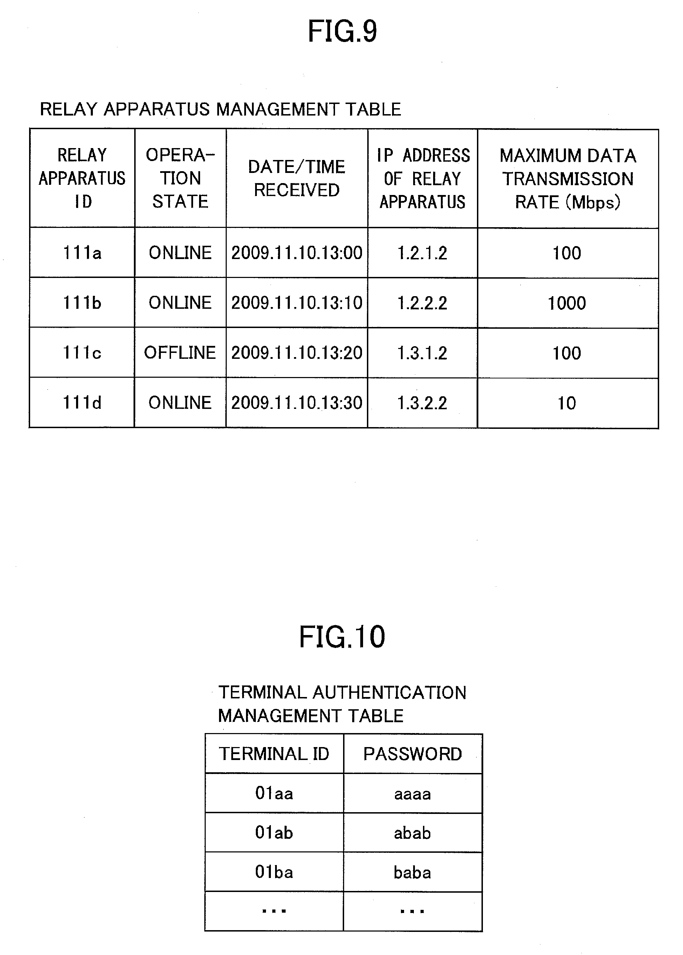

   FIG. 9 is a conceptual diagram depicting a relay apparatus management table.
[FIG. 10]
   FIG. 10 is a conceptual diagram depicting a terminal authentication management table.
[FIG. 11]

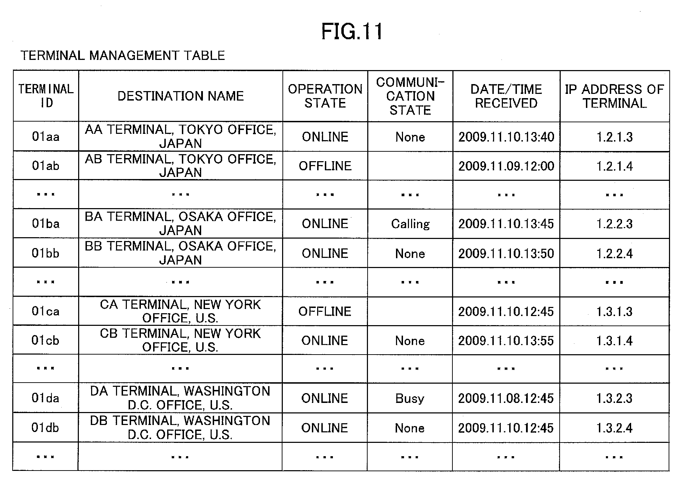

   FIG. 11 is a conceptual diagram depicting a terminal management table.
[FIG. 12]

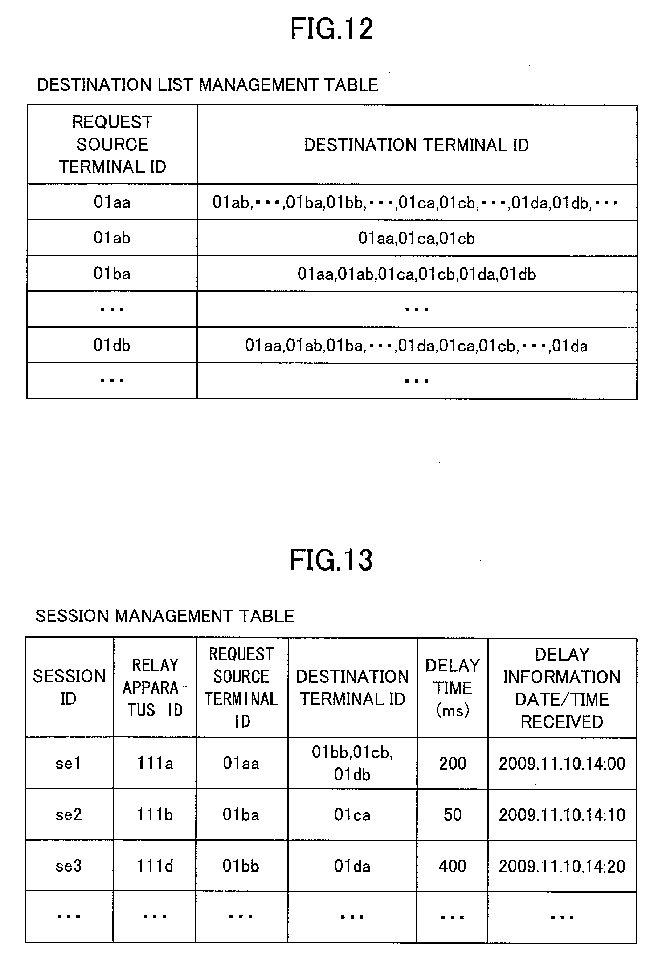

   FIG. 12 is a conceptual diagram depicting a terminal management table.
[FIG. 13]
   FIG. 13 is a conceptual diagram depicting a session management table.
[FIG. 14]

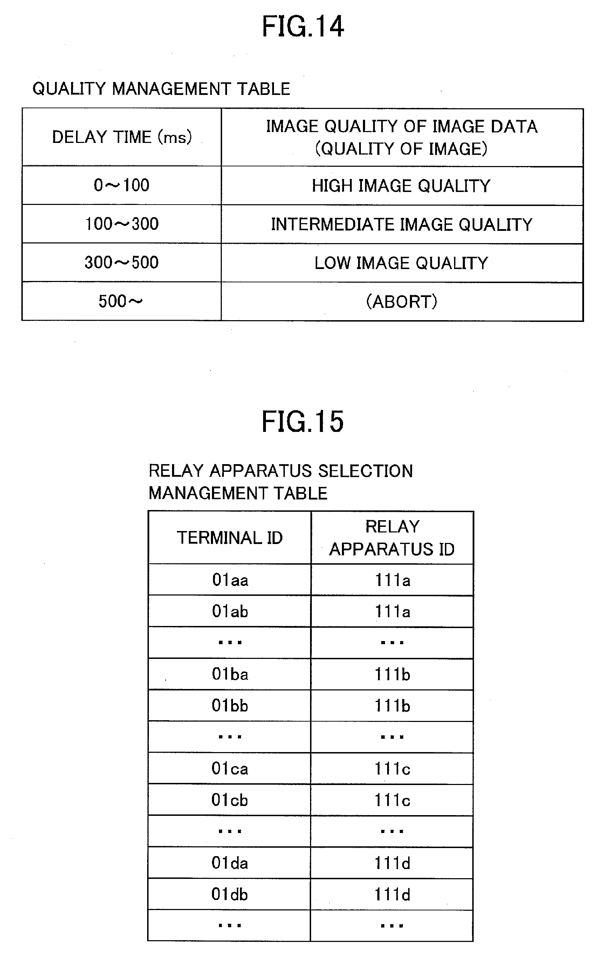

   FIG. 14 is a conceptual diagram depicting a quality management table.
[FIG. 15]
   FIG. 15 is a conceptual diagram depicting a relay apparatus selection management table.
[FIG. 16]

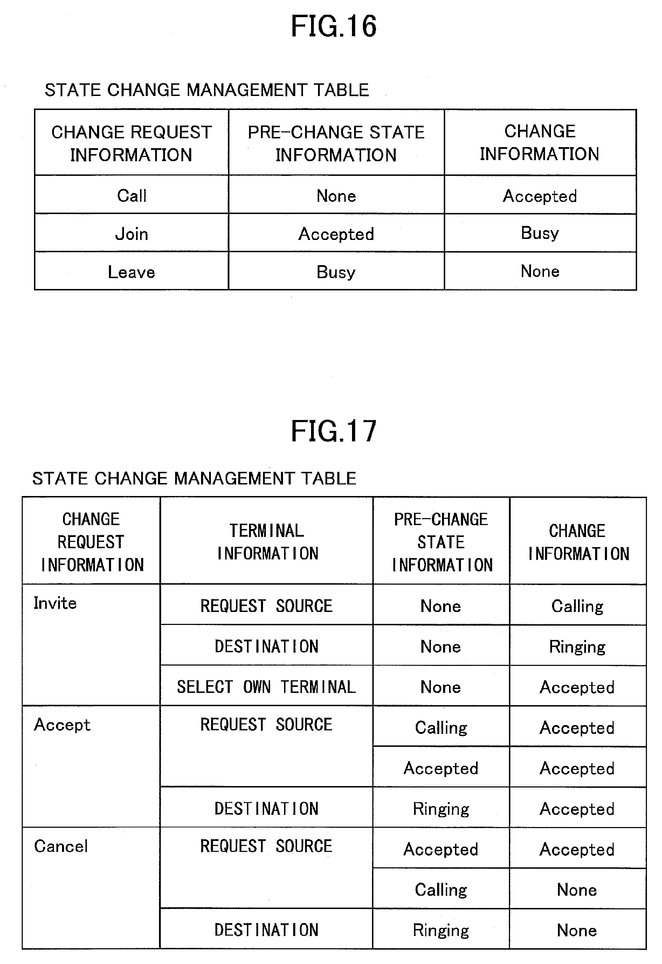

   FIG. 16 is a conceptual diagram depicting a state change management table.
[FIG. 17]
   FIG. 17 is a conceptual diagram depicting the state change management table.
[FIG. 18]

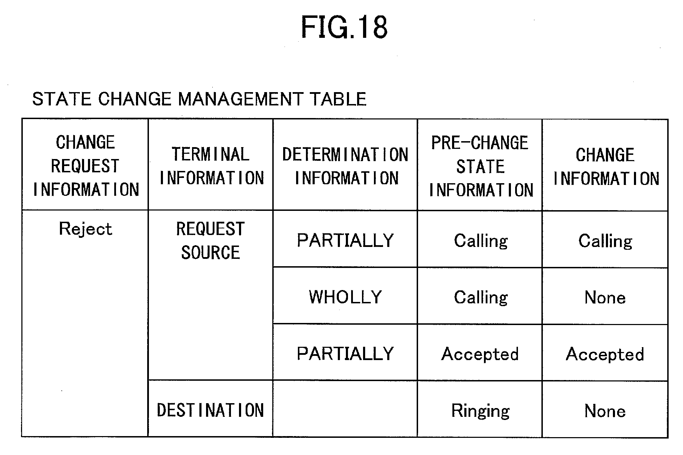

   FIG. 18 is a conceptual diagram depicting the state change management table.
[FIG. 19]

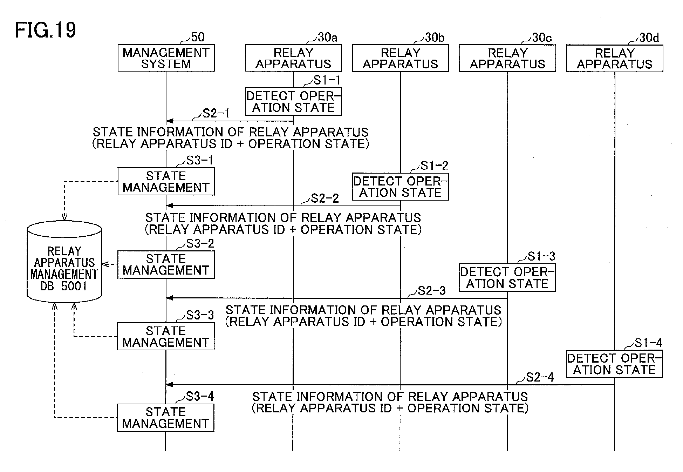

   FIG. 19 is a sequence diagram depicting a process of managing state information indicating operation state of the respective relay apparatuses.
[FIG. 20]

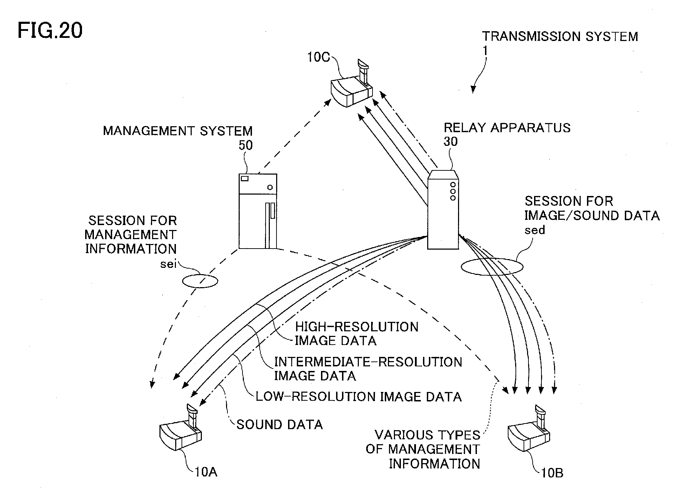

   FIG. 20 is a conceptual diagram depicting a state of sending/receiving image data, sound data and various pieces of management information in the transmission system.
[FIG. 21]

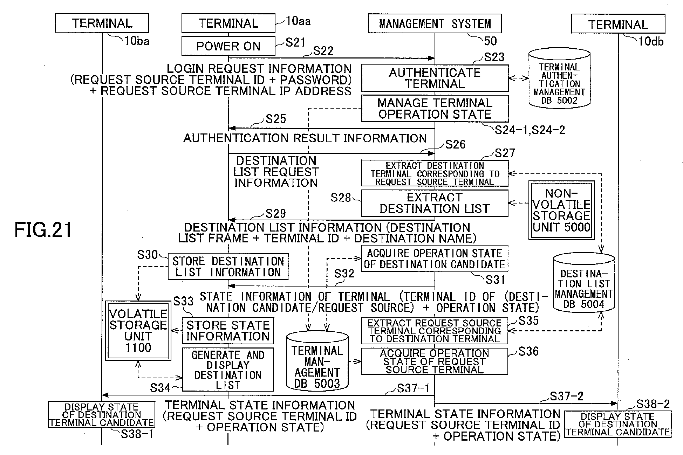

   FIG. 21 is a sequence diagram depicting a process in a preparation stage for starting speech between transmission terminals.
[FIG. 22]

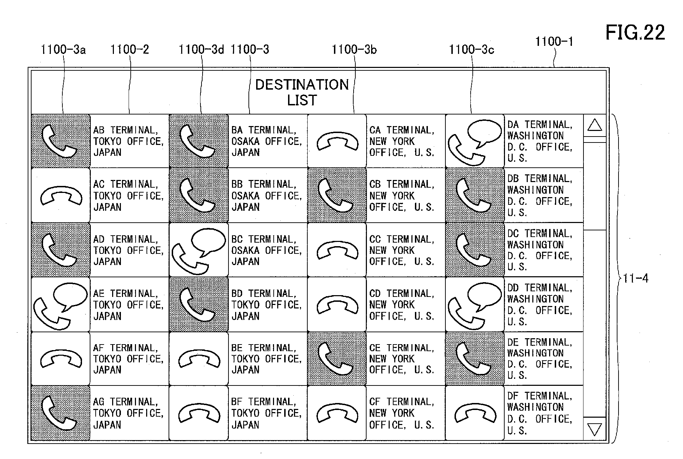

   FIG. 22 is a conceptual diagram depicting a destination list according to the embodiment.
[FIG. 23]

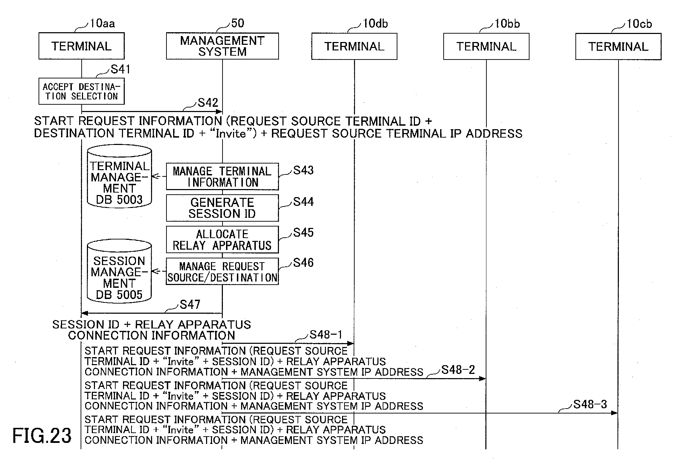

   FIG. 23 is a sequence diagram depicting a process of requiring a start of communication.
[FIG. 24]

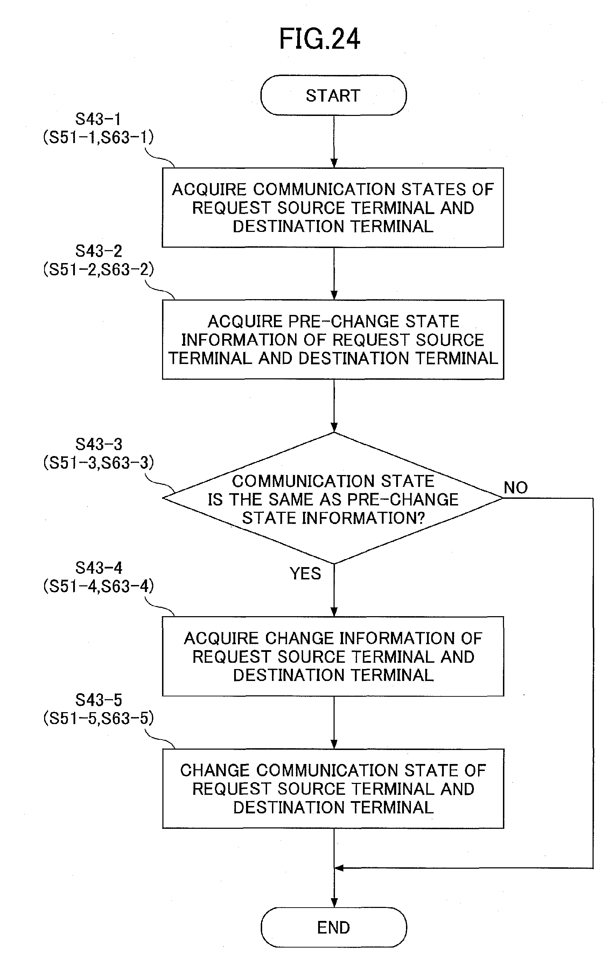

   FIG. 24 is a process flowchart depicting a process of changing a state of communication.
[FIG. 25]

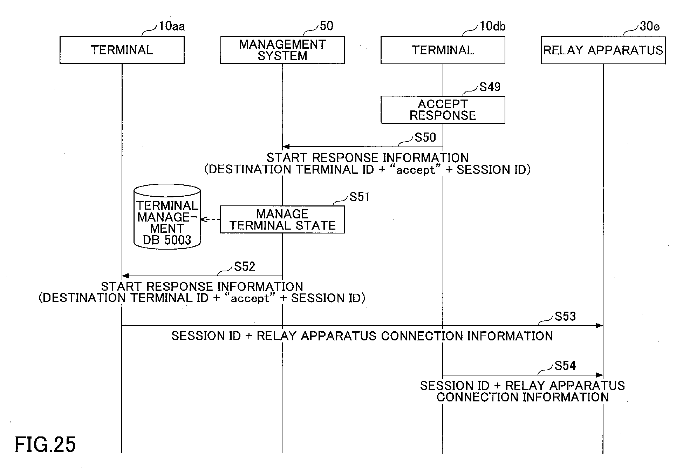

   FIG. 25 is a sequence diagram depicting a process of permitting a request for starting communication.
[FIG. 26]

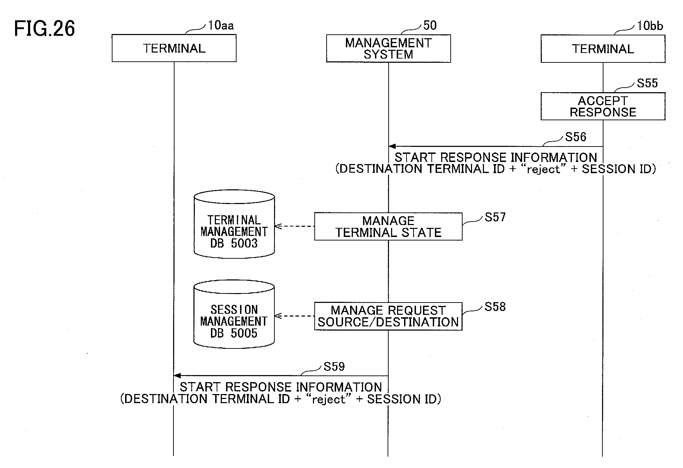

   FIG. 26 is a sequence diagram depicting a process of rejecting the request for starting communication.
[FIG. 27]

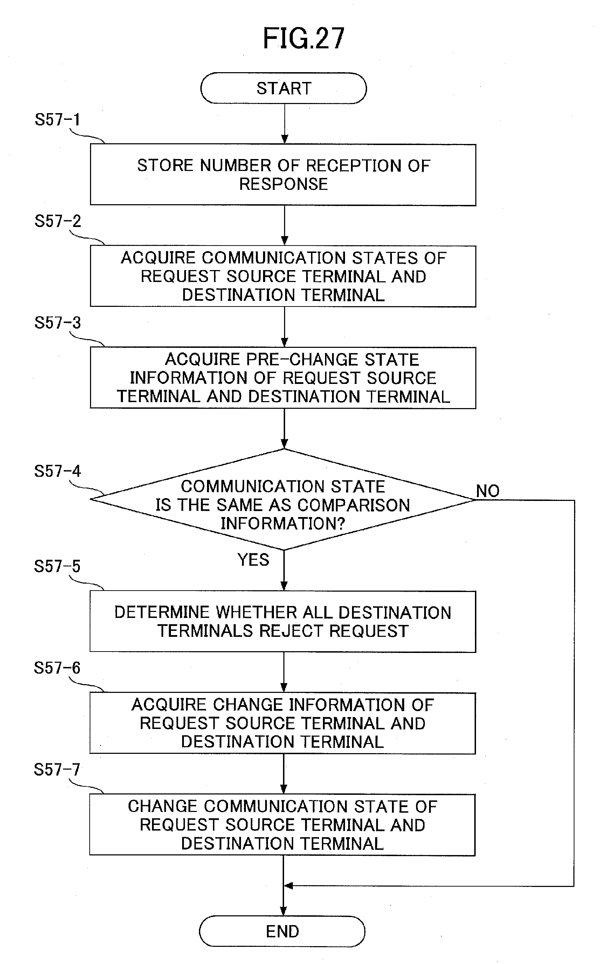

   FIG. 27 is a process flowchart depicting a process of changing a state of communication.
[FIG. 28]

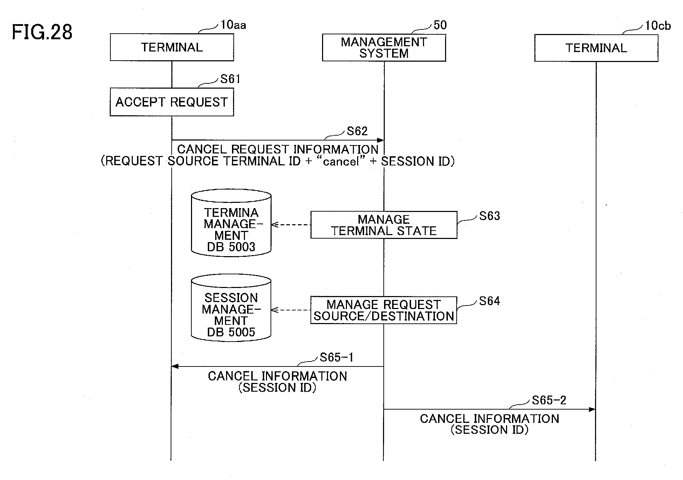

   FIG. 28 is a sequence diagram depicting a process of cancelling the request for starting communication.
[FIG. 29]

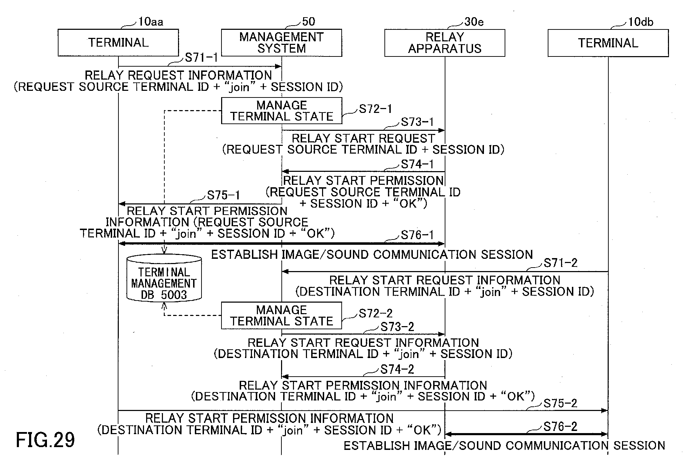

   FIG. 29 is a sequence diagram depicting a process of requiring a relay of speech data.
[FIG. 30]

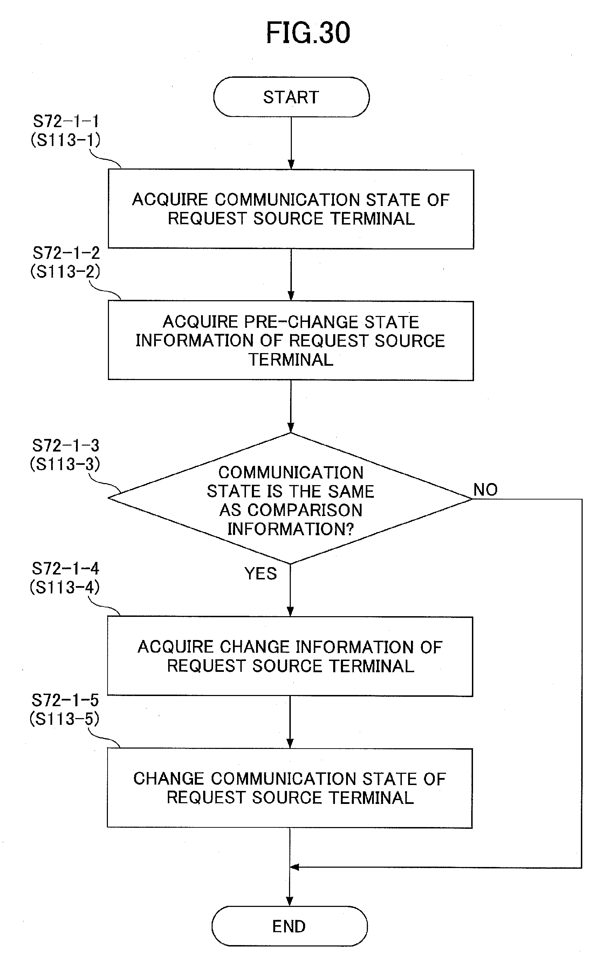

   FIG. 30 is a process flowchart depicting a process of changing the state of communication.
[FIG. 31]

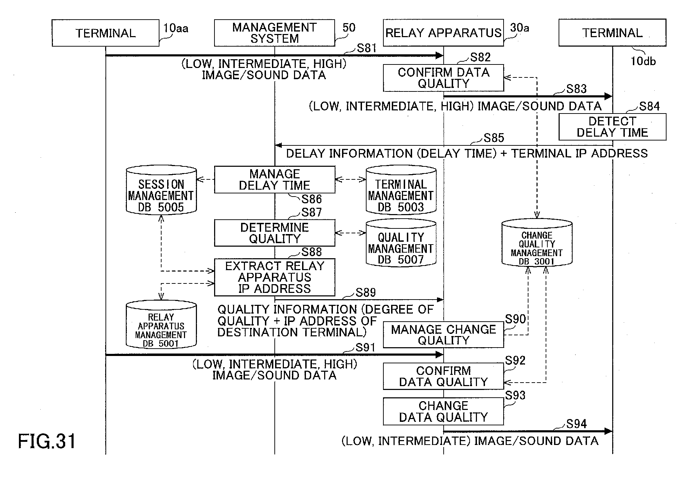

   FIG. 31 is a sequence diagram depicting a process of sending/receiving image data and sound data between transmission terminals.
[FIG. 32]

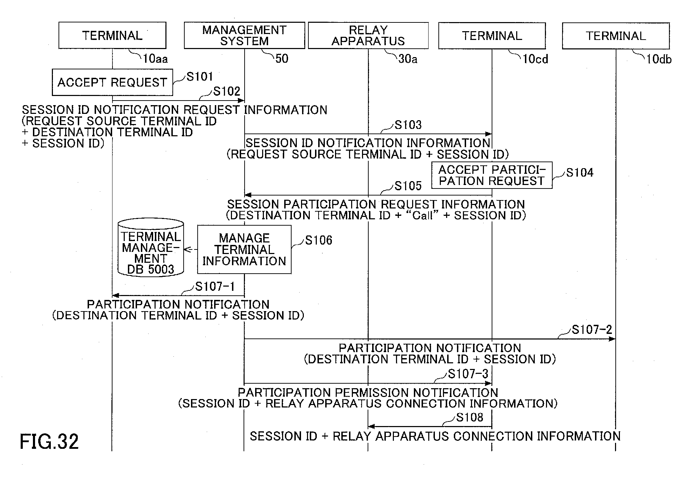

   FIG. 32 is a sequence diagram depicting a process of requesting participation in a session for speech data.
[FIG. 33]

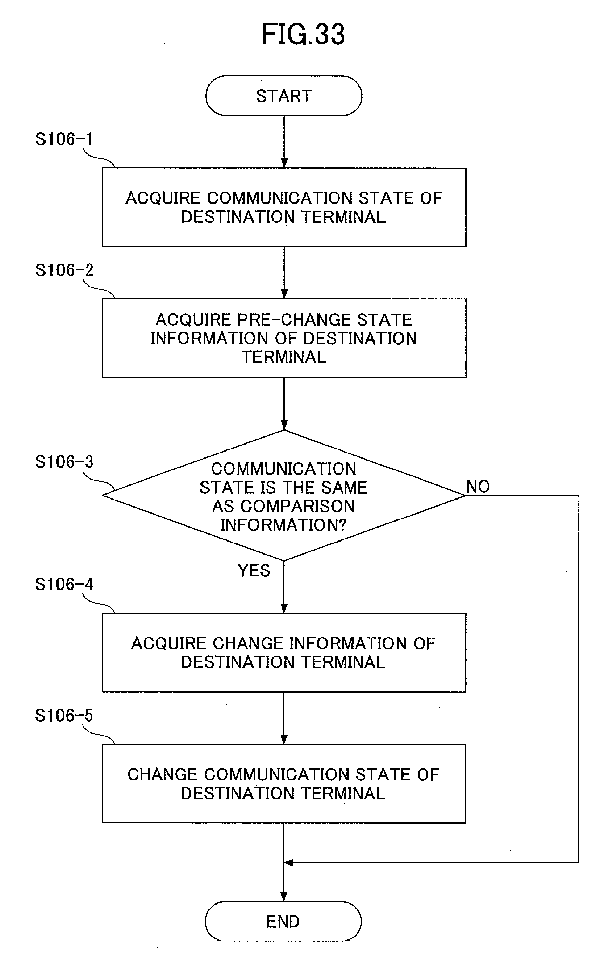

   FIG. 33 is a process flowchart depicting a process of changing the state of communication.
[Fig. 34]

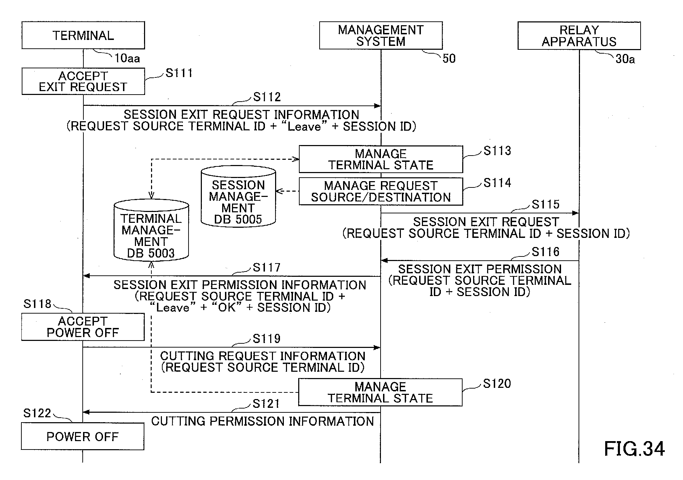

   FIG. 34 is a sequence diagram depicting a process of requiring exiting the session for speech data.
[FIG. 35]

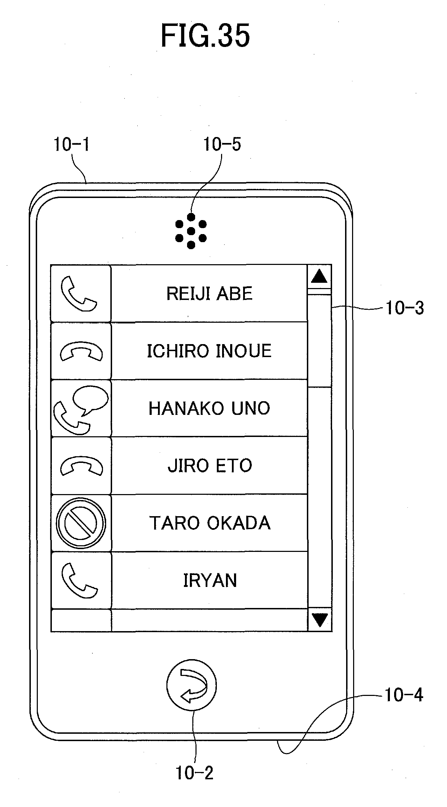

   FIG. 35 is a conceptual diagram depicting a destination list according to another embodiment.
[FIG. 36]

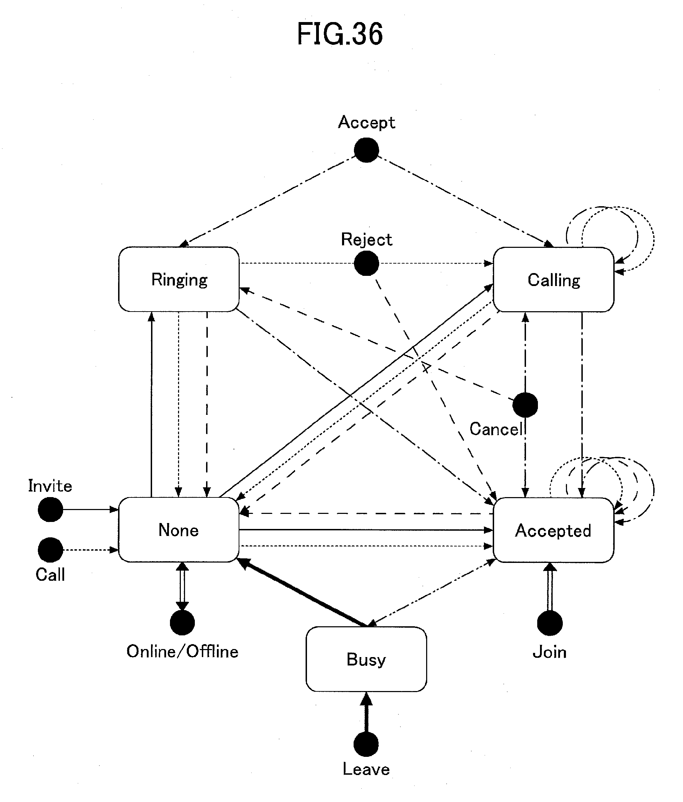

   FIG. 36 is a state transition diagram depicting a transition of a state of communication.
[FIG. 37]

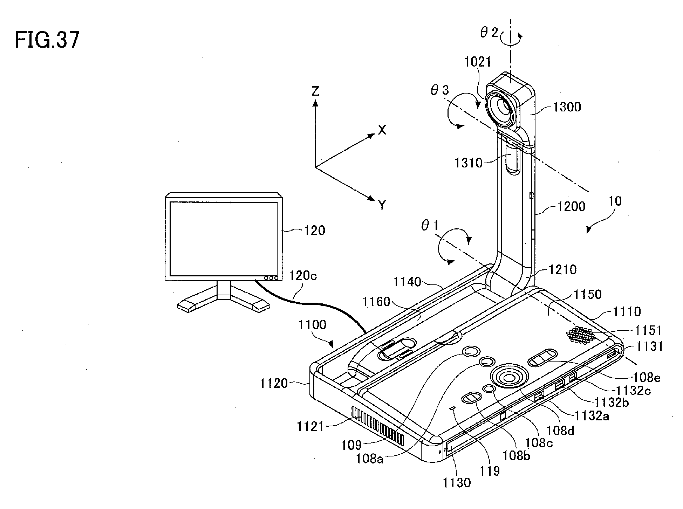

   FIG. 37 is an external view of the transmission terminal according to the embodiment.
[FIG. 38]

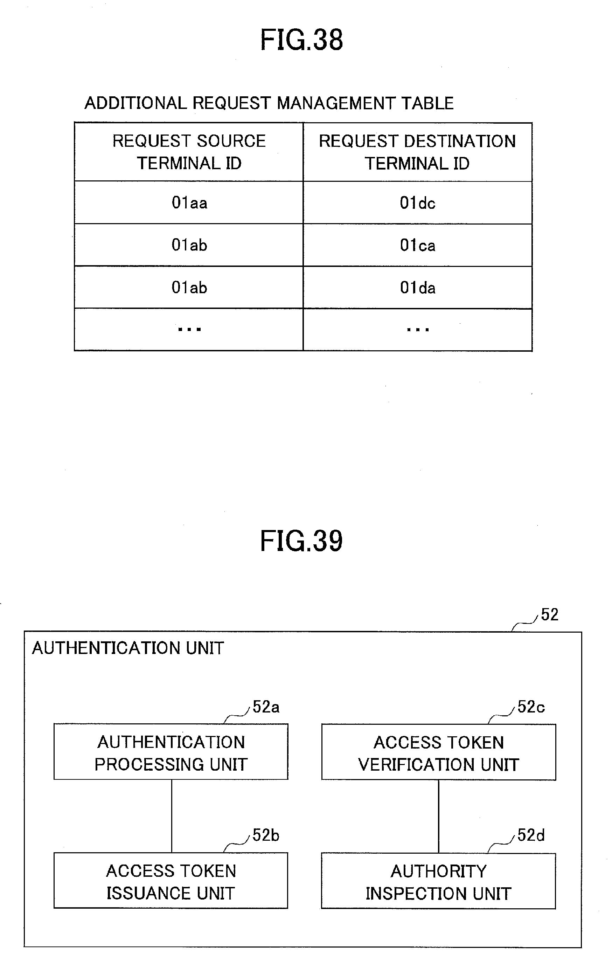

   FIG. 38 is a conceptual diagram depicting a supplemental request management table.
[FIG. 39]
   FIG. 39 is a functional block diagram depicting in detail the authentication unit 52 in FIG. 4.
[FIG. 40]

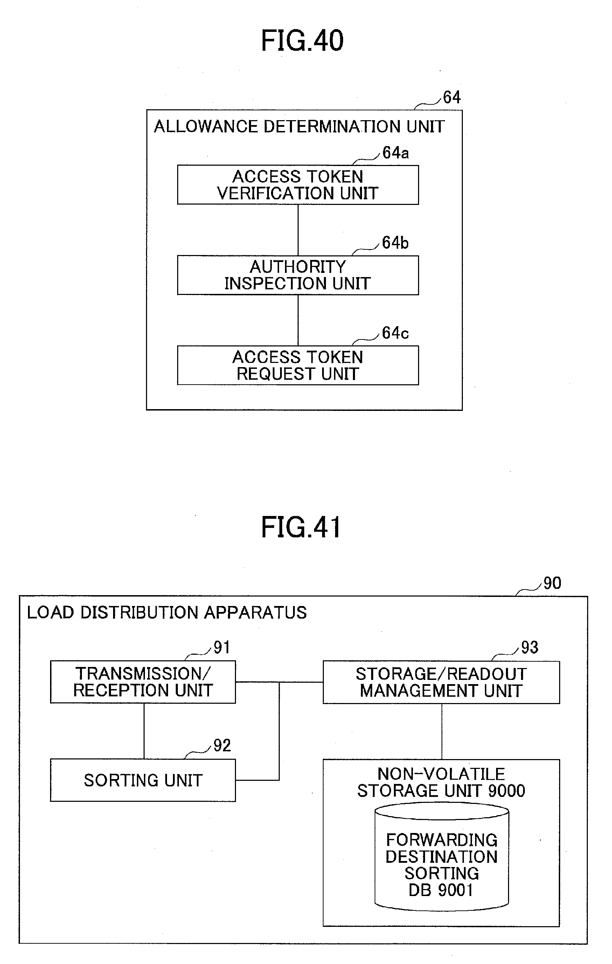

   FIG. 40 is a functional block diagram depicting in detail the allowance determination unit 64 in FIG. 4.
[FIG. 41]
   FIG. 41 is a functional block diagram of a load distribution apparatus in the transmission system according to the embodiment.
[FIG. 42]

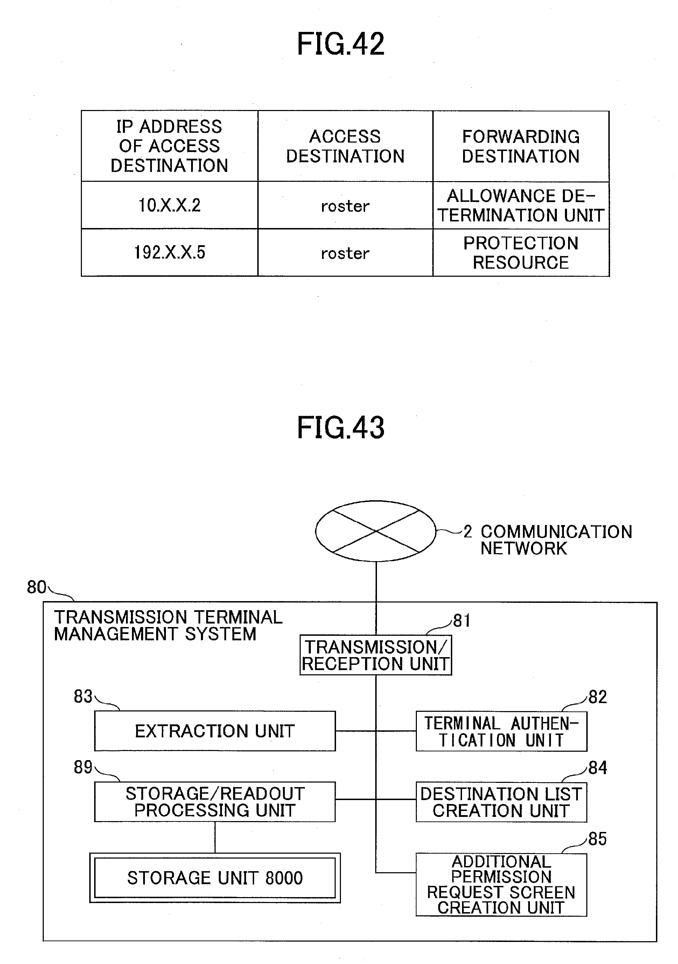

   FIG. 42 is a conceptual diagram depicting a forwarding destination sorting management table.
[FIG. 43]
   FIG. 43 is a functional block diagram of a transmission terminal management system in the transmission system according to the embodiment.
[FIG. 44]

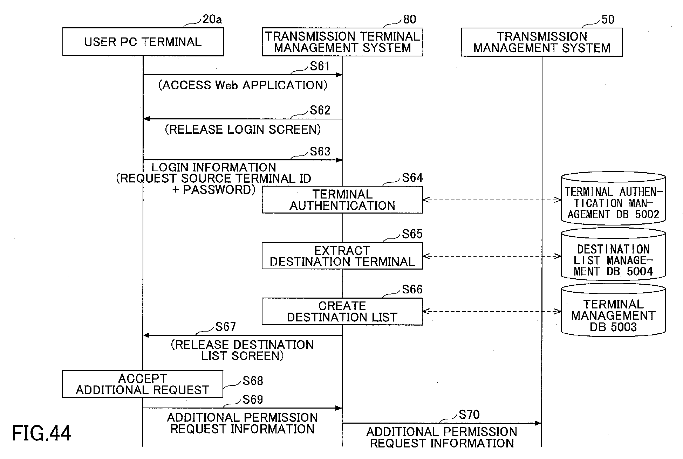

   FIG. 44 is a sequence diagram for performing a supplemental approval request from a user PC terminal.
[FIG. 45]

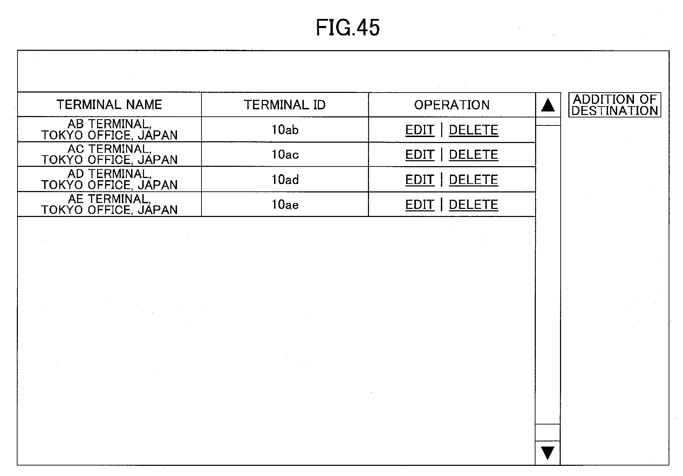

   FIG. 45 is a conceptual diagram depicting a destination list.
[FIG. 46]

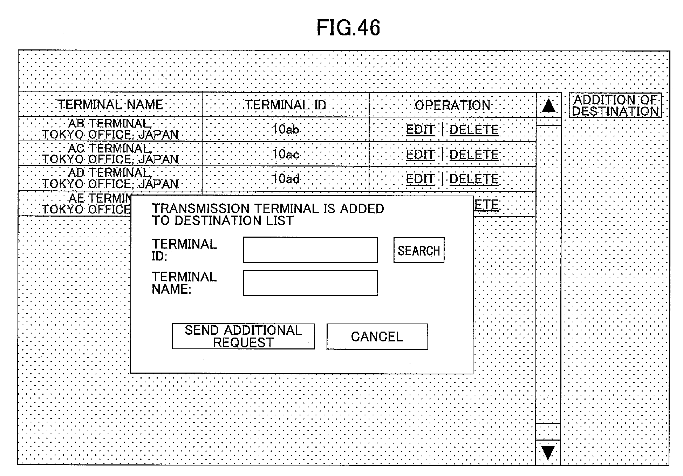

   FIG. 46 is a conceptual diagram depicting a supplemental request acceptance screen.
[FIG. 47]

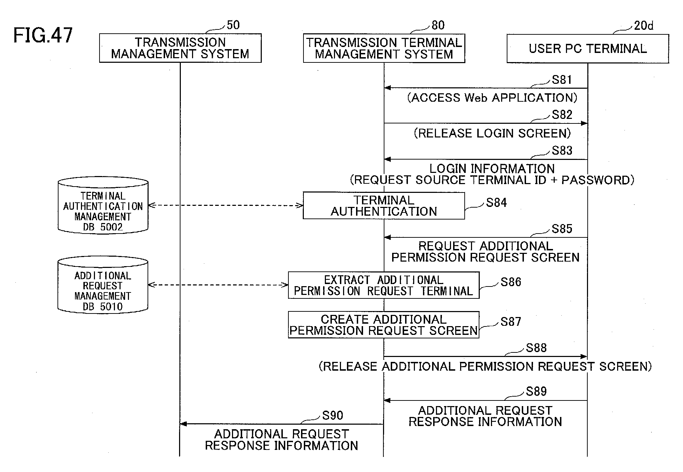

   FIG. 47 is a sequence diagram for performing a supplemental request response from the user PC terminal.
[FIG. 48]

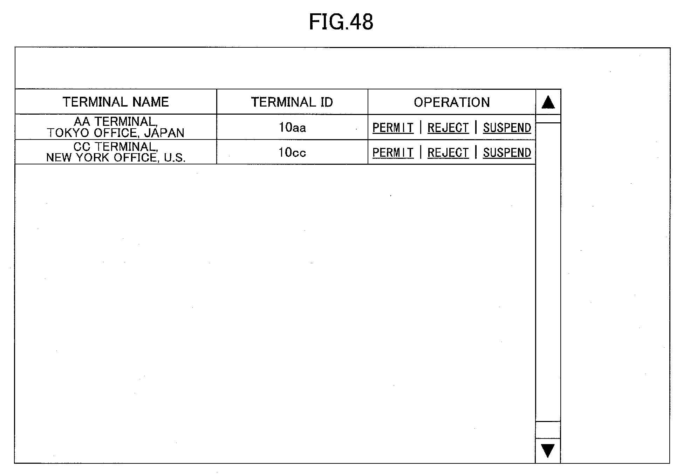

   FIG. 48 is a conceptual diagram depicting a supplemental approval request screen.
[FIG. 49]

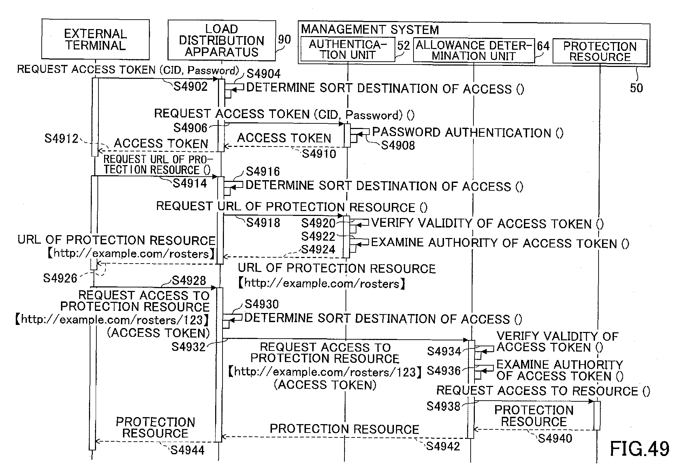

   FIG. 49 is a first sequence diagram for performing an access request to a protected resource from an external terminal.
[FIG. 50]

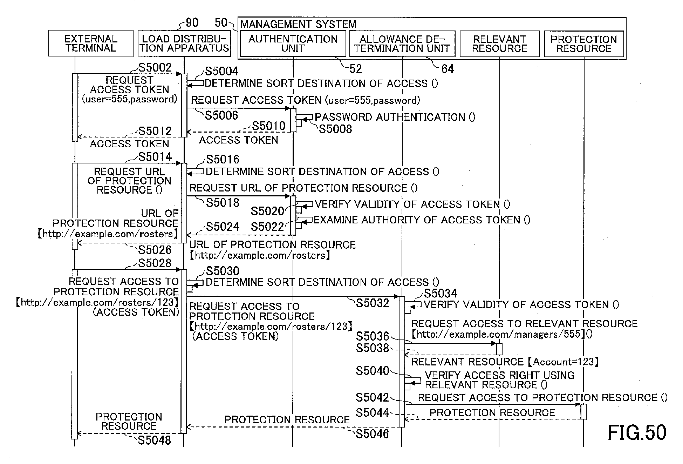

   FIG. 50 is a second sequence diagram for performing the access request to the protected resource from the external terminal.
[FIG. 51]

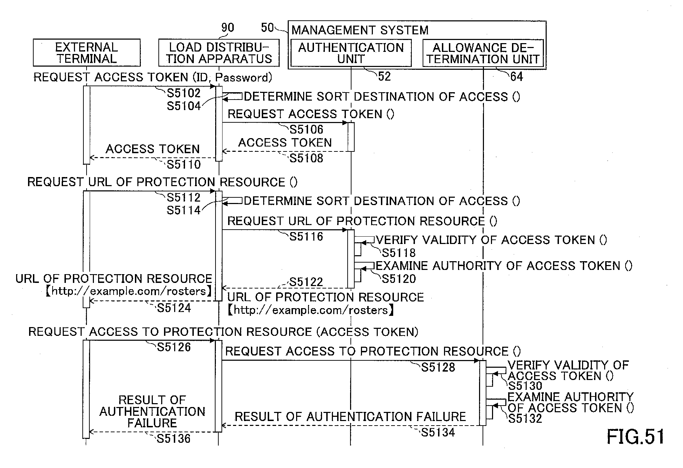

   FIG. 51 is a third sequence diagram for performing the access request to the protected resource from the external terminal.
[FIG. 52]

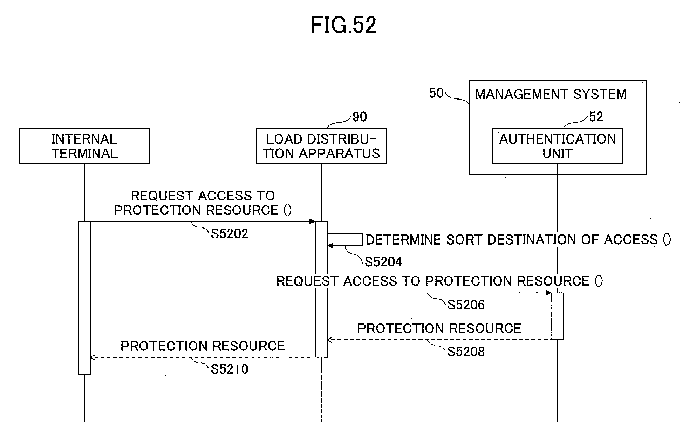

   FIG. 52 is a sequence diagram for performing an access request to the protected resource from an internal terminal.

### DESCRIPTION OF THE PREFERRED EMBODIMENTS

0012 Next, embodiments of the present invention will be described with reference to the drawings based on the following examples. The examples described as follows are only examples, and embodiments to which the present invention is applied are not limited to the following examples.

In all drawings for describing the embodiments, the same reference numeral is used for components having the same function, and duplicate explanation will be omitted.

### «General arrangement of embodiment»

In the following, using FIGs. 1 to 52, the embodiments will be described. FIG. 1 is a schematic view of a transmission system 1 according to the embodiment. First, an outline of the embodiment will be described.

0013 Transmission systems include a data provision system that transmits content data from one transmission terminal to the other transmission terminal in one direction via a transmission management system or a communication system that transfers information, emotion or the like to each other among a plurality of transmission terminals via a transmission management system. The communication system is a system for transferring information, emotion or the like to each other among a plurality of communication terminals (corresponding to "transmission terminals") via a communication management system (corresponding to a "transmission management system"), and includes, for example, a video conference system, a video phone system, an audio conference system, an audio phone system or a PC (Personal Computer) screen sharing system.

0014 In the embodiment, a video conference system as a communication system, a video conference management system as a communication management system and a video conference terminal as a communication terminal are assumed, and a transmission system, a transmission management system and a communication terminal will be described. That is, the transmission terminal and the transmission management system of the present invention is applied not only to a video conference system, but also to a communication system or a transmission system.

0015 The transmission system 1, as illustrated in FIG. 1, is constituted by a plurality of transmission terminals (10aa, 10ab, ...), display devices (120aa, 120ab, ...) for the respective transmission terminals (10aa, 10ab, ...), a plurality of relay apparatuses (30a, 30b, 30c, 30c, 30e), user PC terminals (20a, 20b, 20c, 20d), a transmission management system 50, a transmission terminal management system 80, a load distribution apparatus 90 and a terminal 100.

0016 In the embodiment, when indicating an arbitrary transmission terminal of the transmission terminals (10aa, 10ab, ...), a "terminal 10" will be used. When indicating an arbitrary display device of the display devices (120aa, 120ab ...), a "display device 120" will be used. When indicating an arbitrary relay apparatus of the relay apparatuses (30a, 30b, 30c, 30d, 30e), a "relay apparatus 30" will be used. When indicating an arbitrary user PC terminal of the user PC terminals (20a, 20b, 20c, 20d), a "PC 20" will be used.

0017 The transmission terminal 10 sends/receives image data and sound data as an example of content data. In the following, a "transmission terminal" will be simply denoted as a "terminal", a "transmission management system" will be simply denoted as a "management system", and a "transmission terminal management system" will be simply denoted as a "terminal management system".

0018 Speech in the embodiment includes not only transmission/reception of sound data but also transmission/reception of image data. That is, the terminal 10 of the embodiment sends/receives image data and sound data. However, the terminal 10 may send/receive sound data without sending/receiving image data.

0019 In the embodiment, the case where an image of the image data is a motion picture will be described. But, the image may be a still picture, not only a motion picture. Moreover, the image of the image data may include both a motion picture and a still picture. The relay apparatus 30 relays image data and sound data among the plurality of terminals 10. The management system 50 manages in an integrated fashion the terminal 10 and the relay apparatus 30.

0020 Moreover, a plurality of routers (70a, 70b, 70c, 70d, 70ab, 70cd), as illustrated in FIG. 1, select an optimal path for image data and sound data. In the embodiment, when indicating an arbitrary router of the routers (70a, 70b, 70c, 70d, 70ab, 70cd), a "router 70" will be used.

0021 The terminals (10aa, 10ab, 10ac, 10a...), the relay apparatus 30a, the user PC terminal 20a, and the router 70a are connected via a LAN 2a so as to communicate with each other. The terminals (10ba, 10bb, 10bc, 10b...), the relay apparatus 30b, the user PC terminal 20b, and the router 70b are connected via a LAN 2b so as to communicate with each other. Moreover, the LAN 2a and the LAN 2b are connected via a dedicated line 2ab including a router 70ab so as to communicate with each other, and built in a predetermined region "A". For example, the region "A" is Japan, the LAN 2a is built in an office in Tokyo, and the LAN 2b is built in an office in Osaka.

0022 On the other hand, the terminals (10ca, 10cb, 10cc, 10c...), the relay apparatus 30c, the user PC terminal 20c, the terminal 100, and the router 70c are connected via a LAN 2c so as to communicate with each other. The terminals (10da, 10db, 10dc, 10d...), the relay apparatus 30d, the user PC terminal 20d, and the router 70d are connected via a LAN 2d so as to communicate with each other. Moreover, the LAN 2c and the LAN 2d are connected via a dedicated line 2cd including a router 70cd so as to communicate with each other, and built in a predetermined region "B". For example, the region "B" is the United States of America, and the LAN 2c is built in an office in New York, and the LAN 2d is built in an office in Washington D.C. The region "A" and the region "B" are connected via the Internet 2i from the routers (70ab, 70cd) respectively, so as to communicate with each other.

0023 Moreover, the management system 50 is connected to the terminal 100, and also connected to the terminal 10, the PC 20 and the relay apparatus 30 via the Internet 2i so as to communicate with each other. The management system 50 may be installed in the region "A" or in the region "B", or may be installed outside these regions.

0024 Moreover, the management system 50, the relay apparatus 30c, the terminal 100, the router 70c, the relay apparatus 30d, the router 70d and the router 70cd are connected via a LAN 2e so as to communicate with each other.

0025 Moreover, the terminal management system 80 is connected to the terminal 10, the PC 20, the terminal 100 and the relay apparatus 30 via the Internet 2i so as to communicate with each other. The terminal management system 80 may be installed in the region "A" or in the region "B", or may be installed outside these regions. Moreover, the relay apparatus 30e is connected to the terminal 10 via the communication network 2 so as to communicate with each other. The relay apparatus 30e always operates, and is installed outside the region "A" and the region "B" so as to be unaffected by a communication amount within local areas of the region "A" and the region "B". Accordingly, when the terminal 10 makes a call to a terminal installed in other local area, the relay apparatus 30e is used as a relay apparatus for relaying speech data. Moreover, upon making a call between terminals within the same local area, also when the relay apparatus installed in the local area does not operate, the relay apparatus 30e is used as a relay apparatus for emergency use.

0026 The load distribution apparatus 90 is installed between the Internet 2i and the management system 50, and sorts an access token depending on a transmission path of the access token that is sent upon requiring an access to a protection resource that needs to be protected. When the access token is sent via the network that belongs to the management system, it is sorted to the protection resource. When the access token is sent via a network other than the network that belongs to the management system, it is sorted to a module that executes examination of the access token.

0027 In this way, by causing the management system 50 to examine the access token depending on the transmission path of the access token, it is not necessary to perform examination for all access tokens, a processing load at the management system 50 can be reduced and a processing delay can be reduced.

0028 The terminal 100 is connected to the management system 50 so as to communicate with each other. The terminal 100 can access a resource stored in the management system 50 by causing a predetermined operation to be performed. The terminal 100 may be a server.

0029 In the embodiment, the communication network 2 is constructed by the LAN 2a, the LAN 2b, the dedicated line 2ab, the Internet 2i, the dedicated line 2cd, the LAN 2c, the LAN 2d and the LAN 2e. In the communication network 2, there may be a part at which a wireless communication is performed as well as a wired communication.

0030 Moreover, a combination of four integers, indicated below each of the terminals 10, each of the relay apparatuses 30, the management system 50, the terminal management system 80, and each of the routers 70 in FIG. 1, represents an IP (Internet protocol) address in a simple form of IPv4. For example, the IP address of the terminal 10aa is "1.2.1.3". Moreover, IPv6 may be adopted instead of the IPv4, but the IPv4 is employed for simplicity. 0031

### <Hardware configuration>

Next, a hardware configuration according to the embodiment will be described. In the embodiment, a case that when a delay occurs in reception of image data at the terminal 10 as a relay destination (destination), resolution of an image of the image data is changed by the relay apparatus 30 and then the image data are sent to the terminal 10 as the relay destination will be described.

0032 FIG. 37 is an external view of the terminal 10 according to the embodiment. In the following, it will be explained assuming that a longitudinal direction of the terminal 10 is an x-axis direction, a direction orthogonal to the x-axis direction on a horizontal plane is a y-axis direction, a direction orthogonal to the x-axis direction and to the y-axis direction is a z-axis direction (vertical direction).

0033 As illustrated in FIG. 37, the terminal 10 includes a chassis 1100, an arm 1200 and a camera housing 1300. On a front side wall surface 1110 of the chassis 1100, an intake surface (not illustrated) in which a plurality of intake holes are formed is provided, and on a rear side wall surface 1120 of the chassis 1100, an exhaust surface 1121 in which a plurality of exhaust holes are formed is provided. According to the above configuration, by driving a cooling fan embedded in the chassis 1100, outside air behind the terminal 10 can be taken in via the intake surface (not illustrated), and exhausted behind the terminal 10 via the exhaust surface 1121. On a right side wall surface 1130 of the chassis 1100, a sound pickup hole 1131 is formed, and sound such as voice, sound, noise or the like can be picked up by a built-in microphone 114, which will be described later.

0034 On the side of the right side wall surface 1130 of the chassis 1100, an operation panel 1150 is formed. The operation panel 1150 is provided with a plurality of operation buttons (108a to 108e), which will be described later, a power switch 109, which will be described later, and an alarm lamp 119, which will be described later. Furthermore, on the operation panel 1150, a sound output surface 1151, in which a plurality of sound output holes are formed for passing output sound from a built-in speaker 115, which will be described later, is formed. Moreover, on the side of the left side wall surface 1140 of the chassis 1100, there is a storage part 1160, which is a recessed part, for storing the arm 1200 and the camera housing 1300. On the right side wall surface of the chassis 1100, a plurality of connection ports (1132a to 1132c) for connecting electrically a cable to an external device I/F 118, which will be described later, are provided. On the other hand, on a left side wall surface 1140 of the chassis 1100, a connection port (not illustrated) for connecting electrically a cable 120c for the display device 120 to the external device I/F 118, which will be described later, is provided.

0035 In the following, in a case of indicating an arbitrary operation button of the operation buttons (108a to 108e), "operation button 108" is used, and in a case of indicating an arbitrary connection port of the connection ports (1132a to 1132c), "connection port 1132" is used for explanation.

0036 Next, the arm 1200 is mounted on the chassis 1100 via a torque hinge 1210. The arm 1200 is configured so that the arm 1200 is rotatable vertically where a tilt angle θ1 with respect to the chassis 1100 is within a range of 135 degrees. FIG. 37 depicts the state where the tilt angle θ1 is 90 degrees.

0037 The camera housing 1300 is provided with a built-in camera 112, which will be described later. The built-in camera can image a user, a paper document, a room or the like. Moreover, a torque hinge 1310 is formed on the camera housing 1300. The camera housing 1300 is mounted on the arm 1200 via the torque hinge 1310. The camera housing 1300 is rotatable vertically and horizontally where a pan angle θ2 with respect to the arm 1200 is within a range of ±180 degrees (FIG. 37 shows the state of 0 degrees), and a tilt angle θ3 is within a range of ±45 degrees.

0038 Since each of the PC 20, the relay apparatus 30, the management system 50, and the terminal management system 80 has the same external view as a typical server computer, an explanation of the external view will be omitted.

0039 FIG. 2 is a hardware configuration diagram of a communication terminal 10 according to the embodiment. As illustrated in FIG. 2, the communication terminal 10 includes a central processing unit (CPU) 101 that controls an overall operation of the communication terminal 10, a read-only memory (ROM) 102 that stores a program for terminal, a random-access memory (RAM) 103 used as a work area for the CPU 101, a flash memory 104 that stores various types of data, such as image data and sound data, a solid state drive (SSD) 105 that controls reading/writing of various types of data from/to the flash memory 104 under control of the CPU 101, a medium drive 107 that controls reading/writing (storage) of data from/to a recording medium 106 such as a flash memory, the operation button 108 operated when selecting a destination of the terminal 10, the power switch 109 for turning ON/OFF the power of the terminal 10, and a network interface (I/F) 111 for performing data transfer using the communication network 2, which will be described later.

0040 In addition, the communication terminal 10 includes the built-in camera 112, which captures a subject and obtains an image under control of the CPU 101; an imaging element I/F 113 that controls driving of the camera 112; the built-in speaker 115, which outputs sound; a sound input/output I/F 116 that processes inputting/outputting of a sound signal between the microphone 114 and the speaker 115 under control of the CPU 101; a display I/F 117 that transfers image data to an external display device 120 under control of the CPU 101; the external device connection I/F 118 attached to the connection port 1100g, as illustrated in FIG. 37, for connecting various external devices; the alarm lamp 119, which indicates an abnormality of various functions of the communication terminal 10; and a bus line 110 such as an address bus or a data bus for electrically connecting the above-described elements as depicted in FIG. 2.

0041 The display device 120 includes a liquid crystal display device (LCD), an organic electroluminescence (EL) display device, or the like, and displays an image of a subject, an icon for operation, or the like. In addition, the display device 120 is coupled to the display I/F 117 by the cable 120c. The cable 120c may be an analog red green blue (RGB) (video graphic array (VGA)) signal cable, a component video cable, a high-definition multimedia interface (HDMI(trademark registered)) signal cable, or a digital video interactive (DVI) signal cable.

0042 The camera 112 includes a lens and a solid-state imaging element that converts light into electric charges to digitize an image (video) of a subject. As the solid-state imaging element, for example, a complementary metal-oxide-semiconductor (CMOS) or a charge-coupled device (CCD) is used.

0043 The external device connection I/F 118 is capable of connecting external devices such as an external camera, an external microphone and an external speaker, respectively, by using a Universal Serial Bus (USB) cable or the like. When an external camera is connected, the external camera is driven in preference to the built-in camera 112 under control of the CPU 101. Similarly, when an external microphone is connected or an external speaker is connected, the external microphone or the external speaker is driven in preference to the built-in microphone 114 or the built-in speaker 115 under control of the CPU 101.

0044 The recording medium 106 is configured to be removable from the communication terminal 10. In addition, a non-volatile memory that reads or writes data under control of the CPU 101 is not limited to the flash memory 104, and an electrically erasable and programmable read-only memory (EEPROM) may be used.

0045 Furthermore, the above-described programs for terminal may be stored in a recording medium (recording medium 106 or the like) readable by a computer as a file of an installable format or an executable format and distributed.

0046 FIG. 3 is a hardware configuration diagram of the management system according to the embodiment. The management system 50 includes a CPU 201 that controls the overall operation of the management system 50; a ROM 202 that stores a program for transmission management; a RAM 203 used as a work area for the CPU 201; an HD (Hard Disk) 204 that stores various types of data; a hard disk drive (HDD) 205 that controls reading/writing of various types of data from/to the HD 204 under control of the CPU 201; a medium drive 207 that controls reading/writing (storage) of data from/to a recording medium 206 such as a flash memory; a display device 208 that displays various types of information such as a cursor, a menu, a window, characters or an image; a network I/F 209 for transferring data using the communication network 2, which will be described later; a keyboard 211 including a plurality of keys for entering characters, numerals, various instructions or the like; a mouse 212 that performs selection and execution of various instructions, selection of a processing target, movement of a cursor or the like; a compact disc read-only memory (CD-ROM) drive 214 that controls reading/writing of various types of data from/to a CD-ROM 213 serving as an example of a removable recording medium; and a bus line 210 such as an address bus and a data bus for electrically connecting the above-described elements as depicted in FIG. 3.

0047 Furthermore, the above-described programs for transmission management may be stored in a recording medium (above-described recording medium 206, CD-ROM 213 or the like) readable by a computer as a file of an installable format or an executable format and distributed.

0048 Moreover, since the relay apparatus 30 has the same hardware configuration as the above-described management system 50, an explanation will be omitted. However, a program for the relay apparatus for controlling the relay apparatus 30 is stored in the ROM 202. Also in this case, the program for the relay apparatus may be distributed as a file in an installable format or in an executable format stored in a recording medium readable by a computer, such as the above-described recording medium 206, the CD-ROM 213 or the like.

0049 Since the PC 20, the terminal 100, and the terminal management system 80 have hardware configuration as the transmission management system 50, an explanation thereof will be omitted.

0050 Furthermore, since the load distribution apparatus 90 has the same hardware configuration as the above-described management system 50, an explanation thereof will be omitted. However, a program for load distribution for controlling the load distribution apparatus 90 is stored in the ROM 202. Also in this case, the program for the load distribution may be distributed as a file in an installable format or in an executable format stored in a recording medium readable by a computer, such as the above-described recording medium 206, the CD-ROM 213 or the like.

0051 In addition, another example of the above-described removable recording medium includes CD-R (Compact Disc Recordable), DVD (Digital Versatile Disk), Blu-ray Disc (trademark registered) or the like.

0052

### «Functional configuration of embodiment»

Next, a functional configuration of the embodiment will be described. FIG. 4 is a functional block diagram depicting the respective terminals, apparatuses and systems configuring the transmission system according to the embodiment. In FIG. 4, the terminal 10, the relay apparatus 30 and the management system 50 are connected so as to perform data communications via the communication network 2. 0053

### <Functional configuration of terminal>

The terminal 10 includes a transmission/reception unit 11; an operation input acceptance unit 12; a login request unit 13; an imaging unit 14, a sound input unit 15a, a sound output unit 15b, a display control unit 16, a delay detection unit 18, a storage/readout unit 19 and a destination list creation unit 20. Each of the above units is a function or a functioning means enabled by any of the respective components, illustrated in FIG. 2, operating according to an instruction from the CPU 101 following a program stored in the ROM 102. Moreover, the terminal 10 includes a volatile storage unit 1000 configured by the RAM 103, illustrated in FIG. 2, and a volatile storage unit 1100 configured by the flash memory 104, illustrated in FIG. 2. 0054

### <Each functional unit of terminal>

Next, each unit of the terminal will be explained in detail.

The transmission/reception unit 11 of the terminal 10 is enabled by the network I/F 111, illustrated in FIG. 2, and sends various data (or information) to and receives various data (or information) from other terminals, other apparatuses, or other systems, via the communication network 2. The transmission/reception unit 11 starts receiving before starting speech with an intended destination terminal, state information indicating a state of each of the terminals as candidates of destination, from the management system 50. The state information indicates not only operating state (online state or offline state) of each of the terminals 10, but also detailed information, such as, in the online state, whether calling is possible, whether it is busy, or the like. The state information may indicate not only the operational state of each of the terminals 10 but also information of the state around the terminal, such that the cable 120c is taken off from the terminal 10, an image is not output while a voice signal is output, voice sound is muted, or the like. In the following, an example where the state information indicates the operational state will be described.

0055 The operation input reception unit 12 is enabled by the operation button 108 and the power switch 109, illustrated in FIG. 2, and accepts various inputs from a user. For example, when the user turns the power switch 109 illustrated in FIG. 2 to "ON", the operation input acceptance unit 12 illustrated in FIG. 4 accepts power-ON, and turns on the power.

0056 The login request unit 13 is enabled by the instruction from the CPU illustrated in FIG. 2, and at a timing of accepting the above-described power ON, automatically sends, from the transmission/reception unit 11 to the management system 50 via the communication network 2, login request information indicating requiring login and an IP address of the request source terminal at present. Moreover, when the user turns the power switch from ON state to OFF, after the transmission/reception unit 11 sends state information indicating turning the power OFF to the management system 50, the operation input acceptance unit 12 turns the power OFF completely. Accordingly, the side of the management system 50 can perceive that the power of the terminal 10 is turned from ON to OFF.

0057 The imaging unit 14 is enabled by the instruction from the CPU 101 illustrated in FIG. 2, the camera 112 and the imaging element I/F 113, illustrated in FIG. 2, captures an object, and outputs image data obtained by capturing a subject. The sound input unit 15a is enabled by the sound input/output I/F 116, illustrated in FIG. 2, and after converting voice of a user into a voice signal by the microphone 114, inputs voice data related to the voice signal. The sound output unit 15b is enabled by the instruction from the CPU 101 illustrated in FIG. 2 and the sound input/output I/F 116, illustrated in FIG. 2, and outputs a voice signal related to voice data to the speaker 115, and causes the speaker 115 to output sound.

0058 The display control unit 16 is enabled by the display I/F 117, illustrated in FIG. 2, and controls for sending image data to the external display device 120. The display control unit 16, before a terminal 10 as a request source starts speech of a video conference with a terminal 10 as a desired destination, displays a destination list, in which state information received after starting reception by the transmission/reception unit 11 is reflected and which includes the respective destination names, on the display device 120.

0059 For example, on the display device 120, by a display execution unit 16a (not illustrated), a destination list frame 1100-1, as illustrated in FIG. 22, is displayed. In the destination list frame 1100-1, respective destination names such as a destination name "AB terminal, TOKYO office, Japan" are displayed, and icons (1100-3a, 1100-3b, 1100-3c and 1100-3d) indicating states related to state information for the destination names, respectively, are displayed. Among them, the icon 1100-3a indicates that it is possible to talk with a terminal of one of destination candidates, because this terminal is in an online state and a standby state. The icon 1100-3b indicates that a terminal of one of the destination candidates is in an offline state and it is not possible to talk with this terminal. The icon 1100-3c indicates that a terminal of one of the destination candidates is in a state of being busy with another terminal and indicates a state whereby it is possible to join the speech to perform a three-way communication or the like. The icon 1100-3d indicates a state in which it is not possible to talk with a terminal of one of the destination candidates because the terminal of one of the destination candidates requires a speech with another terminal or is required a speech from another terminal. Furthermore, the icon 1100-3d indicates, in addition to the above-described state, a state wherein it is not possible to talk with a terminal of one of the destination candidates, because the request to talk with the other terminal is permitted or the request for talk from the other terminal is permitted. Moreover, in the destination list frame 1100-1, a scroll bar 1100-4 is displayed on the right side. By selecting an upper direction triangle icon or a lower direction triangle icon, an icon indicating a destination name of a destination candidate, which is not displayed in FIG. 22, and a state is displayed.

0060 The delay detection unit 18 is enabled by the instruction from the CPU 101, illustrated in FIG. 2, and detects delay time (ms) of image data or sound data sent from the other terminal 10 via the relay apparatus 30.

0061 Moreover, the storage/readout process unit 19 is enabled by the instruction from the CPU 101 illustrated in FIG. 2 and the SSD 105, illustrated in FIG. 2, and performs a process of storing various data into the non-volatile storage unit 1000, and a process of reading out various data stored in the non-volatile storage unit 1000. The non-volatile storage unit 1000 stores a terminal ID (identification) for identifying the terminal 10, a password and the like. Furthermore, the storage/readout process unit 19 also performs a process of storing various data into the volatile storage unit 1100, and a process of reading out various data stored in the volatile storage unit 1100. In the volatile storage unit 1100, image data and sound data received upon making a voice call with a destination terminal are overwritten to be stored each time they are received. Among them, an image is displayed on the display device 120 by image data before being overwritten, and a sound is output from the speaker 115 by sound data before being overwritten.

0062 The destination list creation unit 20 creates and updates a destination list in which a state of a destination candidate is indicated by an icon, as illustrated in FIG. 22, based on a destination list information, which will be described later, and state information of a terminal 10 as each of the destination candidate, received from the management system 50.

0063 The terminal ID according to the embodiment, and a relay apparatus ID, which will be explained later, indicate identification information, such as a language, a character, a symbol, various signs, or the like, used for uniquely identifying a terminal 10 and a relay apparatus 30, respectively. Moreover, the terminal ID and the relay apparatus ID may be identification information of a combination of at least two of the above-described language, the character, the symbol and the various signs. 0064

### (Functional configuration of relay apparatus)

Next, a function or means of the relay apparatus 30 will be described. The relay apparatus 30 includes a transmission/reception unit 31, a state detection unit 32, a data quality confirmation unit 33, a change quality management unit 34, a data quality change unit 35, and a storage/readout processing unit 39. Each of the above units is a function or means enabled by one of the components, illustrated in FIG. 3, operating according to an instruction from the CPU 201 following a program stored in the ROM 202. Moreover, the relay apparatus 30 includes a non-volatile storage unit 3000, constructed by the HD 204, illustrated in FIG. 3, in which storage of various data or information is maintained even if an electric power of the relay apparatus 30 is turned OFF.

### (Change quality management table)

In the non-volatile storage unit 3000, a change quality management DB (Data Base) 3001, which is configured by the change quality management table, as illustrated in FIG. 7, is constructed. In the change quality management table, an IP address of a terminal 10 as a relay destination of image data and image quality of the image data relayed to the delay destination by the relay apparatus 30 are managed in association with each other.

0065 Here, a resolution of an image of image data processed in the embodiments will be explained. As illustrated in FIG. 8A, there are a low-resolution image, as a base image, including 160 pixels in the horizontal direction and 120 pixels in the vertical direction, as illustrated in FIG. 8B, an intermediate-resolution image including 320 pixels in the horizontal direction and 240 pixels in the vertical direction, and, as illustrated in FIG. 8C, a high-resolution image including 640 pixels in the horizontal direction and 480 pixels in the vertical direction. Among them, when transmitting through a narrow band path, image data of low image quality including only low-resolution image data, as a base image, are relayed. Moreover, when the bandwidth is relatively wide, image data of intermediate image quality including low-resolution image data, as a base image, and intermediate-resolution image data are relayed. Furthermore, when the bandwidth is quite wide, image data of high image quality including low-resolution image data as a base image, intermediate-resolution image data and high-resolution image data are relayed. For example, in the change quality management table, as illustrated in FIG. 7, when the relay apparatus 30 relays image data to the an destination terminal with an IP address "1.3.2.4", an image quality (quality of image) of these image data to be relayed is "high quality".

0066

### <Function unit of relay apparatus>

Next, the respective functional configurations of the relay apparatus 30 will be described in detail. In the following, in the explanation of the respective units of the relay apparatus 30, a relationship with the main component, which enables the respective units of the relay apparatus 30, among the respective components illustrated in FIG. 3, also will be described.

0067 The transmission/reception unit 31, illustrated in FIG. 4, is enabled by the network I/F 209 illustrated in FIG. 3, and sends various data (information) to and receives various data (information) from another terminal, another apparatus or another system via the communication network 2. The state detection unit 32 is enabled by the instruction from the CPU 201 illustrated in FIG. 3, and detects an operation state of the relay apparatus 30 having the state detection unit 32. The operation state includes a state of "ONLINE", "OFFLINE", or "OUT OF ORDER".

0068 The data quality confirmation unit 33 is enabled by the instruction from the CPU 201 illustrated in FIG. 3, and searches the change quality management table (See FIG. 7) with an IP address of a destination terminal as a search key, and extracts an image quality of corresponding image data to be relayed, and thereby confirms the image quality of the image data to be relayed. The change quality management unit 34 is enabled by the instruction from the CPU 201 illustrated in FIG. 3, and changes content of the change quality management table of the change quality management DB 3001 based on quality information, which will be described later, sent from the management system 50. For example, when, during performing a video conference by sending/receiving image data with high image quality between a request source terminal (terminal 10aa) with a terminal ID of "01aa" and a destination terminal (terminal 10db) with a terminal ID of "01db", by a request source terminal (terminal 10bb) and a destination terminal (terminal 10ca) performing another video conference starting the video conference via the communication network 2, or the like, a delay occurs in reception of image data at the destination terminal (terminal 10db), the relay apparatus 30 is required to lower the image quality of the image data that have been relayed from the high image quality to the intermediate image quality. In such a case, content of the change quality management table of the change quality management DB 3001 is changed so as to lower the image quality of image data relayed by the relay apparatus 30 from the high image quality to the intermediate image quality based on the quality information indicating the intermediate image quality.

0069 The data quality change unit 35 is enabled by the instruction from the CPU 201 illustrated in FIG. 3, and changes image quality of image data sent from the transmission source terminal 10 based on the changed content, as described above, in the change quality management table of the change quality management DB 3001. The storage/readout processing unit 39 is enabled by the HDD 205 illustrated in FIG. 3, and performs processes of storing various data in the non-volatile storage unit 3000 and reading out various data stored in the non-volatile storage unit 3000.

0070

### <Functional configuration of management system>

Next, a function or means of the management system 50 will be described. The management system 50 includes a transmission/reception unit 51, a authentication unit 52, a state management unit 53, a terminal extraction unit 54, a terminal state acquisition unit 55, a relay apparatus selection unit 56, a session management unit 57, a quality decision unit 58, a storage/readout processing unit 59, a delay time management unit 60, a decision unit 61, a determination unit 62, an allowance determination unit 64, a destination list management unit 65 and a supplemental request management unit 66. Each of the above units is a function or means enabled by one of the components, illustrated in FIG. 3, operating according to an instruction from the CPU 201 following a program stored in the ROM 202. Moreover, the management system 50 includes a non-volatile storage unit 5000, constructed by the HD 204, illustrated in FIG. 3, in which storage of various data or information is maintained even if an electric power of the relay apparatus 30 is turned OFF. This non-volatile storage unit 5000 stores the destination list frame 1100-1, illustrated in FIG. 22. Furthermore, the management system 50 includes a volatile storage unit 5100 constructed by the RAN 203, illustrated in FIG. 3.

0071

### (Relay apparatus management table)

In the non-volatile storage unit 5000, a relay apparatus management DB 5001 configured by a relay apparatus management table, as illustrated in FIG. 9, is constructed. In the relay apparatus management table, for each relay apparatus ID of the relay apparatus 30, an operation state of the relay apparatus, reception date and time of receiving state information, in which the operation state is indicated, at the management system 50, an IP address of the relay apparatus, and a maximum data transfer rate (Mbps) at the relay apparatus 30 are managed in association with each other. For example, the relay apparatus management table, illustrated in FIG. 9, shows that the relay apparatus 30a with an relay apparatus ID of "111a" is in an operation state of "ONLINE", date and time of receiving state information at the management system 50 is "November 10, 2009, 13:00", an IP address of the relay apparatus 30a is "1.2.1.2", and the maximum data transfer rate at the relay apparatus 30a is 100 Mbps, 0072

### (Terminal authentication management table)

Furthermore, in the non-volatile storage unit 5000, a terminal authentication management DB 5002 configured by a terminal authentication management table, as illustrated in FIG. 10, is constructed. In the terminal authentication management table, for each terminal ID of all terminals 10 managed by the management system 50, a password is managed in association with the terminal ID. For example, the terminal authentication management table, illustrated in FIG. 10, shows that a terminal ID of a terminal 10aa is "01aa" and a password is "aaaa".

0073

### (Terminal management table)

Moreover, in the non-volatile storage unit 5000, a terminal management DB 5003 configured by a terminal management table, as illustrated in FIG. 11, is constructed. In the terminal management table, for each terminal ID of the terminal 10, a destination name when the terminal 10 is served as a destination, an operation state of the terminal 10, a communication state with another terminal, a reception date and time of receiving login request information which will be described later at the management system 50, and an IP address of the terminal 10 in association with each other. For example, the terminal management table, illustrated in FIG. 11, shows that a terminal 10aa with a terminal ID of "01aa" has a terminal name of "AA terminal, Tokyo office, Japan", and is in an operation state of "ONLINE" and in a communication state of "None" indicating not communicating with another terminal and being standby. The terminal management table also shows that a date and time of receiving login request information at the management system 50 is "November 10, 2009, 13:40" and an IP address of the terminal 10aa is "1.2.1.3". The communication state includes "Calling" indicating a state of calling another terminal, "Ringing" indicating a state of being called by another terminal, "Accepted" indicating a state of permitting a request for speech with another terminal or a state where the request for speech with the other terminal is permitted, "Busy" indicating a state of during a call with another terminal and the like. 0074

### (Destination list management table)

Furthermore, in the non-volatile storage unit 5000, a destination list management table 5004 configured by a destination list management table, as illustrated in FIG. 12, is constructed. In the destination list management table, all terminal IDs of destination terminals registered as candidates of destination terminal are managed in association with a terminal ID of a request source terminal requesting start of speech in a video conference. For example, the destination list management table, illustrated in FIG. 12, shows that candidates of destination terminal that the request source terminal (terminal 10aa) with the terminal ID of "01aa" can request for start of speech in a video conference are a terminal 10ab with a terminal ID of "01ab", a terminal 10ba with a terminal ID of "01ba", a terminal 10bb with a terminal ID of "01bb" and the like. These candidates of destination terminal are updated by adding or deleting according to a request for addition or deletion to the management system 50 from the request source terminal.

0075

### (Session management table)

Moreover, in the non-volatile storage unit 5000, a session management DB 5005 configured by a session management table, as illustrated in FIG. 13, is constructed. In the session management table, for each session ID for identifying a session in which speech data are communicated between terminals, a relay apparatus ID of a relay apparatus 30 used for relaying image data and sound data, a terminal ID of a request source terminal, a terminal ID of a destination terminal, and delay time (ms) in reception when image data are received at the destination terminal, and date and time of receiving at the management system 50 delay information indicating the delay time from the destination terminal, are managed in association with each other. For example, the session management table, illustrated in FIG. 13, shows that a relay apparatus 30a (relay apparatus ID of "111a") selected in a session executed by using a session ID "se1", relays image data and sound data among a request source terminal (terminal 10aa) with a terminal ID of "01aa", a destination terminal (terminal ID 10bb) with a terminal ID of "01bb", a destination terminal (terminal ID 10cb) with a terminal ID of "01cb" and a destination terminal (terminal ID 10db" with a terminal ID of "01db". The session management table also shows that delay time of image data at "November 10, 2009, 14:00" and at the destination terminal (terminal 10db) is 200 (ms). When a video conference is held between two terminals 10, reception date and time of delay information may be managed based on delay information sent from the request source terminal, not from the above-described destination terminal. However, when a video conference is held among three or more terminals 10, reception date and time of delay information is managed based on delay information sent from a terminal 10 on a reception side of image data and sound data.

0076

### (Quality management table)

Furthermore, in the non-volatile storage unit 5000, a quality management DB 5007 configured by a quality management table, as illustrated in FIG. 14, is constructed. In the quality management table, depending on delay time (ms) of image data at a request source terminal or a destination terminal, image qualities (quality of image) of image data to be relayed at the relay apparatus 30 are managed in association with each other.

0077

### (Relay apparatus selection management table)

Furthermore, in the non-volatile storage unit 5000, a relay apparatus selection management DB 5008 configured by a relay apparatus selection management table, as illustrated in FIG. 15, is constructed. In the quality management table, a relay apparatus ID of a relay apparatus 30 used for relaying image data and sound data is managed in association with each terminal ID of all terminals 10 managed by the management system 50.

0078

### (State change management table)

Moreover, in the non-volatile storage unit 5000, a state change management DB 5009 configured by state change management tables, as illustrated in FIGs. 16, 17 and 18, is constructed. In the state change management table of FIG. 16, change request information (an example of change information) indicating a request for changing a state of communication between terminals, pre-change state information indicating a communication state before changed by a state change unit 53c, and change information indicating a state changed by the state change unit 53c are managed in association with each other. Moreover, in the state change management table of FIG. 17, the change request information, terminal information for discriminating a request source terminal and a destination terminal, the pre-change state information, and the change information, are managed in association with each other. In the state change management table of FIG. 18, the change request information, the terminal information, determination information indicating a result of determining whether change request information "Reject" is received from all of a plurality of terminals when the change request information "Reject" indicating rejection of a start of communication is received from any of the plurality of terminals that receive change request information "Invite" indicating requesting a start of communication, the pre-change state information, and the change information are managed in association with each other. The change request information includes, in addition to the above-described "Invite" and "Reject", change request information "Accept" indicating permitting a start of communication, change request information "Cancel" indicating cancelling the request of start of communication, change request information "Join" indicating requesting a start of relay of speech data, change request information "Call" indicating requesting participation in a session when the session between terminals has already been established, change request information "Leave" indicating requesting an end of communication and the like.

### (Supplemental request management table)

In the non-volatile storage unit 5000, a supplemental request management DB 5010 configured by a supplemental request management table, as illustrated in FIG. 38, is constructed. In the supplemental request management table, a terminal ID of a terminal that performs a supplemental request to a destination candidate (In the following, "terminal that performs a supplemental request" will be denoted as "request source terminal" that is the same as the terminal of start request source of speech), and a terminal ID of a terminal of a request destination that is performed the supplemental request to the destination candidate (In the following, "terminal of request destination" will be denoted as "request destination terminal") are managed in association with each other. Accordingly, it is possible to manage which terminal is requested as a destination candidate from which terminal. Because the destination list management table and the supplemental request management table shares the terminal ID of the request source terminal, these tables may be merged into a table.

0079 The relay apparatus management table, the terminal authentication management table, the terminal management table, the destination list management table, the session management table, the quality management table, the relay apparatus selection management table, the state change management table, and the supplemental request management table can be managed as a protection resource, to which an access is restricted, according to setting. Here, as an example, the destination list management table is managed as a protection resource.

0080

### (Functional units of management system)

Next, respective functional units of the management system 50 will be described in detail. In the following, in the explanation of the respective units of the management system 50, a relationship with the main component, which enables the respective units of the management system 50, among the respective components illustrated in FIG. 3, also will be described.

0081 The transmission/reception unit 51 is executed by the network I/F 209, illustrated in FIG. 3, and sends various data (information) to and receives various data (information) from another terminal, another apparatus or another system via the communication network 2.

0082 The authentication unit 52 searches the terminal authentication management table (See FIG. 10) of the non-volatile storage unit 5000 with a terminal ID and a password included in the login request information received via the transmission/reception unit 51 as a search key, and determines whether the same terminal ID and password are managed in the terminal authentication management table, to perform the terminal authentication. Furthermore, the authentication unit 52 searches a client authentication management table (not illustrated) of the non-volatile storage unit 5000 with a CID (Client ID) and a password included in a request for access token received via the transmission/reception unit 51 as a search key, and determines whether the same CID and password are managed in the client authentication management table, to perform the client authentication. When the authentication is successful, an access token is issued. However, the authentication unit 52 issues a refresh token of the client authentication is first successful.

0083 Furthermore, the authentication unit 52 verifies validity of an access token or a refresh token included in a URL request of a protection resource received via the transmission/reception unit 51. If the validity of the access token or the refresh token is verified, authority of the access token or a refresh token will be examined. Therefore, the authentication unit 52 realizes by the instruction from the CPU 201 illustrated in FIG. 3, enables an authentication processing unit 52a, an access token issuance unit 52b, an access token verification unit 52c and an authority examination unit 52d.

0084 The authentication processing unit 52a searches the client authentication management table (not illustrated) of the non-volatile storage unit 5000 with the login request information received via the transmission/reception unit 51 and the CID and the password included in the request for access token as a search key, and determines whether the same CID and password are managed in the client authentication management table, to perform the client authentication.

0085 If the authentication by the authentication processing unit 52a is successful based on the CID and password included in the request for access token received via the transmission/reception unit 51, the access token issuance unit 52b issues an access token for a terminal that sends the request for access token. However, if the client authentication is first successful, the access token issuance unit 52b issues a refresh token for the terminal that sends the request for access token.

0086 The access token verification unit 52c performs authentication by verifying validity of an access token or a refresh token by the access token or the refresh token included in the URL request of the protection resource received via the transmission/reception unit 51.

0087 When the access token verification unit 52c verifies that the access token or the refresh token is valid, the authority examination unit 52d examines authority of the access token or the refresh token. When determining that the access token has an authority as a result of examination of authority of the access token, the authority examination unit 52d creates URL information of protection resource. Moreover, when determining that the refresh token has an authority as a result of examination of authority of the refresh token, the authority examination unit 52d creates URL information of protection resource and issues an access token.

0088 In order to manage an operation state of a request source terminal, which requires a login, the state management unit 53 stores a terminal ID of the request source terminal, an operation state of the request source terminal, reception date and time of receiving login request information at the management system 50, and an IP address of the request source terminal into the terminal management table (See FIG. 11) in association with each other and manages. Accordingly, the state management unit 53 enables, by the instruction from the CPU 201 illustrated in FIG. 3, a state setting unit 53a, a state acquisition unit 53b and a state change unit 53c, illustrated in FIG. 5.

0089 The state setting unit 53a sets an operation state indicating OFFLINE of an operation state in the terminal management table (See FIG. 11) to ONLINE based on the state information indicating that by turning the power switch 109 of the terminal 10 from OFF state to ON by a user of the terminal 10 an electric power sent from the terminal is turned ON. Moreover, based on the state information indicating that by turning the power switch 109 of the terminal 10 from ON state to OFF by the user the electric power sent from the terminal is turned OFF, the operation state indicating ONLINE in the terminal management table (See FIG. 11) is set to OFFLINE.

0090 When change request information sent by a request source terminal or a destination terminal is received by the transmission/reception unit 51, the state acquisition unit 53b acquires at least one of state information of the request source terminal and state information of the destination terminal from the terminal management table (See FIG. 11).

0091 The state change unit 53c, based on the change request information received by the transmission/reception unit 51, changes any one of or both the state information of the request source terminal and the state information of the destination terminal managed in the terminal management table (See FIG. 11).

0092 The terminal extraction unit 54 searches the destination list management table (See FIG. 12) with the terminal ID of the request source terminal, which requires a login, as a search key, reads out a terminal ID of a candidate of a destination terminal that can talk with the request source terminal, and thereby extracts the terminal ID. Moreover, the terminal extraction unit 54 searches the destination list management table with the terminal ID of the request source terminal, which requires a login, as a search key, extracts a terminal ID of other request source terminal that registers the terminal ID of the above-described request source terminal as a candidate of a destination terminal.

0093 The terminal state acquisition unit 55 searches the terminal management table (See FIG. 11) with the terminal ID of the candidate of destination terminal extracted by the above-described terminal extraction unit 54 as a search key, reads out an operation state for each terminal ID extracted by the above-described terminal extraction unit 54. Therefore, the terminal state acquisition unit 55 can acquire an operation state of a candidate of the destination terminal that can talk with the request source terminal, which requires a login. Moreover, the terminal state acquisition unit 55 searches the terminal management table with the terminal ID extracted by the above-described terminal extraction unit 54 as a search key, and acquires also an operation state of the request source terminal, which requires a login.

0094 The relay apparatus selection unit 56 performs a process for finally narrowing a plurality of relay apparatuses 30 down to a relay apparatus 30. Therefore, the relay apparatus selection unit 56 enables, by the instruction from the CPU 201 illustrated in FIG. 3, a session ID generation unit 56a, a relay apparatus extraction unit 56b and a selection unit 56c, illustrated in FIG. 6.

0095 The session ID generation unit 56a generates a session ID for identifying a session in which speech data are communicated between terminals. The relay apparatus extraction unit 56b searches the relay apparatus selection management table (See FIG. 15) based on a terminal ID of a request source terminal included in start request information sent from the request source terminal and a terminal ID of a destination terminal, and thereby extracts each corresponding relay apparatus ID. The selection unit 56c selects relay apparatus ID of a relay apparatus 30 with an operation state of "ONLINE" among the relay apparatuses 30 managed in the relay apparatus management table (See FIG. 9), and thereby selects the relay apparatus 30.

0096 The session management unit 57 stores a session ID generated at the session ID generation unit 56a, a terminal ID of a request source terminal, and a terminal ID of a destination terminal in the session management table (See FIG. 13) of the non-volatile storage unit 5000 in association with each other and manages. Moreover, the session management unit 57 stores, in the session management table, for each session ID, the relay apparatus ID of the relay apparatus 30 that has been finally selected and manages.

0097 The quality decision unit 58 searches the quality management table (See FIG. 14) with the above-described delay time as a search key, and extracts image quality of a corresponding image data, and thereby decides an image quality of the image data to be relayed by the relay apparatus 30. The storage/readout processing unit 59 is executed by the HDD 205 illustrated in FIG. 3, and performs a process of storing various data in the non-volatile storage unit 5000 and reading out various data stored in the non-volatile storage unit 5000. The delay time management unit 60 searches the terminal management table (See FIG. 11) with the IP address of the above-described destination terminal as a search key, to extract corresponding terminal ID, and furthermore in the session management table (See FIG. 13) store delay time indicated in the above-described relay information in a field part of a delay time in a record, in which the above-described extracted terminal ID is included, and manage.

0098 The decision unit 61 decides handling for changing a state of communication between terminals based on change request information received by the transmission/reception unit 51.

0099 The determination unit 62, when change request information "Reject" indicating rejection of a start of communication is received from any of a plurality of terminals that receive change request information "Invite" indicating requesting a start of communication, determines whether change request information "Reject" is received from all of a plurality of terminals.

0100 A change request information determination unit 63 determines whether the change request information received by the transmission/reception unit 51 is specific change request information indicating a request to change not only a communication state of a terminal (one of the request source terminal and the destination terminal) that sends the change request information but also a communication state of a terminal on the other side (other one the request source terminal and the destination terminal). For example, because the change request information "Invite" indicating requesting a start of communication not only changes the communication state of the request source terminal to "Calling" indicating a state of calling, but also changes the communication state of the destination terminal to "Ringing" indicating a state of being called, the change request information is determined to be specific change request information. Similarly, in the embodiment, in addition to above-described "Invite", "Accept" indicating permission of a start of communication, "Reject" indicating rejection of a start of communication, and "Cancel" indicating cancel of request for a start of communication are determined to be specific change request information.

0101 An allowance determination unit 64 verifies validity of an access token included in an access request to a protection resource received by the transmission/reception unit 51, and when the validity of the access token can be verified, examines authority of the access token. The allowance determination unit 64, when the access token is determined to have an authority, as a result of examination of the authority of the access token, performs an access request to the protection resource. Therefore, the allowance determination unit 64 enables, by the instruction from the CPU 201 illustrated in FIG. 3, an access token verification unit 64a, an authority examination unit 64b, and an access request unit 64c, illustrated in FIG. 40.

The access token verification unit 64a performs authentication by verifying validity of the access token by the access token included in the access request to the protection resource received via the transmission/reception unit 51. For example, whether an issuance source of the access token is the management system 50 is verified by decoding by a common key. When the access token included in the access request to the protection resource can be decoded by the common key, the access token is determined to be valid. When the access token cannot be decoded, the access token is determined to be invalid.

0102 The authority examination unit 64b, when the access token is verified to be valid by the access token verification unit 64a, examines authority of the access token. For example, by matching CID obtained by decoding the access token to CID to be accessed by the access request to the protection resource, when they are the same, the access token is determined to have authority, and when they are not the same, the access token is determined not to have authority.

0103 The access request unit 64c performs access to the protection resource, when the access token is determined to have authority as a result of examination of authority of the access token by the authority examination unit 64b.

0104 Because by the allowance determination unit 64 allowance determination of each protection resource is performed, upon new development related to allowance or error analysis, only the allowance determination unit 64 is served as an object and efficiency is expected.

0105 The allowance determination unit 64 is preferably arranged adjacent to the authentication unit 52 for performing authentication in a network manner. Accordingly, when communicating with the authentication unit 52 to perform an allowance determination process, compared with a case of having allowance determination function in the protection resource, the process can be made efficient.

0106 Moreover, the allowance determination unit 64 preferably performs the same allowance determination process in a plurality of protection resources. Therefore, compared with a case of performing allowance determination for each protection resource, the allowance process can be made efficient.

0107 The destination list management unit 65, for each terminal ID of a request source terminal in the destination list management DB 5004 (See FIG. 4), adds or deletes a terminal ID of a destination terminal. Moreover, the destination list management unit 65 additionally associates a terminal ID of a request destination terminal, managed in association with a terminal ID of a request source terminal in the supplemental request management DB 5010 (See FIG. 4), with a terminal ID of a request source terminal, in the destination list management DB 5004 (See FIG. 4) that is the same as a terminal ID of a request source terminal managed in the supplemental request management DB 5010 (See FIG. 38), as a terminal ID of a destination terminal and manages.

0108 The supplemental request management unit 66, for each record, newly stores a terminal ID of a request source terminal and a terminal ID of a request destination terminal in the supplemental request management DB 5010 (See FIG. 4) and manages. Moreover, the supplemental request management unit 66, for each record, deletes a terminal ID of a request source terminal and a terminal ID of a request destination terminal from the supplemental request management DB 5010 (See FIG. 4).

0109

### <Functional configuration of load distribution apparatus (Load Balancer) 90>

Next, a function or means of the load distribution apparatus 90 will be described. The load distribution apparatus 90 includes a transmission/reception unit 91, a sorting unit 92, and a storage/readout management unit 93. Each of the above units is a function or means enabled by one of the components illustrated in FIG. 3, operating according to the instruction from the CPU 201 following a program stored in the ROM 202. Moreover, the load distribution apparatus 90 includes a non-volatile storage unit 9000, constructed by the HD 204, illustrated in FIG. 3, in which storage of various data or information is maintained even if an electric power of the load distribution apparatus 90 is turned OFF.

### (Forwarding destination sorting management table)

In the non-volatile storage unit 9000, a forwarding destination sorting management DB (Data Base) 9001 configured by a forwarding destination sorting management table, as illustrated in FIG. 42, is constructed. In the forwarding destination sorting management table, an IP address of an access destination of access request to a protection resource, an access destination, and a forwarding destination of the access request to the protection resource are managed in association with each other. 0110

### <Functional units of load distribution apparatus>

Next, the respective functional configurations of the load distribution apparatus 90 will be described in detail. In the following, in the explanation of the respective units of the load distribution apparatus 90, a relationship with the main component, which enables the respective units of the load distribution apparatus 90, among the respective components illustrated in FIG. 3, also will be described.

0111 The transmission/reception unit 91 of the load distribution apparatus 90 illustrated in FIG. 41 is enabled by the network I/F 209, and sends various data (or information) to and receives various data (or information) from a terminal, an apparatus or a system via the communication network 2. The load distribution apparatus 90 has a plurality of IP addresses. For example, the load distribution apparatus 90 is configured so as to reach an IP address of 10.x.x.2 upon accessing a URL of the protection resource such as "api.example.com/rosters" from a terminal as a communication apparatus of an external network (in the following, referred to "external terminal"), and reach a different IP address such as 192.x.x.5 upon accessing a URL of the protection resource such as roster.local from a terminal as a communication apparatus of an internal network (in the following, referred to "internal terminal"). That is, the load distribution apparatus 90 is configured so that a domain name is different for the external terminal and the internal terminal, and an access does not reach roster.local via the Internet 2i. Here, the external terminal is terminals (10aa, 10ab, 10ac, 10a...) that access the management system 50 via the Internet 2i, a relay apparatus 30a, a user PC terminal 20a, terminals (10ba, 10bb, 10bc, 10b...), relay apparatuses 30b, 30e, a user PC terminal 20b, a terminal management system 80 or the like. That is, the external terminal is, for example, an anomalous terminal in which reliability is not secured and which requests an access from the Internet, and is a terminal that needs allowance in order to access the protection resource. The internal terminal is a terminal 100, a relay apparatus 30c, a relay apparatus 30d, a user PC terminal 20c, a user PC terminal 20d or the like, that accesses the management system 50 without going through the Internet 2i.

0112 The sorting unit 92 is enabled by the instruction from the CPU illustrated in FIG. 3, and sorts various requests from the terminals 10 and 100. Specifically, the sorting unit 92 sorts requests for access tokens received via the transmission/reception unit 91, and a request for URL of the protection resource to the authentication unit 52 of the management system 50.

0113 Moreover, the sorting unit 92 sorts an access request to the protection resource received via the transmission/reception unit 91 to the storage/readout processing unit 59 or the allowance determination unit 64 of the management system 50. The sorting unit 92, based on an IP address of a transmission destination of the access request to the protection resource, determines whether the terminal that sends the access request to the protection resource received via the transmission/reception unit 81 is an external terminal or an internal terminal. Furthermore, the sorting unit 92 sorts, by a host header of the access request to the protection resource, to the storage/readout processing unit 59 or the allowance determination unit 64. In the host header, information indicating a resource of a request destination such as "api.example.com/rosters" is accompanied. When the IP address of the transmission destination of the access request to the protection resource indicates an access from an external terminal, and information expressing the protection resource is accompanied in the host header, the sorting unit 92 sorts the access request to the protection resource to the allowance determination unit 64. On the other hand, when the IP address of the transmission destination of the access request to the protection resource indicates an access from an internal terminal, and information expressing the protection resource is accompanied in the host header, the sorting unit 92 sorts the access request to the protection resource to the storage/readout processing unit 59.

0114

### <Functional configuration of transmission terminal management system 80>

The transmission terminal management system 80 includes a transmission/reception unit 81 illustrated in FIG. 43, a terminal authentication unit 82, an extraction unit 83, a destination list creation unit 84, a supplemental approval request screen creation unit 85, and a storage/readout processing unit 89. Each of the above units is a function or means that is functioned enabled by one of the components illustrated in FIG. 3, operating according to the instruction from the CPU 201 following a program for transmission terminal management system extended onto the RAM 203 from the HD 204.

0115 Moreover, the transmission terminal management system 80 includes a storage unit 8000 constructed by the RAM 203 or the HD 204, illustrated in FIG. 3.

0116

### (Functional configuration of transmission terminal management system)

Next, the respective functional configurations of the transmission terminal management system 80 will be described in detail. In the following, in the explanation of the respective functional configuration units of the transmission terminal management system 80, a relationship with the main component, which enables the respective functional configuration units of the transmission terminal management system 80, among the respective components illustrated in FIG. 3, also will be described.

0117 The transmission/reception unit 81 is executed by the instruction from the CPU 201 illustrated in FIG. 3 and the network I/F 209 illustrated in FIG. 3, and sends various data (or information) to and receives various data (or information) from another terminal, an apparatus, or a system. Moreover, the transmission/reception unit 81 also has a Web server function and data processing function.

0118 The terminal authentication unit 82 is enabled by the instruction from the CPU 201 illustrated in FIG. 3, accesses the transmission management system 50, and searches the terminal authentication management DB 5002 (See FIG. 4) constructed in the non-volatile storage unit 5000, thereby, according to determination whether a pair of a terminal ID and a password that is the same as the terminal ID and the password of the request source terminal are managed, authentication whether the terminal 10 of a user of the PC 20 is a valid terminal in the video conference system is performed.

0119 The extraction unit 83 is enabled by the instruction from the CPU 201 illustrated in FIG. 3, and searches the destination list management DB 5004 (See FIG. 4) constructed in the non-volatile storage unit 5000 of the transmission terminal management 80 with the terminal ID of the request source terminal as a search key, and thereby extracts a terminal ID of the corresponding destination terminal. Moreover, the extraction unit 83 searches the supplemental request management DB 5010 (See FIG. 38) with the terminal ID of the request destination terminal as a search key, and extracts a terminal ID of the corresponding request source terminal.

0120 The destination list creation unit 84 is enabled by the instruction from the CPU 201 illustrated in FIG. 3, and creates an HTML (Hyper Text Markup Language) of the destination list screen illustrated in FIG. 45.

0121 The supplemental approval request screen creation unit 85 creates an HTML of the supplemental approval request screen based on the terminal ID of the request source terminal extracted by the extraction unit 83.

0122

### «Process and operation of embodiment»

As described above, the configuration and function (or means) of the transmission system 1 according to the embodiment are described. Subsequently, with reference to FIGs. 19 through 36, processing method in the transmission system 1 according to the embodiment will be described. FIG. 19 is a sequence diagram depicting a process of managing state information indicating operation state of the respective relay apparatuses. FIG. 20 is a conceptual diagram depicting a state of sending/receiving image data, sound data and various pieces of management information in the transmission system. FIG. 21 is a sequence diagram depicting a process in a preparation stage for starting speech between transmission terminals. FIG. 22 is a conceptual diagram depicting a destination list according to the embodiment. FIG. 23 is a sequence diagram depicting a process of requiring a start of communication. FIG. 24 is a process flowchart depicting a process of changing a state of communication. FIG. 25 is a sequence diagram depicting a process of permitting a request for starting communication. FIG. 26 is a sequence diagram depicting a process of rejecting the request for starting communication. FIG. 27 is a process flowchart depicting a process of changing a state of communication. FIG. 28 is a sequence diagram depicting a process of cancelling the request for starting communication. FIG. 29 is a sequence diagram depicting a process of requiring a relay of speech data. FIG. 30 is a process flowchart depicting a process of changing the state of communication. FIG. 31 is a sequence diagram depicting a process of sending/receiving image data and sound data between transmission terminals. FIG. 32 is a sequence diagram depicting a process of requesting participation in a session for speech data. FIG. 33 is a process flowchart depicting a process of changing the state of communication. FIG. 34 is a sequence diagram depicting a process of requiring exiting the session for speech data. FIG. 35 is a conceptual diagram depicting a destination list according to other embodiment. FIG. 36 is a state transition diagram depicting a transition of a state of communication.

0123 At first, by using FIG. 19, a process of managing state information indicating a state of each relay apparatus 30 which is sent from the relay apparatus 30 to the management system 50 will be described. Firstly, at each relay apparatus 30, the state detection unit 32 illustrated in FIG. 4 detects periodically an operation state of the relay apparatus 30 that is an own apparatus (steps S1-1 through S1-4). Then, in order to cause the side of the management system 50 to manage the operation state of each relay apparatus 30 in real time, the transmission/reception unit 31 of each relay apparatus 30 periodically sends each piece of state information to the management system 50 via the communication network 2 (steps S2-1 through S2-4). These respective pieces of state information include a relay apparatus ID for each relay apparatus 30, and an operation state detected by a state detection unit 32 of a relay apparatus 30 related to these respective relay apparatus IDs. In the embodiments, a case where relay apparatuses (30a, 30b, 30d) normally operates and serve as ONLINE", but on the other hand, some trouble occurs in a program for executing a relay operation of a relay apparatus 30c which serves as "OFFLINE" is illustrated.

0124 Next, at the management system 50, the transmission/reception unit 51 receives each piece of state information sent from each relay apparatus 30, and stores the state information for each relay apparatus ID in the relay apparatus management table (See FIG. 9) of the non-volatile storage unit 5000 via the storage/readout processing unit 59, and manages (steps S3-1 through S3-4). Therefore, for the relay apparatus management table as illustrated in FIG. 9, for each relay apparatus ID, any operation state of "ONLINE", "OFFLINE" or "OUT-OF-ORDER" is stored and managed. Moreover, on this occasion, for each relay apparatus ID, reception date and time of receiving state information at the management system 50 is also stored and managed. When the state information is not sent from the relay apparatus 30, a field part of an operation state and a field part of reception date and time in each record in the relay apparatus management table illustrated in FIG. 9 become blank, or indicate an operation state and reception date and time at the previous reception, respectively.

0125 Next, by using FIG. 20, a concept illustrating a state of sending/receiving image data, sound data and various pieces of management information in the transmission system will be described. As illustrated in FIG. 20, in the transmission system 1, among the terminal 10A, the terminal 10B and the terminal 10C, a session for management information "sei" for sending/receiving various pieces of management information via the management system 50 is established. Moreover, among the terminal 10A, the terminal 10B and the terminal 10C, four sessions for sending/receiving via the relay apparatus 30 four data of image data with high image quality, image data with intermediate image quality, image data with low image quality and sound data, respectively, are established. Here, these four sessions are illustrated collectively as a session for image/sound data "sed".

0126 Next, using FIG. 21, a process of sending/receiving each piece of management information in a preparation stage before a terminal 10aa starts speech will be described. In FIG. 21, a process in which various pieces of management information are all sent/received by the session for management information "sei" is illustrated.

0127 At first, when a user of the terminal 10aa turns on the power switch 109, illustrated in FIG. 2, the operation input acceptance unit 12 illustrated in FIG. 4 accepts the power-ON and turns on the electric power (step S21). Then, the login request unit 13, with the above-described reception of electric power ON as a trigger, automatically sends login request information indicating login request to the management system 50 via the communication network 2 from the transmission/reception unit 11 (step S22). In the login request information, a terminal ID for identifying the terminal 10aa that is the own terminal as a request source and a password are included. These terminal ID and the password are data that are read out from the non-volatile storage unit 1000 via the storage/readout processing unit 19 and sent to the transmission/reception unit 11. When the login request information is sent from the terminal 10aa to the management system 50, the management system 50 that is a reception side can perceive an IP address of the terminal 10aa that is a transmission side.

0128 Next, the authentication unit 52 of the management system 50 searches the terminal authentication management table (See FIG. 10) of the non-volatile storage unit 5000 with the terminal ID and the password included in the login request information received via the transmission/reception unit 51 as a search key, and determines whether the same terminal ID and password are managed in the terminal authentication management DB 5002, and thereby performs terminal authentication (step S23).

0129 When the login request is determined by the authentication unit 52 to be a login request from a terminal having a valid usage authority because the same terminal ID and password are managed, the state management unit 53 stores in the terminal management table (See FIG. 11), for each record indicated by the terminal ID of the terminal 10aa and a destination name, reception date and time of receiving the above-described login request information, and the IP address of the terminal 10aa, in association with each other (step S24-1). Therefore, in the terminal management table illustrated in FIG. 11, the reception date and time "2009.11.10.13:40" and the terminal IP address "1.2.1.3" are associated with the terminal ID "01aa" and managed.

0130 Subsequently, the state setting unit 53a of the state management unit 53 sets an operation state "ONLINE" and a communication state "None" of the terminal 10aa, and stores, in the terminal management table (See FIG. 11), for each record indicated by the terminal ID of the terminal 10aa and the destination name, the operation state and the communication state, in association with each other (step S24-2). Therefore, in the terminal management table illustrated in FIG. 11, the operation state "ONLINE" and the communication state "None" are associated with the terminal ID "01aa", and managed.

0131 Then, the transmission/reception unit 51 of the management system 50 sends authentication result information in which authentication result obtained by the above-described authentication unit 52 is illustrated to the above-described request source terminal (terminal 10aa) that requires a login via the communication network 2 (step S25). In the embodiment, regarding a case of determining to be a terminal having a valid usage authority by the authentication unit 52 will be continuously described as follows.

0132 In the terminal 10aa, when the authentication result information in which a result determined to be a terminal having valid usage authority is indicated is received, the transmission/reception unit 11 sends destination list request information indicating requiting a destination list to the management system 50 via the communication network 2 (step S26). Therefore, the transmission/reception unit 51 of the management system 50 receives the destination list request information.

0133 Next, the terminal extraction unit 54 searches the destination list management table (See FIG 12) with the terminal ID "01aa" of the request source terminal (terminal 10aa) which requires a login as a search key, and reads out a terminal ID of a candidate of a destination terminal that can talk with the request source terminal (terminal 10aa) to extract (step S27). Moreover, the terminal extraction unit 54 searches the terminal management table (See FIG. 11) with the extracted terminal ID as a search key, and reads out a destination name corresponding to the terminal ID to extract. Here, terminal IDs ("01ab", "01ba", ... "01db", ...) of destination terminals (10ab, 10ba, ..., 10db, ...), respectively, corresponding to the terminal ID "01aa" of the request source terminal (terminal 10aa) and terminal names corresponding to these terminal IDs ("AB terminal, Tokyo office, Japan", "BA terminal, Osaka office, Japan", ... "DB terminal, Washington office, U.S.") are extracted.

0134 Next, the transmission/reception unit 51 of the management system 50 reads out data of destination list frame (data of a part of destination list frame 1100-1 illustrated in FIG. 22) from the storage unit 6000 via the storage/readout processing unit 59 (step S28), and sends "destination list information (destination list frame, terminal ID, destination name)" including this destination list frame and the terminal ID and the destination name extracted by the above-described terminal extraction unit 54 to the request source terminal (terminal 10aa) (step S29). Therefore, in the request source terminal (terminal 10aa), the transmission/reception unit 11 receives the destination list information, and the storage/readout processing unit 19 stores the destination list information in the volatile storage unit 1100 (step S30).

0135 In this way, in the embodiment, not managing destination list information at each terminal 10, but the management system 50 manages destination list information of all terminals in an integrated fashion. Therefore, even when a new terminal 10 is included in the transmission system 1, when a terminal 10 of a new model is included instead of a terminal that is already included, or when appearance of the destination list frame or the like is changed, because the side of the management system 50 handles collectively, the trouble of having to change destination list information on the side of each terminal 10 can be avoided.

0136 Moreover, the terminal state acquisition unit 55 of the management system 50 searches the terminal management table (See FIG. 11) with a terminal ID ("01ab", "01ba", ... "01db", ...) of a candidate of the destination terminal extracted by the above-described terminal extraction unit 54 as a search key, for each terminal ID extracted by the above-described terminal extraction unit 54, reads out a corresponding operation state, and thereby acquires respective operation states of the terminals (10ab, 10ba, ..., 10db, ...) as a destination candidate (step S31).

0137 Next, the transmission/reception unit 51 sends "state information of terminal", including the terminal ID "01ab" as a search key used in the above-described step S27 and an operation state "OFFLINE" of a corresponding destination terminal (terminal 10ab), to the request source terminal (terminal 10aa) via the communication network 2 (step S32). Moreover, equally as part of step S32, the transmission/reception unit 51 sends remaining "state information of terminal", such as "state information of terminal" including the terminal ID "01ba" and an operation state "ONLINE (Calling)" of a corresponding destination terminal (terminal 10ba), to the request source terminal (terminal 10aa), individually.

0138 Next, the storage/readout processing unit 19 of the request source terminal (terminal 10aa) serially stores state information of a terminal received from the management system 50 in the volatile storage unit 1100 (step S33). Therefore, the request source terminal (terminal 10aa) receives above-described state information of each terminal, and thereby acquires respective operation states at the present moment of the terminal 10ab or the like, that is candidates of a destination terminal which can talk with the request source terminal (terminal 10aa).

0139 Next, the destination list creation unit 20 of the request source terminal (terminal 10aa) creates a destination list reflecting a state of a terminal 10 as a destination candidate, based on the destination list information stored in the volatile storage unit 1100 and a state information of a terminal, and the display control unit 16 controls a timing of displaying the destination list for the display device 120 illustrated in FIG. 2 (step S34).

0140 As described above, as illustrated in FIG. 22, a destination list in a state where icon 1100-3a or the like, which reflects each destination name 1100-2 or the like and each state information, is displayed on the destination list frame 1100-1 can be displayed on the display device 120aa.

0141 On the other hand, returning to FIG. 21, the terminal extraction unit 54 of the management system 50 searches the destination list management table (See FIG. 12) with the terminal ID "01aa" of the request source terminal (terminal 10aa), which requires a login, as a search key, and extracts a terminal ID of other request source terminal that registers the terminal ID "01aa" of the above-described request source terminal (terminal 10aa) as a candidate of a destination terminal (step S35). In the destination list management table illustrated in FIG. 12, terminal IDs of the other request source terminals that are extracted are "01ab", "01ba", and "01db".

0142 Next, the terminal state acquisition unit 55 of the management system 50 searches the terminal management table (See FIG. 11) with the terminal ID "01aa" of the above-described request source terminal (terminal 10aa), which requires a login, as a search key, to acquire an operation state of the request source terminal (terminal 10aa), which requires a login (step S36).

0143 Then the transmission/reception unit 51 sends the "state information of terminal" including the terminal ID "01aa" of the request source terminal (terminal 10aa) acquired in above-described step 36 and the operation state "ONLINE" to terminals (10ba, 10db) where an operation state is "ONLINE" in the terminal management table (See FIG. 11) among terminals (10ab, 10ba, 10db) related to the terminal ID ("01ab", "01ba", "01db") extracted in above-described step S35 (steps S37-1, S37-2). When the transmission/reception unit 51 sends the state information of terminal to the terminals (10ba, 10db), based on the respective terminal IDs ("01ba", "01db"), an IP address of a terminal managed in the terminal management table illustrated in FIG. 11 is referred. Therefore, to each of the other destination terminals (10db, 10ba) that can talk serving the request source terminal, which requires a login, as a destination, the terminal ID "01aa" of the above-described request source terminal (terminal 10aa), which requires a login, and the operation state "ONLINE" can be transmitted.

0144 On the other hand, also in the other terminal 10, in the same way as above-described step S21, when a user turns the power switch 109 illustrated in FIG. 3 to ON, the operation input acceptance unit 12 illustrated in FIG. 4 accepts the electric power ON, and the same processes as the processes in above-described steps S22 through S38-1, S38-2, and therefore an explanation thereof will be omitted.

0145 Subsequently, using FIG. 23, a process of a case of by a terminal requiring a start of communication with another terminal will be described. In FIG. 23, a process where various pieces of management information are sent/received all by the session "sei" for management information is illustrated. Moreover, in the embodiment, the request source terminal (terminal 10aa) can talk with at least one of terminals (10aa, 10bb, 10cb, 10db) where an operation state is ONLINE and communication state is None, by the state information of terminal received in above-described step S32, among terminals 10 as candidates of destination. Then, in the following, a case where a user of the request source terminal (terminal 10aa) selects starting a speech with destination terminals (terminals 10bb, 10cb, 10db) will be described.

0146 At first, when the user of the request source terminal (terminal 10aa) holds down the operation button illustrated in FIG. 2 to select a destination terminal (terminal 10bb), a destination terminal (terminal 10cb) and a destination terminal (terminal 10db), the operation input acceptance unit 12 illustrated in FIG. 4 accepts a request to start speech with the terminal 10bb, the terminal 10cb and the terminal 10db (step S41). Then, the transmission/reception unit 11 of the terminal 10aa sends, to the management system 50, start request information including the terminal ID "01aa" of the request source terminal (terminal 10aa), the terminal ID "01bb" of the destination terminal (10bb), the terminal ID "01cb" of the destination terminal (10cb), the terminal ID "01db" of the destination terminal (10db), and change request information "Invite" indicating requiring start of speech (step S42). Therefore, the transmission/reception unit 51 of the management system 50 receives the above-described start request information, and perceives an IP address "1.2.1.3" of the request source terminal (terminal 10aa) that is a transmission source.

0147 Then, the state management unit 53, based on the terminal ID "01aa" of the request source terminal (10aa), the terminal ID "01bb" of the destination terminal (10bb), the terminal ID "01cb" of the destination terminal (10cb), and the terminal ID "01db" of the destination terminal (10db) included in the start request information, changes field parts of communication state of records each including the above-described terminal ID "01aa", the terminal ID "01bb", the terminal ID "01cb", and the terminal ID "01db" in the terminal management table (See FIG. 11) (step S43).

0148 Here, using FIG. 24, the process in step S43 will be described in detail. In the embodiment, the state management unit 53 changes a communication state of a terminal 10 following a rule of change of a communication state as illustrated in a state transition diagram of FIG 36. For example, when change request information "Cancel" is received, if a communication state of the terminal 10 is "Ringing" or "Calling", the communication state is changed to "None", and if the communication state of the terminal 10 is "Accepted", the communication state is left to be "Accepted". In the embodiment, an example where the state change management table (See FIG. 16, FIG. 17 and FIG. 18) is used in order to enable changing a state by the state management unit 53, will be described, but is not limited to this form. In this case, the state management unit 53 may be defined by a program for management system so that the state management unit 53 can change a communication state following a transition rule of the communication state illustrated by a state transition diagram of FIG. 36.

0149 At first, the state acquisition unit 53b of the state management unit 53, illustrated in FIG. 5, acquires a state of communication of a terminal managed by the terminal management DB (step S43-1). In this case, the change request information "Invite" received by the transmission/reception unit 51 is preliminarily determined to be specific change request information by the change request information determination unit 63. Based on this operation, the state acquisition unit 53 acquires communication states of not only the request source terminal (terminal 10aa) but also the destination terminals (terminals 10bb, 10cb, 10db). In this case, the state acquisition unit 53b searches the terminal management table (See FIG. 11) with the terminal ID "01aa" of the request source terminal (terminal 10aa) as a search key, and acquires a communication state "None" of the request source terminal (terminal 10aa). Similarly, a communication state "None" of the destination terminal (terminal 10bb), a communication state "None" of the destination terminal (terminal 10cb), and a communication state "None" of the destination terminal (terminal 10db) are acquired.

0150 Next, the state change unit 53c of the state management unit 53 acquires pre-change state information of the request source terminal and the destination terminal corresponding to the change request information "Invite" (step S43-2). In this case, the state change unit 53c searches the state change management table (See FIG. 17) with the change request information "Invite" and terminal information "request source" as a search key, and acquires the pre-change state information "None" of the request source terminal. Similarly, the state change unit 53c searches the state change management table (See FIG. 17) with the change request information "Invite" and terminal information "destination" as a search key, and acquires the pre-change state information "None" of the destination terminal.

0151 Next, the state change unit 53c compares the communication state acquired by the state acquisition unit 53b with the pre-change state information acquired by the state change unit 53c, and determines whether the communication state and the pre-change state information are the same (step S43-3). In this case, the state change unit 53c compares the communication state "None" of the request source terminal (terminal 10aa) acquired by the state acquisition unit 53b with the pre-change state information "None" of the request source terminal acquired by the state change unit 53c, and determines whether the communication state and the pre-change state information are the same. Similarly, the state change unit 53c compares each of the communication state of the destination terminal (terminal 10bb) acquired by the state acquisition unit 53b, the communication state of the destination terminal (terminal 10cb) and the communication state of the destination terminal (terminal 10db) with the pre-change state information of the destination terminal acquired by the state change unit 53c, and determines whether the communication state and the pre-change state information are the same.

0152 When, in step S43-3, the communication state of the request source terminal and the pre-change state information are determined to be the same and each of the communication states of the destination terminals and the pre-change state information are determined to be the same (step S43: YES), the state change unit 53c acquires change information of the request source terminal and the destination terminal corresponding to the change request information "Invite" (step S43-4). In this case, the state change unit 53c searches the state change management table (See FIG. 17) with the change request information "Invite" and terminal information "request source" as a search key, and acquires change information "Calling" of the request source terminal. Similarly, the state change unit 53c searches the state change management table (See FIG. 17) with request information "Invite" and the terminal information "destination" as a search key, and acquires change information of "Ringing" of the destination terminal.

0153 Next, the state change unit 53c, based on the terminal ID "01aa" of the request source terminal (10aa), the terminal ID "01bb" of the destination terminal (10bb), the terminal ID "01cb" of the destination terminal (10cb), and the terminal ID "01db" of the destination terminal (10db), changes field parts of communication state of records each including the above-described terminal ID "01aa", the terminal ID "01bb", the terminal ID "01cb", and the terminal ID "01db" in the terminal management table (See FIG. 11) (step S43-5). In this case, the field part of communication state of a record including the terminal ID "01aa" in the terminal management table, is changed to "Calling" based on the acquired change information of the request source terminal. Similarly, the field part of communication state of a record including the terminal ID "01bb" in the terminal management table, the field part of communication state of a record including the terminal ID "01cb", and the field part of communication state of a record including the terminal ID "01db" are changed to "Ringing" based on the acquired change information of the destination terminal. Furthermore, the decision unit 61 decides a response indicating sending start request information for performing call control of communication among the request source terminal (terminal 10aa), and the destination terminals (terminals 10bb, 10cb, 10db) to the respective destination terminals (See steps S48-1, S48-2, S48-3).

0154 When, in step S43-3, the communication state of the request source terminal and the pre-change state information are determined not to be the same, or any of the communication states of the destination terminals and the pre-change state information are determined not to be the same (step S43-3: NO), the state change unit 53c does not change the field parts of communication state of records each including the above-described terminal ID "01aa", the terminal ID "01bb", the terminal ID "01cb", and the terminal ID "01db" in the terminal management table (See FIG. 11). This is because any one of the request source terminal (terminal 10aa), the destination terminals (terminals 10bb, 10cb, 10db) is not a state of starting speech. Furthermore, the decision unit 61 decides a response indicating creating a predetermined error message and sending the error message to the request source terminal (terminal 10aa). Subsequently, the transmission/reception unit 51 creates the predetermined error message, and sends the error message to the request source terminal (terminal 10aa), thereby the process ends.

0155 Next, returning to FIG. 23, when the response indicating sending the start request information to the respective destination terminals is decided by the decision unit 61, a subsequent process will be described. At first, the session ID generation unit 56a generates a session ID "se1" for identifying a session (session for speech data "sed") for executing communication to the respective destination terminals required by the request source terminal (terminal 10aa) (step S44). When the session ID is generated, the session management unit 57 stores a session ID "se1" and a number of destination terminals "3" in the volatile storage unit 5100. The number of destination terminals will be used later for determining whether change request information "Reject" indicating rejecting a start of communication is received from all the destination terminals when the change request information is received.

0156 Subsequently, the relay apparatus selection unit 56 of the management system 50 performs selection of the relay apparatus 30 for relaying speech between the request source terminal (terminal 10aa) and the destination terminal (terminals 10bb, 10cb and 10db) based on the relay apparatus management DB 5001 and the relay apparatus selection management DB (step S45). In this case, at first, the relay apparatus extraction unit 56b, based on the terminal ID "01aa" of the request source terminal (terminal 10aa), the terminal ID "01bb" of the destination terminal (terminal 10bb), the terminal ID "01cb" of the destination terminal (terminal 10cb) and the terminal ID "01db" of the destination terminal (terminal 10db) included in the start communication information sent from the request source terminal (10aa), searches the relay apparatus selection management table (See FIG. 15), and thereby extracts relay apparatus IDs ("111a", "111b", "111c" and "111d") corresponding to the terminals (10aa, 10bb, 10cb and 10db).

0157 If the respective extracted relay apparatus IDs are the same, the selection unit 56c refers to an operation state of the extracted relay apparatus ID among operation states of the relay apparatuses 30 managed in the relay apparatus management table (See FIG. 9). When the operation state of the relay apparatus ID is "ONLINE" here, the selection unit 56c selects the extracted relay apparatus as a relay apparatus for relaying speech. If the respective extracted relay apparatus IDs are not the same, or if the operation state of the relay apparatus ID is "OFFLINE" as a result of the above-described reference, a relay apparatus 30e of relay apparatus ID "111e" is selected as the relay apparatus for relaying speech. In the embodiment, for the case where the relay apparatus 30e is selected by the selection unit 56c, will be described as follows.

0158 When the selection process for the relay apparatus 30 is finished, the session management unit 57, in the session management table (See FIG. 13) in the non-volatile storage unit 5000, stores and manages the terminal ID "01aa" of the request source terminal (terminal 10aa), the terminal ID "01bb" of the destination terminal (terminal 10bb), the terminal ID "01cb" of the destination terminal (terminal 10cb), and the terminal ID "01db" of the destination terminal (terminal 10db), the relay apparatus ID "111e" of the selected relay apparatus, into field parts of the request source terminal ID, the destination terminal ID and the relay apparatus ID of a record in which the session ID "se1" is included (step S46).

0159 Next, the transmission/reception unit 51, illustrated in FIG. 4, sends the session ID generated at the session ID generation unit 56a and relay apparatus connection information used for connecting to the relay apparatus 30e that is selected at the selection unit 56c (step S47). This relay apparatus connection information may include an IP address "1.1.1.3" of the relay apparatus 30e, authentication information, a port number or the like. Therefore, the terminal 10aa can perceive the relay apparatus connection information used for connecting to the relay apparatus 30e used for relaying speech data, in execution of a session in the session ID "se1".

0160 Next, the transmission/reception unit 51 sends the terminal ID "01aa" of the request source terminal (terminal 10aa), the change request information "Invite" indicating requesting a start of speech with a destination terminal, the start request information including the session ID "se1", the above-described relay apparatus connection information used for connecting to the relay apparatus 30e, and the IP address of the management system 50 to all the destination terminals (10bb, 10cb, 10db) (step S48-1, S48-1, S48-3). Therefore, the transmission/reception units 51 of the destination terminals (terminals 10bb, 10cb, 10db) receive the above-described start request information, and perceive the relay apparatus connection information used for connecting to the relay apparatus 30e used for relaying speech data and the IP address "1.1.1.2" of the management system 50 that is a transmission source.

0161 Subsequently, using FIGs. 25 and 24, a process, where a user of the destination terminal (terminal 10db) that receives the above-described start request information, holds down the operation button 108 illustrated in FIG. 2, and thereby a response indicating permitting the start of communication with the request source terminal (terminal 10aa) is accepted, will be described. By the operation button 108 of the destination terminal (terminal 10db), the response indicating permitting the start of communication with the request source terminal (terminal 10aa) is accepted (step S49). Next, the transmission/reception unit 11 of the destination terminal (terminal 10db) sends the terminal ID "01db" of the destination terminal (terminal 10db), the terminal ID "01aa" of the request source terminal (terminal 10aa), change request information "Accept" indicating permitting the start of communication, and start response information including the session ID "se1" to the management system 50 (step S50).

0162 When the transmission/reception unit 51 of the management system 50 receives the start response information, the state management unit 53 changes, based on the terminal ID "01aa" of the request source terminal (terminal 10aa) and the terminal ID "01db" of the destination terminal (terminal 10db), the field parts of communication state in records including the above-described terminal ID "01aa" and the terminal ID "01db", respectively, in the terminal management table (See FIG. 11) (step S51).

0163 Here, using FIG. 24, the process in step S51 will be described in detail. First, when the transmission/reception unit 51 of the management system 50 receives the start response information, the state acquisition unit 53b of the state management unit 53 illustrated in FIG. 5 acquires a state of communication of a terminal that is managed by the terminal management table (See FIG. 11), in the same way as the process in step S43-1 (step S51-1). In this case, the change request information "Accept" received by the transmission/reception unit 51 is preliminarily determined to be specific change request information by the change request information determination unit 63. Based on this determination, the state acquisition unit 53 acquires not only the communication state "Ringing" of the destination terminal (terminal 10db) but also the communication state "Calling" of the request source terminal (terminal 10aa).

0164 Subsequently, the state change unit 53c of the state management unit 53, in the same way as the process in step S43-2, acquires pre-change state information of the request source terminal "Calling" and "Accepted" corresponding to the change request information "Accept" managed by the state change management table (See FIG. 17). Similarly, the state change unit 53c acquires pre-change state information "Ringing" of the destination terminal corresponding to the change request information "Accept" managed by the state change management table (See FIG. 17) (step S51-2).

0165 Next, the state change unit 53c compares the communication state acquired by the state acquisition unit 53b with the pre-change state information acquired by the state change unit 53c, and determines whether the communication state and the pre-change state information are the same (step S51-3). In this case, the state change unit 53c determines whether the communication state "Calling" of the request source terminal (terminal 10aa) acquired by the state acquisition unit 53b is the same as any of the pre-change state information "Calling" and "Accepted" of the request source terminal acquired by the state change unit 53c. Similarly, the state change unit 53c determines whether the communication state "Ringing" of the destination terminal (terminal 10db) acquired by the state acquisition unit 53b is the same as the pre-change state information "Ringing" of the destination terminal acquired by the state change unit 53c.

0166 When the state information of the request source terminal is determined to be the same as the pre-change state information in step S51-3 and the state information of the destination terminal is determined to be the same as the pre-change state information (step S51-3: YES), the state change unit 53c acquires change information of the request source terminal and the destination terminal corresponding to the response information "Accept" (step S51-4). In this case, the state change unit 53c searches the state change management table (see FIG. 17) with the response information "Accept", the terminal information "request source" indicating the request source terminal, and the pre-change state "Calling" indicating the communication state of the request source terminal before change as a search key, and acquires the change information "Accepted" of the request source terminal. Similarly, the state change unit 53c searches the state change management table (See FIG. 17) with the response information "Accept", the terminal information "destination" indicating the destination terminal, and the pre-change state "Ringing" indicating the communication state of the destination terminal before change as a search key, and acquires the change information "Accepted" of the destination terminal.

0167 Next, the state change unit 53c, based on the terminal ID "01aa" of the request source terminal (terminal 10aa) and the terminal ID "01db" of the destination terminal (terminal 10db) included in the start response information, in the terminal management table (See FIG. 11), changes field parts of communication states of records including the above-described terminal ID "01aa" and the terminal ID "01db", respectively (step S51-5). In this case, the field part of communication state of the record including the terminal ID "01aa" in the terminal management table is changed to "Accepted" based on the acquired change information of the request source terminal. Similarly, the field part of communication state of the record including the terminal ID "01db" in the terminal management table is changed to "Accepted" based on the acquired change information of the destination terminal. Furthermore, the decision unit 61 decides handling (See step S52) for sending start response information to the request source terminal (terminal 10aa) in order to perform call control of communication between the request source terminal (terminal 10aa) and the destination terminal (terminal 10db).

0168 In addition, when the communication state of the request source terminal (10aa) is not determined to be the same as the pre-change state information or the communication state of the destination terminal (10db) is not determined to be the same as the pre-change state information (step S51-3: NO), the state change unit 53c, in the terminal management table (See FIG. 11), does not change the field parts of communication state of the records including the above-described terminal ID "01aa" and the terminal ID (01db), respectively. In this case, the decision unit 61 decides a handling for creating a predetermined error message, and sending the error message to the destination terminal (terminal 10db). Subsequently, the transmission/reception unit 51 creates this error message, sends this error message to the destination terminal (terminal 10db), and thereby completes the process.

0169 Next, returning to FIG. 25, the process when the handling for sending the start response information to the respective destination terminals is decided by the decision unit 61 will be described. The transmission/reception unit 51 sends the terminal ID "01db" of the destination terminal (terminal 10db), the change request information "Accept" indicating permitting request for starting speech with the destination terminal, the start response information including the session ID "se1" to the request source terminal (terminal 10aa) (step S52). When this start response information is received, the request source terminal (terminal 10aa) sends the session ID "se1" and the relay apparatus connection information acquired in step S47 to the relay apparatus 30e by the transmission/reception unit 11, and thereby is coupled to the relay apparatus 30e (step S53). On the other hand, the destination terminal (terminal 10db) sends the session ID "se1" and the relay apparatus connection information acquired in step S48-1 to the relay apparatus 30e, and thereby is coupled to the relay apparatus 30e (step S54).

0170 Subsequently, using FIG. 26 and FIG. 27, a process of a case where a user of the destination terminal (terminal 10bb) that receives the start request information in step S48-2 holds down the operation button 108 illustrated in FIG. 2, and thereby a response to reject starting communication with the request source terminal (terminal 10aa) is accepted will be described. When the response to reject starting communication with the request source terminal (terminal 10bb) is accepted by the operation button 108 of the destination terminal (terminal 10bb) (step S55), the transmission/reception unit 11 of the destination terminal (terminal 10bb) sends start response information including the terminal ID "01bb" of the destination terminal (terminal 10bb), change request information "Reject" indicating rejecting the request for starting communication, and the session ID "se1" to the management system 50 (step S56).

0171 When the transmission/reception unit 51 of the management system 50 receives the start response information, the state management unit 53, based on the terminal ID "01aa" of the request source terminal (terminal 10aa) and the terminal ID "01bb" of the destination terminal (terminal 10bb), changes field parts of communication states of records including the above-described terminal ID "01aa" and the terminal ID "01bb", respectively, in the terminal management table (See FIG. 11) (step S57).

0172 Here, using FIG. 27, the process in step S57 will be described in detail. At first, when the transmission/reception unit 51 of the management system 50 receives the start response information, the determination unit 62 stores a number of reception of the start response information (number of reception of response) of "Reject" received by the transmission/reception unit 51 in the session indicated by the session ID "se1" into the volatile storage unit 5100 (step S57-1). In this case, because the start response information "Reject" received from the destination terminal (terminal 10bb) is the first received start response information of "Reject" in the session indicated by the session ID "se", the session ID "se1" and the number of reception of response "1" are associated with each other and stored in the volatile storage unit 5100.

0173 Next, the state acquisition unit 53b of the state management unit 53, illustrated in FIG. 5, acquires a state of communication of a terminal managed by the terminal management table (See FIG. 11) in the same way as in the process in step S43-1 (step S57-2). Here, the change request information "Reject" received by the transmission/reception unit 51 is determined in advance to be specific change request information by the change request information determination unit 63, and the state acquisition unit 53, based on this determination, acquires not only a communication state "Ringing" of the destination terminal (terminal 10bb) but also a communication state "Accepted" of the request source terminal (terminal 10aa) (step S57-2).

0174 Subsequently, the state change unit 53c of the state management unit 53 acquires pre-change state information "Calling" and "Accepted" of the request source terminal corresponding to the start request information "Reject" managed in the state change management table (See FIG. 18) and pre-change state information "Ringing" of the destination terminal in the same way as in step S43-2 (step S57-3).

0175 Next, the state change unit 53c compares the communication state acquired by the state acquisition unit 53b with the pre-change state information acquired by the state change unit 53c, and determines whether they are the same (step S57-4). In this case, the state change unit 53c determines whether the communication state "Accepted" of the request source terminal (terminal 10aa) acquired by the state acquisition unit 53b is the same as any of pieces of the pre-change state information "Calling" and "Accepted" of the request source terminal acquired by the state change unit 53c. Similarly, the state change unit 53c determines whether the communication state "Ringing" of the destination terminal (terminal 10bb) acquired by the state acquisition unit 53b is the same as the pre-change state information "Ringing" of the destination terminal acquired by the state change unit 53c.

0176 When the communication state of the request source terminal is determined to be the same as the pre-change state information in step S57-4 and the communication state of the destination terminal is determined to be the same as the pre-change state information (step S57-4: YES), the determination unit 62 determines whether all the plurality of destination terminals reject the request of the request source terminal (terminal 10aa) or a part of the plurality of destination terminals rejects the request of the request source terminal (terminal 10aa) (step S57-5). Here, the determination unit 62 acquires the number of destination terminals "3" that is a destination of the request information sent from the request source terminal (terminal 10aa), from the volatile storage unit 5100 (See step S44). Subsequently, the determination unit 62 acquires the number of reception "1" of the start request information (number of reception of response) of "Reject" measured by a measurement unit, from the volatile storage unit 5100 (See step S57-1). Therefore, the determination unit 62 determines that a part of the plurality of destination terminals rejects the request of the request source terminal (terminal 10aa).

0177 When the above-described determination completes, the state change unit 53c acquires change information of the request source terminal and the destination terminal corresponding to the response information "Reject" (step S57-6). In this case, the state change unit 53c searches the state change management table (See FIG. 18) using the response information "Reject", terminal information "request source" indicating a request source terminal, the determination information "part" indicating a result determined by the determination unit 62, and pre-change state "Accepted" indicating a pre-change state of communication of the request source terminal, as search keys, and acquires change information "Accepted" of the request source terminal. Moreover, the state change unit 53c searches the state change management table (See FIG. 18) with the response information "Reject" and terminal information "destination" indicating the destination terminal, as search keys, and acquires change information "None" of the destination terminal.

0178 Next, the state change unit 53c, based on the terminal ID "01aa" of the request source terminal (terminal 10aa) and the terminal ID "01bb" of the destination terminal (terminal 10bb), changes field parts of communication states of records including the above-described terminal ID "01aa" and the terminal ID "01bb", respectively, in the terminal management table (See Fig. 11) (step S57-7). In this case, the field part of communication state of record including the terminal ID "01aa" in the terminal management table is changed to "Accepted" based on the acquired change information of the request source terminal. Similarly, the field part of communication state of record including the terminal ID "01bb" in the terminal management table is changed to "None" based on the acquired change information of the destination terminal. Furthermore, the decision unit 61 decides a response indicating sending start request information to the request source terminal (terminal 10aa) for performing call control of communication among the request source terminal (terminal 10aa) and the destination terminal (terminal 10bb) (See step S59).

In addition, when the communication state of the request source terminal (terminal 10aa) is not determined to be the same as the pre-change state information in step S57-4, or when the communication state of the destination terminal (terminal 10bb) is not determined to be the same as the pre-change state information (Step S57-4: NO), the state change unit 53c does not change field parts of communication state of records including the above-described terminal ID "01aa" and the terminal ID "01bb", respectively. In this case, the decision unit 61 decides a response indicating generating a predetermined error message and sending the error message to the destination terminal (terminal 10bb). Subsequently, the transmission/reception unit 51 sends the error message to the destination terminal (terminal 10bb), and thereby the process ends.

0179 Next, returning to FIG. 26, a process of a case of sending the start response information to the request source terminal (terminal 10aa) by the decision unit 61 will be described. At first, the session management unit 57 removes the terminal ID "01bb" of the destination terminal (terminal 10bb) from a field part of destination terminal of record including the session ID "se1" in the session management table (See FIG. 13) of the non-volatile storage unit 5000 (step S58). Furthermore, the transmission/reception unit 51 sends start response information including the terminal ID "01bb" of the destination terminal (terminal 10bb), response information "Reject" indicating rejecting the request for starting communication, and the session ID "se1" to the request source terminal (terminal 10aa) (step S59). Therefore, the request source terminal (terminal 10aa) perceives that the request for starting communication with the request source terminal (terminal 10bb) is rejected.

0180 Subsequently, using FIG. 28 and FIG. 24, a process of a case where after a request for starting communication is sent by the request source terminal (terminal 10aa), a request indicating cancelling the request for starting communication is accepted by an operation button 108 of the request source terminal (terminal 10aa) will be described. When the request indicating cancelling the request for starting communication is accepted by the operation button 108 of the request source terminal (terminal 10aa) (step S61), cancel request information including the terminal ID "01aa" of the request source terminal (terminal 10aa), change request information "Cancel" indicating cancelling the request for starting communication, and the session ID "se1" is sent to the management system 50 (step S62).

0181 When the transmission/reception unit 51 of the management system 50 receives the cancel request information, the state management unit 53, based on the terminal ID "01aa" of the request source terminal (terminal 10aa) and the terminal ID of the destination terminal included in the cancel request information, changes field parts of communication states of records including the above-described terminal ID "01aa" and the terminal ID of the destination terminal, respectively, in the terminal management table (See FIG. 11) (step S63).

0182 Here, the process in step S63 will be described in detail using FIG. 24. At first, when the transmission/reception unit 51 of the management system 50 receives the change request information "Cancel", the state acquisition unit 53b of the state management unit 53, illustrated in FIG. 5, acquires a state of communication of a terminal managed in the terminal management table (See FIG. 11) (step S63-1). Here, the change request information "Cancel" received by the transmission/reception unit 51 is determined in advance to be specific change request information by the change request information determination unit 63, and based on this determination the state acquisition unit 53 acquires not only communication state of the request source terminal (terminal 10aa), but also communication states of the respective destination terminals (step S63-1). In this case, the state acquisition unit 53b searches the terminal management table (See FIG. 11) with the terminal ID "01aa" of the request source terminal (terminal 10aa), as a search key, and acquires a communication state "Accepted" of the request source terminal (terminal 10aa) that has requested to start speech. Next, the state acquisition unit 53b searches the session management table (See FIG. 13) with the session ID "se1" as a search key, and acquires terminal IDs "01db" and "01cb" of the destination terminals. Subsequently, the state acquisition unit 53b searches the terminal management table (See FIG. 11) with the terminal ID "01db" of the destination terminal (terminal 10db) and the terminal ID "01cd" of the destination terminal (terminal 10cb), as search keys, and acquires communication states of the respective destination terminals "Accepted" and "Ringing".

0183 Subsequently, the state change unit 53c of the state management unit 53 acquires pre-change state information "Calling" and "Accepted" of the request source terminal and pre-change state information "Ringing" of the destination terminal corresponding to the change request information "Cancel" managed in the state change management table (See FIG. 17), in the same way as the process in step S43-2 (step S63-2).

0184 Next, the state change unit 53c compares the communication state acquired by the state acquisition unit 53b with the pre-change state information acquired by the state change unit 53c, and determines whether they are the same (step S63-3). In this case, the state change unit 53c determines whether the communication state "Accepted" of the request source terminal (terminal 10aa) acquired by the state acquisition unit 53b is the same as any of pieces of the pre-change state information "Calling" and "Accepted" of the request source terminal acquired by the state change unit 53c. Similarly, the state change unit 53c determines whether the communication state "Accepted" of the destination terminal (terminal 10db) and the communication state "Ringing" of the destination terminal (terminal 10cb) acquired by the state acquisition unit 53b are the same as the pre-change state information "Ringing" of the destination terminal acquired by the state change unit 53c.

0185 When the communication state of the request source terminal is determined to be the same as the pre-change state information in step S63-3 and when the communication state of the destination terminal is determined to be the same as the pre-change state information (step S63-3: YES), the state change unit 53c acquires change information of the request source terminal and the destination terminal corresponding to the change request information "Cancel" (step S63-4). In this case, the state change unit 53c searches the state change management table (See FIG. 18) with the change request information "Cancel", terminal information "request source" indicating a request source terminal, and a pre-change state "Accepted" indicating a pre-change state of communication as search keys, and acquires the change information of the request source terminal "Accepted". Moreover, the state change unit 53c searches the state change management table (See FIG. 17) with terminal information "destination" indicating a destination terminal, as a search key, and acquires change information "None" of the destination terminal.

0186 Next, the state change unit 53c, based on the terminal ID "01aa" of the request source terminal (terminal 10aa) and the terminal ID "01cb" of the destination terminal (terminal 10cb), in the terminal management table (See FIG. 11), changes field parts of communication states of records including the above-described terminal ID "01aa" and the terminal ID "01cb", respectively (step S63-5). In this case, the field part of communication state of a record including the terminal ID "01aa" of the terminal management table is changed to "Accepted" based on the acquired change information of the request source terminal. Similarly, the field part of communication state of a record including the terminal ID "01cb" of the terminal management table is changed to "None" based on the acquired change information of the destination terminal. Furthermore, the decision unit 61 decides a response indicating sending information indicating that request of communication with the destination terminal (terminal 10cb) is cancelled in order to perform call control between the request source terminal (terminal 10aa) and the destination terminal (terminal 10cb), to the request source terminal (terminal 10aa) and the destination terminal (terminal 10cb) (See step S65-1 and step S65-2).

0187 When the communication state of the request source terminal (terminal 10aa) is not determined, in step S63-3, to be the same as the pre-change state information or when the communication state of the destination terminal (terminal 10bb) is not determined to be the same as the pre-change state information (step S63-3: NO), the state change unit 53c, in the terminal management table (See FIG. 11), does not change the field part of communication state of a record including the terminal ID of the request source terminal and the terminal ID of the destination terminal. In the embodiment, because the communication state "Accepted" of the destination terminal (terminal 10db) is different from the pre-change state "Ringing" of the destination terminal, the field part of communication state of a record including the terminal ID "01db" of the destination terminal (terminal 10db) is not changed. This is because a communication request has already been allowed by the destination terminal (terminal 10db), and the communication request cannot be cancelled. In this case, the decision unit 61 decides a response indicating generating an error message indicating that the communication request with the destination terminal (terminal 10db) cannot be cancelled, and sending the message to the request source terminal (terminal 10aa). Subsequently, the transmission/reception unit 51 sends the error message to the destination terminal (terminal 10aa), and thereby the process ends.

0188 Next, returning to FIG. 28, a process in a case where a response indicating sending information indicating that a communication request is cancelled to the request source terminal (terminal 10aa) and the destination terminal (terminal 10cb) is decided by the decision unit 61 will be described. At first, the session management unit 57, in the session management table (See FIG. 13) in the non-volatile storage unit 5000, removes the terminal ID "01cb" of the destination terminal (terminal 10cb) from a field part of destination terminal of a record including the session ID "se1" (step S64).

0189 Next, the transmission/reception unit 51 sends cancel information including a session ID "SE1" and the information indicating that the communication request with the destination terminal (terminal 10cb) is cancelled to the request source terminal (terminal 10aa) and the destination terminal (terminal 10cb) (steps S65-1, S65-2). Therefore, the request source terminal (terminal 10aa) and the destination terminal (terminal 10cb) perceive that the request for starting communication between the request source terminal (terminal 10aa) and the destination terminal (terminal 10cb) is cancelled.

0190 Subsequently, using FIG. 29, a process in which the relay apparatus 30e starts relaying speech data to be communicated between the request source terminal (terminal 10aa) and the destination terminal (terminal 10db) will be described. In FIG. 29, a process that all various pieces of management information are sent and received by a session "sei" for management information is illustrated.

0191 At first, the request source terminal (terminal 10aa), at a predetermined timing after connecting to the relay apparatus 30e (See step S53), by the transmission/reception unit 11, sends relay request information including the terminal ID "01aa" of the request source terminal (terminal 10aa), the session ID "se1", and change request information "Join" indicating requesting for starting relaying, to the management system 50 (step S71-1).

0192 When the transmission/reception unit 51 of the management system 50 receives the relay request information, the state management unit 53, based on the terminal ID "01aa" of the request source terminal (terminal 10aa) included in the relay request information, in the terminal management table (See FIG. 11), changes a field part of communication state of a record including the above-described terminal ID "01aa" (step S72-1).

0193 Here, the process in step S72-1 will be described in detail with reference to FIG. 30. At first, the state acquisition unit 53b of the state management unit 53, illustrated in FIG. 5, acquires a communication state of a terminal managed in the terminal management DB (step S72-1-1). In this case, change request information "Join" received by the transmission/reception unit 51 is determined in advance not to be specific change request information by the change request information determination unit 63. Based on the determination, the state acquisition unit 53 acquires only a communication state of the request source terminal (terminal 10aa). In this case, the state acquisition unit 53b searches the terminal management table (See FIG. 11) with the terminal ID "01aa" of the request source terminal (terminal 10aa) as a search key, and acquires a communication state "Accepted" of the request source terminal (terminal 10aa) that has requested for starting relaying.

0194 Next, the state change unit 53c of the state management unit 53 acquires pre-change state information corresponding to the change request information "Join" (step S72-1-2). In this case, state change unit 53c searches the state change management table (See FIG. 16) with the change request information "Join" as a search key, and acquires pre-change state information "Accepted".

0195 Next, the state change unit 53c compares the communication state acquired by the state acquisition unit 53b with the pre-change state information acquired by the state change unit 53c, and determines whether they are the same (step S72-1-3). In this case, the state change unit 53c compares the communication state "Accepted" of the request source terminal (terminal 10aa) acquired by the state acquisition unit 53b with the pre-change state information "Accepted" acquired by the state change unit 53c, and determines whether they are the same.

0196 When the communication state of the request source terminal is determined to be the same as the pre-change state information in step S72-1-3 (step S72-1-3: YES), the state change unit 53c acquires change information corresponding to the change request information "Join" (step S72-1-4). In this case, the state change unit 53c searches the state change management table (See FIG. 16) with the change request information "Join" as a search key, and acquires change information corresponding to the change request information "Join" (step S72-1-4). In this case, the state change unit 53c searches the state change management table (See FIG. 16) with the change request information "Join" as a search key, and acquires the change information "Busy".

0197 Next, the state change unit 53c, based on the terminal ID "01aa" of the request source terminal (terminal 10aa), in the terminal management table (See FIG. 11), changes a field part of communication state of a record including the above-described terminal ID "01aa" (step S72-1-5). In this case, the field part of communication state of the record including the terminal ID "01aa" of the terminal management table is changed to "Busy" based on the acquired change information. Furthermore, the decision unit 61 decides a response indicating sending a request for starting relaying in order to perform call control of communication to the relay apparatus 30e (See FIG. 73-1).

0198 When the communication state of the request source terminal is not determined to be the same as the pre-change state information in step S72-1-3 (step S72-1-3: NO), the state change unit 53c, in the terminal management table (See FIG. 11), does not change the field part of communication state of the record including the above-described terminal ID "01aa". In this case, the decision unit 61 decides a response indicating generating a predetermined error message and sending the message to the request source terminal (terminal 10aa). Subsequently, the transmission/reception unit 51 sends the error message to the request source terminal (terminal 10aa), and thereby the process ends.

0199 Next, returning to FIG. 29, the process of the case where the response indicating sending the request for starting relaying to the relay apparatus 30e is decided by the decision unit 61 will be described. At first, the management system 50 sends relay start request information including the terminal ID "01aa" of the request source terminal (terminal 10aa), and the session ID "se1" to the relay apparatus 30e (step S73-1). When the relay start request information is received, the relay apparatus 30e, sends relay start permission information including notification information "OK" indicating permitting starting relaying to the management system 50 (step S74-1). When the response is received, the transmission/reception unit 51 of the management system 50 sends the relay start permission information to the request source terminal (terminal 10aa) (step S75-1). Therefore, a session for speech data "sed" is established between the request source terminal (terminal 10aa) and the relay apparatus 30a (step S76-1).

0200 On the other hand, the destination terminal (terminal 10db), at a predetermined timing after connecting to the relay apparatus 30e (See step S54), by the transmission/reception unit 11, sends relay request information including the terminal ID "01db" of the destination terminal (terminal 10db), the session ID "se1", and the change request information "Join" indicating requesting for starting relaying, to the management system 50 (step S71-2).

0201 Subsequently, the same processes as steps S72-1, S73-1, S74-1, S75-1 are performed by the management system 50 and the relay apparatus 30e, and thereby a session for speech data "sed" is established between the destination terminal (terminal 10db) and the relay apparatus 30e (steps S72-2, S73-2, S74-2, S75-2, S76-2). When the session for speech data "sed" between the request source terminal (terminal 10aa) and the relay apparatus 30e and the session for speech data "sed" between the destination terminal (terminal 10aa) and the relay apparatus 30e are established, a relay apparatus 30a can relay three categories of image data of low resolution, intermediate resolution and high resolution and sound data between the terminals (10aa, 10db). Therefore, the terminals (10aa, 10db) can start a video conference.

0202 Subsequently, using FIG. 4 and FIG. 31, a process of sending/receiving image data and sound data in order to make a call of a video conference between the request source terminal (terminal 10aa) and the destination terminal (terminal 10db) will be described. Because for a process in one direction of sending image data and voice data from the terminal 10aa to the terminal 10db, and for a process in an opposite direction of sending image data and voice data from the terminal 10db to the terminal 10aa, the processes of sending/receiving image data and voice data and the processes of detecting delay time, which will be described later, or the like are the same, the above-described communication in one direction will be described, and the communication in an opposite direction will be omitted.

0203 At first, the request source terminal (terminal 10aa) sends, via the session for image/sound data "sed", image data of an object captured by the imaging unit 14, and sound data of sound input at the sound input unit 15a, to the relay apparatus 30e via the communication network 2 from the transmission/reception unit 11 (step S81). In the embodiment, image data of high image quality including three data of low resolution, intermediate resolution and high resolution, as illustrated in FIG. 20, and sound data are sent. Accordingly, at the relay apparatus 30e, image data of the above-described three resolutions and sound data are received at the transmission/reception unit 31.

0204 Then, the data quality confirmation unit 33 searches the change quality management table (See FIG. 7) with an IP address of the destination terminal (terminal 10db) "1.3.2.4" as a search key, and extracts a corresponding image quality of image data to be relayed, and thereby a quality of image of the image data to be relayed is confirmed (step S82). In the embodiment, because the image quality of an image of the confirmed image data is "high image quality" and is the same as an image quality of image data received by the transmission/reception unit 31, the relay apparatus 30a, by the session for image/sound data "sed", forwards the image data of the image quality as it is and the sound data of the sound quality as it is to the destination terminal (terminal 10db) (step S83). Therefore, the destination terminal (terminal 10db) receives image data and sound data at the transmission/reception unit 11, the image display control unit 16 displays an image based on the above-described image data on the display device 120, and the sound output unit 15b can output sound based on the sound data.

0205 Next, the delay detection unit 18 of the terminal 10db detects a delay time of reception of image data received at the transmission/reception unit 11 at every fixed time (e.g. every one second) (step S84). In the embodiment, the explanation will be continued for the case where the delay time is 200 (ms).

0206 The transmission/reception unit 11 of the destination terminal (terminal 10db) sends delay information indicating a delay time of "200 (ms)" to the management system 50 via the communication network 2 by the session "sei" for management information (step S85). Therefore, the management system 50 grasps the delay time, and can grasp the IP address "1.3.2.4" of the terminal 10db that is a transmission source of the delay information.

0207 Next, the delay time management unit 60 of the management system 50 searches the terminal management table (See FIG. 11) with the IP address "1.3.2.4" of the above-described destination terminal (terminal 10db) as a search key, and extracts the corresponding terminal ID "01db". Furthermore, the delay time management unit 60 stores the delay time "200 (ms)" indicated by the above-described delay information into a field part of delay time in a record of the above-described terminal ID "01db" in the session management table (See FIG. 13) and manages (step S86).

0208 Next, the quality decision unit 58 searches the quality management table (See FIG. 14) with the above-described delay time "200 (ms)" as a search key, and extracts a corresponding image quality of image data "intermediate image quality", and thereby decides the image quality to "intermediate image quality" (step S87).

0209 Next, the transmission/reception unit 51 searches the relay apparatus management table (See FIG. 9) with a relay apparatus ID "111e", which is associated with the above-described terminal ID "01db" in the session management table (See FIG. 13), as a search key, and extracts an IP address "1.1.1.3" of a corresponding relay apparatus 30e (step S88).

0210 Then, the transmission/reception unit 51 sends quality information indicating the image quality "intermediate image quality" of image data determined in above-described step S87 to the relay apparatus 30e via the communication network 2 by the session "sei" for management information (step S89). This quality information includes the IP address "1.3.2.4" of the destination terminal (terminal 10db) used as a search key in above-described step S86. Therefore, in the relay apparatus 30e, the change quality management unit 34 stores an IP address "1.3.2.4" of a terminal 10 of transmission destination (Here, the destination terminal (terminal 10db)) and an image quality "intermediate image quality" of image data to be relayed in the change quality management table (See FIG. 7), associated with each other, and manages (step S90).

0211 Next, the terminal 10aa, continuously in the same way as above-described step S81, by the session for image/sound data "sed", sends image data of high image quality including three data of low resolution, intermediate resolution and high resolution and sound data to the relay apparatus 30e (step S91). Therefore, in the relay apparatus 30e, in the same way as above-described step S82, the data quality confirmation unit 33 searches the change quality management table (See FIG. 7) with the IP address "1.3.2.4" of the destination terminal (terminal 10db) as a search key, and extracts the corresponding image quality "intermediate image quality" of image data to be relayed, and thereby confirms the image quality of image data to be relayed (step S92).

0212 In the embodiment, because the confirmed image quality of image data is "intermediate image quality" and is lower than the image quality "high image quality" of the image data received by the transmission/reception unit 31, the data quality change unit 35 reduces the image quality of image data from "high image quality" to "intermediate image quality", and thereby changes the image quality of image data (step S93). Then, the transmission/reception unit 31 sends, by the session for image/sound data "sed", the image data, image quality of which is changed from that of the above-described image data to "intermediate image quality", and sound data of sound, sound quality of which is not changed, to the terminal 10db via the communication network 2 (step S94). In this way, when a delay of reception occurs at the destination terminal (terminal 10db) that receives image data, the relay apparatus 30e changes image quality so as not to provide a feeling of strangeness to participants in a video conference.

0213 Subsequently, using FIG. 32, a process where after a session for speech data is established between a request source terminal (terminal 10aa) and a destination terminal (terminal 10db), a destination terminal (terminal 10cb) that participates in the session for speech data will be described. In FIG. 32, processes where all the various pieces of management information are sent/received by the session for management information "sei" are illustrated.

At first, a user of the request source terminal (terminal 10aa) holds down the operation button 108 illustrated in FIG. 2, thereby information indicating requesting for notifying the destination terminal 10cb of a session ID for the destination terminal (terminal 10cb) to participate in the session for speech data "sed" is accepted (step S101). Next, the transmission/reception unit 11 of the request source terminal (terminal 10aa) sends session ID notification request information, including the terminal ID "01aa" of the request source terminal (10aa), the terminal ID "01cb" of the destination terminal (10cb), and the session ID "se1", to the management system 50 (step S102). When the speech management system 50 receives the session ID notification request information, the transmission/reception unit 51 sends session ID notification information, including the terminal ID "01aa" of the request source terminal (terminal 10aa) and the session ID "se1", to the terminal 10cb (step S103).

0214 The destination terminal (terminal 10cb), when receiving the above-described session ID notification information, accepts a request for participating in the session for speech data "sed" (step S104). Here, a user of the destination terminal (terminal 10cb) holds down the operation button 108 illustrated in FIG. 2, and thereby a request for participating in the session for speech data is accepted. Therefore, the transmission/reception unit 11 of the destination terminal (terminal 10cb) sends session participation request information, including the terminal ID "01cb" of the destination terminal (terminal 10cb), change request information "Call" indicating requesting participation in the session for speech data, and the session ID "se1" to the management system 50 (step S105).

0215 When the session participation request information is received, the state management unit 53 of the management system 50, based on the terminal ID "01cb" of a terminal (terminal 10cb) that requests participation included in the session participation request information, changes a field part of communication state in a record including the above-described terminal ID "01cb" in the terminal management table (See FIG. 11) (step S106).

0216 Here, using FIG. 33, the process in step S106 will be described in detail. At first, the state acquisition unit 53b of the state management unit 53, illustrated in FIG. 5, acquires a state of communication of a terminal managed in the terminal management DB (step S106-1). In this case, change request information "Call" received by the transmission/reception unit 51 is determined in advance not to be specific change request information by the change request information determination unit 63. Based on the determination, the state acquisition unit 53 acquires only a communication state of the destination terminal (terminal 10cb). In this case, the state acquisition unit 53b searches the terminal management table (See FIG. 11) with the terminal ID "01cb" of the destination terminal (terminal 10cb) as a search key, and acquires a communication state "None" of the terminal (terminal 10cb) that request participation.

0217 Next, the state change unit 53c of the state management unit 53 acquires pre-change state information of the destination terminal corresponding to the change request information "Call" (step S106-2). In this case, the state change unit 53c searches the state change management table (See FIG. 16) with the change request information "Call" as a search key, and acquires pre-change state information "None".

0218 Next, the state change unit 53c compares the communication state acquired by the state acquisition unit 53b with the pre-change state information acquired by the state change unit 53c, and determines whether they are the same (step S106-3). In this case, the state change unit 53c compares the communication state "None" of the terminal (terminal 10cb) acquired by the state acquisition unit 53b with the pre-change state information "None" acquired by the state change unit 53c, and determines whether they are the same.

0219 When the communication state of the destination terminal is determined to be the same as the pre-change state information in step S106-3 (step S106-3: YES), the state change unit 53c acquires change information corresponding to the change request information "Call" (step S106-4). In this case, the state change unit 53c searches the state change management table (See FIG. 16) with the change request information "Call" as a search key, and acquires change information "Accepted".

0220 Next, the state change unit 53c, based on the terminal ID "01cb" of the terminal (terminal 10cb) that requests participation, in the terminal management table (See FIG. 11), changes a field part of communication state in a record including the above-described terminal ID "01cb" (step S106-5). In this case, a field part of communication state in a record including the terminal ID "01cb" of the terminal management table is changed to "Accepted" based on the acquired change information of the destination terminal. Furthermore, the decision unit 61 sends a response with information indicating that a request for participation is permitted in order to perform call control for a communication among the request source terminal (terminal 10aa) and the destination terminals (terminals 10cb, 10db) to the request source terminal (terminal 10aa) and the destination terminals (terminals 10bb, 10db), respectively (step S107-1, S107-2, S107-3).

0221 When the communication state of the terminal that requests participation is not determined to be the same as the pre-change state information in step S106-3 (step S106-3: NO), the state change unit 53c, in the terminal management table (See FIG. 11), does not change the field part of communication state in the record including the above-described terminal ID "01cb". In this case, the decision unit decides on a response indicating generating a predetermined error message, and sends the message to the destination terminal (terminal 10cb). Subsequently, the transmission/reception unit 51 sends the error message to the destination terminal (terminal 10cb), and the process ends.

0222 Next, returning to FIG. 32, a process in a case where a response indicating sending information indicating permitting a request for participation to the request source terminal (terminal 10aa) and the destination terminal (terminals 10bb, 10cb), respectively, is decided by the decision unit 61 will be described. At first, the session management unit 57, in the session management table (See FIG. 13) in the non-volatile storage unit 5000, adds the terminal ID "01cb" of the terminal that request for participation in a field part of a destination terminal in a record including the session ID "se1".

0223 Next, the transmission/reception unit 51 of the management system 50 sends participation notification including the terminal ID "01cb" of the terminal (terminal 10cb) that participates in the session for speech data "sed", and the session ID "se1" to the request source terminal (terminal 10aa) that has already started the session for speech data "sed" and the destination terminal (terminal 10db) (steps S107-1, S107-2). Therefore, the request source terminal (terminal 10aa) and the destination terminal (terminal 10db) can perceive that the destination terminal (terminal 10db) participates in the session for speech data. Moreover, the transmission/reception unit 51 of the management system 50 sends participation permission notification, including a session ID "se1" that participates in the session for speech data "sed" and relay apparatus connection information used for connecting to the relay apparatus 30e, to the destination terminal (terminal 10cb) that starts the session for speech data "sed" (step S107-3).

0224 The terminal 10cb, when receiving the participation permission notification, by the transmission/reception unit 11, the session ID "se1" and the relay apparatus connection information included in the participation permission notification are sent to the relay apparatus 30e, and thereby is connected to the relay apparatus 30e (step S108). Furthermore, the terminal 10cb, at a predetermined timing after connected to the relay apparatus, sends relay request information, including the terminal ID "01cb" of the terminal 10cb, the session ID "se1", and the change request information "Join" indicating requesting start of relaying, to the management system 50 by the transmission/reception unit 11. Subsequently, the same processes as steps S72-1, S73-1, S74-1, S75-1 are performed by the management system 50 and the relay apparatus 30e, and thereby a session for speech data "sed" is established between the terminal 10cb and the relay apparatus 30e. When the session for speech data "sed" is established, the relay apparatus 30e can relay three image data of the low resolution, the intermediate resolution and the high resolution and voice data among the terminals (10aa, 10cb, 10db). Therefore, the terminals (10aa, 10cb, 10db) can start video conference.

0225 Subsequently, using FIG. 34, the process in a case where after the session for speech data is established among the request source terminal (terminal 10aa) and the destination terminals (terminals 10cb, 10db), the request source terminal (terminal 10aa) exits from the session for speech data will be described. In FIG. 29, a process in which various pieces of management information are all sent/received by the session for management information "sei" is illustrated.

0226 At first, a user of the request source terminal (terminal 10aa) holds down the operation button 108 illustrated in FIG. 2, and thereby a request for exiting from the session for speech data is accepted (step S111). Then, the transmission/reception unit 11 of the request source terminal (terminal 10aa) sends session exit request information, including the terminal ID "01aa" of the request source terminal (terminal 10aa), change request information "Leave" indicating requesting for exiting from the session for speech data, and the session ID "se1", to the management system 50 (step S112).

0227 When the session exit request information is received, the state management unit 53 of the management system 50, based on the terminal ID "01aa" of the request source terminal (terminal 10aa) included in the session exit request information, in the terminal management table (See FIG. 11), changes a field part of communication state in a record including the above-described terminal ID "01aa" (step S113).

0228 Here, using FIG. 30, the process in step S113 will be described in detail. At first, the state acquisition unit 53b of the state management unit 53, illustrated in FIG. 5, acquires a state of communication of a terminal managed in the terminal management DB (step S113-1). In this case, the change request information "Leave" received by the transmission/reception unit 51 is determined in advance not to be specific change request information by the change request information determination unit 63. Based on the determination, the state acquisition unit 53 acquires only communication state of the request source terminal (terminal 10aa). In this case, the state acquisition unit 53b searches the terminal management table (See FIG. 11) with the terminal ID "01aa" of the request source terminal (terminal 10aa) as a search key, and acquires a communication state "Busy" of the request source terminal (terminal 10aa).

0229 Next, the state change unit 53c of the state management unit 53 acquires pre-change state information corresponding to the change request information "Leave" (step S113-2). In this case, the state change unit 53c searches the state change management table (See FIG. 16) with the change request information "Leave" as a search key, and acquires the pre-change state information "Busy".

Next, the state change unit 53c compares the communication state acquired by the state acquisition unit 53b with the pre-change state information acquired by the state change unit 53c, and determines whether they are the same (step S113-3). In this case, the state change unit 53c compares the communication state "Busy" of the request source terminal (terminal 10aa) acquired by the state acquisition unit 53b with the pre-change state information "Busy" acquired by the state change unit 53c, and determines whether they are the same.

0230 When the communication state of the terminal is determined to be the same as the pre-change state information in step S113-3 (step S113-3: YES), the state change unit 53c acquires change information corresponding to the change request information "Leave" (step S113-4). In this case, the state change unit 53c searches the state change management table (See FIG. 16) with the change request information "Leave" as a search key, and acquires change information "None".

0231 Next, the state change unit 53c, based on the terminal ID "01aa" of the request source terminal (terminal 10aa), in the terminal management table (See FIG. 11), changes a field part of communication state in a record including the above-described terminal ID "01aa" (step S113-5). In this case, the field part of communication state in the record including the terminal ID "01aa" of the terminal management table is changed to "None" based on the acquired change information. Furthermore, the decision unit 61 decides on a response indicating sending information indicating that the exit is permitted in order to perform call control to the respective request source terminals.

0232 When the communication state of the request source terminal is not determined to be the same as the pre-change state information in step S113-3 (step S113-3: NO), the state change unit 53c, in the terminal management table (See FIG. 11), does not change the field part of communication state in the record including the above-described terminal ID "01aa". In this case, the decision unit 61 decides on a response indicating sending a predetermined error message to the request source terminal (terminal 10aa). Subsequently, the transmission/reception unit 51 sends the error message to the request source terminal (terminal 10aa), and thereby the process ends.

0233 Next, returning to FIG. 34, when the response indicating sending the information indicating that the exit is permitted to the respective request source terminals is decided by the decision unit 61, a process after the decision will be described. At first, the session management unit 57, in the session management table (See FIG. 13) in the non-volatile storage unit 5000, removes a terminal ID "01aa" of the request source terminal (terminal 10aa) from a field part of request source terminal in a record including the session ID "se1" (step S114). The management system 50 sends the terminal ID "01aa" of the request source terminal (terminal 10aa) and a notification indicating requesting an exit of a session including the session ID "se1" to the relay apparatus 30e (step S115). Therefore, the relay apparatus 30e stops the session for speech data with the request source terminal (terminal 10aa), and cuts the connection with the request source terminal (terminal 10aa). Subsequently, the relay apparatus 30e sends the terminal ID "01aa" of the request source terminal (terminal 10aa) and a notification indicating that the request for exit is permitted including the session ID "se1" to the management system 50 (step S116).

0234 When the management system 50 receives the notification indicating permitting the request for exit, the transmission/reception unit 51 sends session exit permission information including the terminal ID "01aa" of the request source terminal (terminal 10aa), the change request information "Leave" the session ID "se1" and notification information indicating permitting request for exit "OK" to the request source terminal (terminal 10aa) (step S117). When receiving the session exit permission information, the terminal 10aa accepts a request for power OFF by holding down the power switch 109, illustrated in FIG. 2 (step S118). When the request for power OFF is accepted the transmission/reception unit 11 sends cut request information including the terminal ID "01aa" of the terminal 10aa and notification information indicating cutting the connection with the management system 50 to the management system 50 (step S119).

0235 When the transmission/reception unit 51 of the management system 50 receives the cut request information, the state management unit 53, based on the terminal ID "01aa" of the request source terminal (terminal 10aa) included in the cut request information, in the terminal management table (See FIG. 11), removes data in a field part of communication state in a record including the above-described terminal ID "01aa" (step S120). Subsequently, the transmission/reception unit 51 sends cut permission information indicating permitting the request for cutting to the request source terminal (terminal 10aa) (step S121). Therefore, the management system 50 stops a session for management data with the request source terminal (terminal 10aa), and cuts the connection with the request source terminal (terminal 10aa).

0236 When receiving the cut permission information, the request source terminal (terminal 10aa) executes the power OFF, and the process ends (step S122). The terminal 10cb and the terminal 10db, in the same way as the processes in steps S111 through S121 for the terminal 10aa, can exit from the session for speech data "sed", to end speech among terminals.

0237 Subsequently, using FIGs. 44 through 48, a case where a user "a" of the request source terminal (terminal 10aa) performs a supplemental approval request for a destination list from a PC 20a, instead of the terminal 10aa, to the request destination terminal (terminal 10dc) via the transmission terminal management system 80 will be described. 0238

Fig. 44 is a sequence diagram for performing a supplemental approval request from a PC. FIG. 45 is a conceptual diagram depicting a destination list. FIG. 46 is a conceptual diagram depicting a supplemental request acceptance screen.

0239 As illustrated in FIG. 44, at first, the user "a" of the PC 20a inputs a URL from a Web browser in PC 20a, and thereby the PC 20a accesses a Web application that the transmission terminal management system 80 provides (step S61). Therefore, a Web server function of the transmission/reception unit 81 of the transmission terminal management system 80 discloses a login screen to the PC 20a, and thereby urging the user "a" to input the terminal ID of the request source terminal (terminal 10aa) and a password (step S62). In response to the operation, when the user "a" inputs the terminal ID of the request source terminal (terminal 10aa) and a password, login information that is the terminal ID of the request source terminal and the password is sent to the transmission terminal management system 80 from the PC 20a (step S63).

0240 Next, the terminal authentication unit 82 of the transmission terminal management system 80 accesses the transmission management system 50 and searches the terminal authentication management DB 5002 (See FIG. 4) stored in the non-volatile storage unit 5000, thereby performing authentication whether the terminal 10aa of the user "a" of the PC 20a is a valid terminal in the transmission system 1' according to determination whether a terminal ID and a password that are the same pair of the terminal ID and the password of the request source terminal are managed (step S64). When the terminal 10aa is determined to be a valid terminal by the authentication, the extraction unit 83 continuously searches the destination list management DB 5004 (See FIG. 4) stored in the non-volatile storage unit 5000 of the transmission management system 50 based on the terminal ID "01aa" of the request source terminal, and thereby extracts a terminal ID of a corresponding destination terminal (step S65).

0241 Next, the destination list creation unit 84, based on the terminal ID extracted in above-described step S65, searches the terminal management DB 5003 (See FIG. 4), to extract a corresponding terminal name, and thereby creates an HTML of the destination list screen illustrated in FIG. 45 (step S66). Then, the Web server function of the transmission/reception unit 81 discloses a destination list screen to the PC 20a (step S67). In the destination list screen, a destination name of a destination terminal, a terminal ID of the destination terminal, and an operation region in which a destination name of each destination terminal on the destination list is edited, or a destination name and a terminal ID of a destination terminal are removed from the destination list are displayed. Moreover, at an upper right position of the destination list screen, a "destination addition" button to hold down when the user desires to add a destination terminal is displayed.

0242 Next, when the user "a" holds down the "destination addition" button in the destination list screen in the PC 20a, by the Web browser function of the PC 20a, an additional request acceptance screen as illustrated in FIG. 46 is displayed, and thereby accepting a supplemental approval request (step S68). The additional request acceptance screen is, as illustrated in FIG. 46, displayed on the destination list.

0243 Next, when the user "a" inputs a terminal ID or a terminal name of a request source terminal to be added to the destination list in the additional request acceptance screen and holds down a button of "send supplemental request", the PC 20a sends supplemental approval request information to the transmission terminal management system 80 (step S69). Therefore, a data processing function of the transmission/reception unit 81 of the transmission terminal management system 80 interprets an operation from the user "a" and sends to the transmission management system 50 supplemental approval request information to the destination list in place of the terminal 10aa (step S70).

0244 Subsequently, using FIG. 47 and FIG. 48, a case where a user of a request destination terminal 10dc performs supplemental request response using a PC 20a will be described. Here, a case where a user "d", immediately after starting a PC 20d, confirms whether to have received a supplemental approval request from another terminal 10 or another PC 20 will be described. This case is an example, and the confirmation whether to be in receipt of a supplemental approval request may be performed by the user "d" periodically or arbitrarily, after the user "d" starts the PC 20d.

0245 FIG. 47 is a sequence diagram of a case where the user of the request destination terminal performs a supplemental request response using a PC. FIG. 48 is a conceptual diagram depicting a supplemental approval request screen.

0246 The user "d" of the PC 20d inputs a URL from a Web browser in the PC 20d, and thereby the PC 20d accesses a Web application provided by the transmission terminal management system 80 (step S81). Therefore, a Web server function of the transmission/reception unit 81 of the transmission terminal management system 80 discloses a login screen to the PC 20d, and thereby urging the user "d" to input the terminal ID of the request source terminal (terminal 10dc) and a password (step S82). In response to this operation, when the user "d" inputs the terminal ID of the request source terminal (terminal 10dc) and the password, login information that is the terminal ID of the request source terminal and the password is sent from the PC 20d to the transmission terminal management system 80 (step S83).

0247 Next, the terminal authentication unit 82 of the transmission terminal management system 80 accesses the transmission management system 50 and searches the terminal authentication management DB 5002 (See FIG. 4) stored in the non-volatile storage unit 5000, and thereby performing authentication whether the terminal 10dc of the user "d" of the PC 20d is a valid terminal in the transmission system 1' according to determination whether a terminal ID and a password that are the same pair of the terminal ID and the password of the request source terminal are managed (step S84).

0248 The user "d" of the request destination terminal 10dc makes a request for a supplemental approval request screen (step S85). Therefore, in the transmission terminal management system 80, the extraction unit 83, based on the terminal ID "01dc" of the request destination terminal (terminal 10dc), searches the supplemental request management DB 5010 (See FIG. 4), and extracts a terminal ID "01aa" of a corresponding request source terminal (step S86). The extraction unit 83 may further search the terminal management DB 5003 (See FIG. 4) based on the terminal ID "01aa" of the request source terminal extracted in step S86, and thereby extract a corresponding destination name.

0249 Next, the supplemental approval request screen creation unit 85, based on the terminal ID "01aa" of the request source terminal (terminal 10aa) extracted in above-described step S86, creates an HTML of the supplemental approval request screen (step S87). Then, the Web server function of the transmission/reception unit 81 discloses a supplemental approval request screen as illustrated in FIG. 25 to the PC 20d (step S88).

0250 Next, when the user "d" selects in the supplemental approval request screen, as illustrated in FIG. 48, permit, reject or suspend, supplemental request response information indicating permit, reject or suspend is sent from the PC 20d to the transmission terminal management system 80 (step S89). Then, the transmission/reception unit 81 of the transmission terminal management system 80 interprets an operation from the user "d" according to a function of the data processing unit, and sends to the transmission management system 50 supplemental request response information from the transmission/reception terminal 81 in place of the request destination terminal (terminal 10dc) (step S70).

0251 Next, using FIG. 49, a (first) process where in the transmission system 1, an external terminal such as the user PC terminal 20a, or 20b accesses a protection resource such as a destination list management table will be described.

0252 A user of an external terminal operates the operation button 108 illustrated in FIG. 2, and thereby the operation input acceptance unit 12 illustrated in FIG. 4 accepts a request for access token; by using the request for access token as an opportunity, the request for access token is sent from the transmission/reception unit 11 to the management system 50 through the communication network 2 (step S4902). The request for access token includes a CID and a password.

0253 The sorting unit 82 of the load distribution apparatus 90 determines a sorting destination of the request for access token received via the transmission/reception unit 81 (step S4904).

0254 The sorting unit 82 of the load distribution apparatus 90, as a result of determination for a sorting destination of the request for access token, forwards the request for access token to the authentication unit 52 of the management system 50 (step S4906).

0255 The authentication unit 52 of the management system 50 searches the client authentication management table (not shown) in the non-volatile storage unit 5000 with the CID and the password included in the request for access token received via the transmission/reception unit 81 as search keys, and determines whether the same CID and password are managed in the client authentication management DB (not shown), and thereby performing the client authentication (step S4908).

0256 The authentication unit 52 of the management system 50, when the authentication is successful, issues an access token, and sends the access token to an external terminal (steps S4910, S4912). However, the authentication unit 52 of the management system 50, when the client authentication is successful for the first time, issues a refresh token, and sends the refresh token to the external terminal. For the refresh token, a relatively long validity period is set compared with the access token.

0257 Next, a user of the external terminal operates the operation button 108 illustrated in FIG. 2, and thereby the operation input acceptance unit 12 illustrated in FIG. 4 accepts a URL request for protection resource; by using the URL request for protection resource as an opportunity, the URL request for protection resource is sent from the transmission/reception unit 11 to the management system 50 via the communication network 2 (step S4914). The URL request for protection resource includes an access token. The access tokens are issued in step S4908 by the authentication unit 52 of the management system 50. However, when a refresh token is issued in step S4908 by the authentication unit 52 of the management system 50, the URL request for protection resource includes a refresh token.

0258 The sorting unit 82 of the load distribution apparatus 90 determines a sorting destination of the URL request for protection resource received via the transmission/reception unit 81 (step S4916).

0259 The sorting unit 82 of the load distribution apparatus 90, as a result of determination for a sorting destination of the URL request for protection resource, forwards the URL request for protection resource to the authentication unit 52 of the management system 50 (step S4918).

0260 The authentication unit 52 of the management system 50 verifies validity of the access token or the refresh token included in the URL request for protection resource received via the transmission/reception unit 81 (step S4920).

0261 The authentication unit 52 of the management system 50, when the verification of validity of the access token or the refresh token is successful, verifies authority of the access token or the refresh token (step S4922).

0262 The authentication unit 52 of the management system 50, when the verification of authority of the access token or the refresh token is successful, sends URL information of a protection resource such as "https://example.com/rosters" to an external terminal (step S4924, S4926). However, the authentication unit 52 of the management system 50, when the verification of authority of the refresh token is successful, issues an access token, and sends the access token along with the URL information of the protection resource such as "https://example.com/rosters" to the external terminal.

0263 Next, the user of the external terminal operates the operation button 108 illustrated in FIG. 2, and thereby the operation input acceptance unit 12 illustrated in FIG. 4 accepts an access request to protection resource, by using the access request to protection resource as an opportunity, the access request to protection resource is sent from the transmission/reception unit 11 to a protection resource (https://example.com/rosters/123) of the management system 50 via the communication network 2 (step S4228). Here, "123" indicates an ID of an account. The access request to protection resource includes an access token. The access tokens are issued by the authentication unit 52 of the management system 50 in step S4908, or issued in step S4922 when the verification of validity of the refresh token is successful by the authentication unit 52 of the management system 50.

0264 The sorting unit 82 of the load distribution apparatus 90 determines a sorting destination of the access request to protection resource received via the transmission/reception unit 81 (step S4930).

0265 The sorting unit 82 of the load distribution apparatus 90, as a result of determination for a sorting destination of the access request to protection resource, forwards the access request to protection resource to the allowance determination unit 64 of the management system 50 (step S4932).

0266 The allowance determination unit 64 of the management system 50 verifies validity of the access token included in the access request to protection resource received via the transmission/reception unit 81 (step S4934).

0267 The allowance determination unit 64 of the management system 50, when the verification of validity of the access token is successful, verifies authority of the access token (step S4936).

0268 The allowance determination unit 64 of the management system 50, when the verification of authority of the access token is successful, performs an access request to the protection resource (step S4938).

0269 The access request to protection resource is performed by the allowance determination unit 64 of the management system 50, and thereby the protection resource is disclosed to an external terminal (steps S4940, S4942 and S4944).

0270 Next, using FIG. 50, a (second) process where in the transmission system 1, an external terminal accessing a protection resource will be described.

0271 Next, a user of the external terminal operates the operation button 108 illustrated in FIG. 2, and thereby the operation input acceptance unit 12 illustrated in FIG. 4 accepts a request for access token; by using the request for access token as an opportunity, the request for access token is sent from the transmission/reception unit 11 to the management system 50 via the communication network 2 (step S5002). The request for access token includes a user ID (user=555), and a password.

0272 The sorting unit 82 of the load distribution apparatus 90 determines a sorting destination of the request for access token received via the transmission/reception unit 81 (step S5004).

0273 The sorting unit 82 of the load distribution apparatus 90, as a result of determination for a sorting destination of the request for access token, forwards the request for access token to the authentication unit 52 of the management system 50 (step S5006).

0274 The authentication unit 52 of the management system 50 searches the user authentication management table (not shown) in the non-volatile storage unit 5000 with the user ID and the password included in the request for access token received via the transmission/reception unit 81 as search keys, and determines whether the same user ID and password are managed in the user authentication management DB (not shown), and thereby performing the user authentication (step S5008).

0275 The authentication unit 52 of the management system 50, when the authentication is successful, issues an access token, and sends the access token to an external terminal (steps S5010, S5012).

0276 Next, a user of the external terminal operates the operation button 108 illustrated in FIG. 2, and thereby the operation input acceptance unit 12 illustrated in FIG. 4 accepts a URL request for protection resource; by using the URL request for protection resource as an opportunity, the URL request for protection resource is sent from the transmission/reception unit 11 to the management system 50 via the communication network 2 (step S5014). The URL request for protection resource includes an access token. The access tokens are issued in step S5008 by the authentication unit 52 of the management system 50.

0277 The sorting unit 82 of the load distribution apparatus 90 determines a sorting destination of the URL request for protection resource received via the transmission/reception unit 81 (step S5016).

0278 The sorting unit 82 of the load distribution apparatus 90, as a result of determination for a sorting destination of the URL request for protection resource, forwards the URL request for protection resource to the authentication unit 52 of the management system 50 (step S5018).

0279 The authentication unit 52 of the management system 50 verifies validity of the access token included in the URL request for protection resource received via the transmission/reception unit 81 (step S5020).

0280 The authentication unit 52 of the management system 50, when the verification of validity of the access token is successful, verifies authority of the access token (step S5022).

0281 The authentication unit 52 of the management system 50, when the verification of authority of the access token is successful, sends URL information of a protection resource such as "https://example.com/rosters" to an external terminal (step S5024, S5026).

0282 Next, the user of the external terminal operates the operation button 108 illustrated in FIG. 2, and thereby the operation input acceptance unit 12 illustrated in FIG. 4 accepts an access request to protection resource; by using the access request to protection resource as an opportunity, the access request to protection resource is sent from the transmission/reception unit 11 to a protection resource (https://example.com/rosters/123) of the management system 50 via the communication network 2 (step S5028). Here, "123" indicates an ID of an account. The access request to protection resource includes an access token. The access tokens are issued by the authentication unit 52 of the management system 50 in step S5008.

0283 The sorting unit 82 of the load distribution apparatus 90 determines a sorting destination of the access request to protection resource received via the transmission/reception unit 81 (step S5030).

0284 The sorting unit 82 of the load distribution apparatus 90, as a result of determination for a sorting destination of the access request to protection resource, forwards the access request to protection resource to the allowance determination unit 64 of the management system 50 (step S5032).

0285 The allowance determination unit 64 of the management system 50 determines whether the access token included in the access request to protection resource received via the transmission/reception unit 81 is forged, and thereby verifies validity of the access token (step S5034).

0286 The allowance determination unit 64 of the management system 50, when the verification of validity of the access token is successful, sends an access request to a relevant resource to access the relevant resource (https://example.com/managers/user/555) (step S5036). In the relevant resource, a user ID and an account are associated with each other and managed, and a resource for verifying whether an external terminal has authority to access a protected resource is provided. The allowance determination unit 64 manages which resource falls into the relevant resource, in order to verify whether there is authority to access. For example, the allowance determination unit 64 manages that "Manager" as a relevant resource is required to be accessed in order to access a protection resource (Roster). The allowance determination unit 64 accesses the relevant resource, and thereby acquires an account associated with "user".

0287 The allowance determination unit 64 accesses the relevant resource, and thereby acquires "Account=123" as the relevant resource (step S5038).

0288 The allowance determination unit 64 of the management system 50 verifies access authority using the relevant resource (step S5040). The allowance determination unit 64 determines that "user=555" and "Account=123" are associated with each other and there is access authority.

The allowance determination unit 64 of the management system 50, when verification of the access authority is successful, sends an access request to the protection resource (step S5042).

0289 The access request to protection resource is performed by the allowance determination unit 64 of the management system 50, and thereby the protection resource is disclosed to an external terminal (steps S5044, S5046 and S5048).

0290 Next, using FIG. 51, a (third) process where in the transmission system 1, an external terminal accesses a protection resource will be described.

0291 To steps S5102 through S5130, steps S4902 through S4934 in FIG. 49 can be applied. However, in FIG. 51, the processes corresponding to steps S4908, S4930 in FIG. 49 will be omitted.

0292 Processes from step S5132 will be described.

0293 The allowance determination unit 64 of the management system 50, when the verification of validity of the access token is successful, verifies authority of the access token (step S5132).

0294 The allowance determination unit 64 of the management system 50, when the verification of validity of the access token is unsuccessful, discloses to an external terminal that permission is not given (steps S5134, S5136).

0295 Next, using FIG. 52, a process in which an internal terminal such as the terminal 100 accesses a protection resource such as the destination list management table in the transmission system 1 will be described.

0296 A user of the internal terminal operates the operation button 108 illustrated in FIG. 2, and thereby the operation input acceptance unit 12 illustrated in FIG. 4 accepts an access request to protection resource; by using the access request to protection resource as an opportunity, the access request to protection resource is sent from the transmission/reception unit 11 to a protection resource of the management system 50 without going through the Internet 2i (step S5202).

0297 The sorting unit 82 of the load distribution apparatus 90 determines a sorting destination of the access request to protection resource received via the transmission/reception unit 81 (step S5204).

0298 The sorting unit 82 of the load distribution apparatus 90, as a result of determination for a sorting destination of the access request to protection resource, forwards the access request to protection resource to the storage/readout processing unit 59 of the management system 50 (step S5032).

0299 The access request to protection resource is performed by the storage/readout processing unit 59 of the management system 50, and thereby the protection resource is disclosed to an external terminal (steps S5208, S5210)

### «Main effect of the embodiment»

As described above, according to the embodiment, the management system 50 manages a communication state of a terminal 10 that communicates with another terminal. When the management system 50 receives change request information indicating a request to change the communication state from the terminal 10, the communication state of the managed terminal based on the received change request information and the communication state of the managed terminal. Therefore, because the management system can grasp the communication state of the terminal, an effect that efficient control of connection between terminals can be enabled is provided.

0300 Moreover, the management system 50 further manages a communication state of another terminal. When the management system 50 receives change request information indicating a request to change the communication state from the terminal 10, the communication state of the managed other terminal is changed based on the received change request information and the communication state of the managed other terminal. Therefore, because the management system 50 can manage the communication state of the other terminal, an effect that efficient control of connection between terminals can be enabled is provided.

0301 Furthermore, when the change request information is determined to be specific change request information indicating a request to change a communication state of another terminal, the management system 50 acquires the communication state of the other terminal. Accordingly, an effect that the management system 50 becomes able to change a communication state of one of the terminals starting speech or communication states of both terminals depending on a category of the change request information is provided.

0302 Moreover, the management system 50 includes a state change management DB 5009 configured with a state change management table, in which change request information, pre-change state information, and post-change management information are associated with one another and managed. Therefore, an effect is that the management system 50 becomes able to change a communication state based on change request information received by the transmission/reception unit 11, and a communication state acquired by the state acquisition unit 53b is provided.

0303 Moreover, when the communication state of the terminal 10 is not the predetermined communication state corresponding to the predetermined change request information, the management system 50 does not change state information of the terminal 10. When the communication state of the other terminal is not the predetermined communication state corresponding to the predetermined change request information, the management system 50 does not change state information of the other terminal. Therefore, an effect that the management system 50 becomes able to manage precisely the communication state of the terminal 10 and the communication state of the other terminal is provided.

0304 Moreover, the management system 50, based on the predetermined change request information, sends predetermined information used for changing communication state to at least one of the terminal 10 and the other terminal. Therefore, an effect that the management system 50 becomes able to control connection between the terminal 10 and the other terminal is provided.

0305 Moreover, when the management system 50 receives change request information indicating that a terminal as a request source requests for starting communication with a terminal as a destination and the terminal as a destination is plural, the management system 50 sends the predetermined information indicating requesting for starting communication to the plurality of terminals as destinations. Therefore, an effect that the management system 50 enables, when a speech starts at another base, a terminal as a request source to control connections with terminals as destinations is provided.

0306 Furthermore, when the terminal as a destination receives change request information indicating rejecting the start of the communication with the terminal as a request source, the management system 50 determines whether change request information indicating rejecting the start of communication is received from all the plurality of terminals as a destination, and based on a result of the determination, changes the state information of the terminal as a request source. Therefore, when the terminal as a destination receives change request information indicating rejecting the start of communication with the terminal as a request source, the management system 50 becomes able to precisely manage the communication state of the terminal as a request source.

0307 Furthermore, when information based on connection or disconnection of the terminal 10 and the management system is received, the management system 50 changes the state of the managed terminal 10 to a state indicating connection or disconnection. Therefore, the management system 50 becomes able to precisely manage the state of the terminal 10, when the terminal 10 is connected with the management system or when the terminal 10 is disconnected from the management system.

0308 Furthermore, the load distribution apparatus 90 sorts an access request to a protection resource sent going through an external network, such as the Internet, to a module that examines access authority, and sorts an access request to the protection resource sent going through an internal network, such as a network to which the management system 50 storing the protection resource belongs, so as to access the protection resource. Therefore, because access authority is not required to be verified for all the access requests, a process load in the management system 50 can be reduced. Because for an access request, for which access authority is not required to be verified, access to a protection resource is performed without verifying the access authority, process delay can be shortened.

0309

### «Supplementary description of embodiment»

In the embodiments, the case where the user of the request source terminal (terminal 10aa) selects starting speech with the destination terminal (terminals 10bb, 10cb, 10db) is described, but is not limited to this. In this case, the user of the request source terminal (terminal 10aa) may select the own terminal as the destination terminal. When the own terminal is selected as the destination terminal, at first, a session for speech data "sed" is established between the request source terminal (terminal 10aa) and the relay apparatus 30. Subsequently, the request source terminal (terminal 10aa) specifies a desired destination terminal, information indicating requesting for reporting to the destination terminal a session ID required for participating in the session for speech data "sed" is accepted (See step S101), and a process for requesting for participating in the session is executed, and thereby the speech can start. When the request source terminal (terminal 10aa) selects the own terminal as a destination terminal and change request information "Invite" is sent, the management system 50 searches the state change management table (See FIG. 17) with the terminal information "select own terminal" as a search key, and changes the state of the request source terminal (terminal 10aa).

0310 In the embodiment, as illustrated in FIG. 22, a destination list frame 1100-1 in a state indicating destination name 1100-2 and the like and icons 1100-3a and the like is displayed, but is not limited to this. The destination list frame 1100-1 may not be displayed and only the destination name 1100-2 and the like and the icons 1100-3a and the like may be displayed.

0311 In the embodiment, the load distribution apparatus 90 and the management system 50 are described as different apparatuses, but the management system 50 may include the load distribution apparatus 90, and the load distribution apparatus 90 and the management system 50 may be integrated.

0312 Moreover, any of the recording media storing a program for terminal, a program for relay apparatus, and a program for transmission management in the embodiment, the HD 204 storing the programs, and the program provision system provided with the HD 204 is used when the program for terminal, the program for relay apparatus and the program for transmission management are provided to users of the like as a program product within the country or abroad.

0313 Furthermore, in the embodiment, by the change quality management table illustrated in FIG. 7 and the quality management table illustrated in FIG. 14, as an example of quality of an image of image data to be relayed at the relay apparatus 30, a resolution of an image of image data is focused and managed, but is not limited to this. As another example of quality, a depth of image quality, a sampling frequency in sound of sound data, or a bit length in sound of sound data may be focused on and managed.

0314 Moreover, in FIGs. 9, 11, and 13, reception date and time are managed, but is not limited to this. At least the reception time of the reception date and time may be managed.

0315 Furthermore, in the embodiment, in FIG. 9, an IP address of the relay apparatus and, in FIG. 11, an IP address of the terminal are managed, but is not limited to this. As long as being relay apparatus specification information for specifying the relay apparatus 30 on the communication network 2, or terminal specification information for specifying the terminal 10 on the communication network 2, respective FQDN (Fully Qualified Domain Name) thereof may be managed. In this case, an IP address corresponding to the FQDN is acquired by the known DNS (Domain Name System) server. In addition, not only the "relay apparatus specification information for specifying the relay apparatus 30 on the communication network 2", but may be expressed by "relay apparatus connection destination information indicating connection destination to the relay apparatus 30 on the communication network 2", or "relay apparatus destination information indicating destination to the relay apparatus 30 on the communication network 2". Similarly, not only the "terminal specification information for specifying the terminal 10 on the communication network 2", but may be expressed by "terminal connection destination information indicating connection destination to the terminal 10 on the communication network 2", or "terminal destination information indicating destination to the terminal 10 on the communication network 2".

0316 In the embodiment, "television conference" is used as a term that can be replaced by "video conference".

0317 Moreover, in the embodiment, as an example of the transmission system 1, a case of video conference system is described, but is not limited to this. A telephone system such as an IP (Internet Protocol) telephone, or an Internet telephone may be employed. Moreover, the transmission system 1 may be a car navigation system. In this case, for example, one of the terminals 10 corresponds to a car navigation device installed in a vehicle, and the other one of the terminals 10 correspond to a management terminal or a management server in a management center that manages car navigation, or a car navigation device installed on another vehicle. Furthermore, the transmission system 1 may be an audio conference system, or a PC (Personal Computer) screen sharing system.

0318 Furthermore, the transmission system 1 may be a communication system of a mobile phone. In this case, for example, the terminal 10 corresponds to a mobile phone. A display example of a destination list in this case is illustrated in FIG. 35. That is, the terminal 10 as a mobile phone is provided with a main body of mobile phone 10-1, a menu screen display button 10-2 arranged on the main body 10-1, a display unit 10-3 arranged on the main body 10-1, a microphone 10-4 arranged in a lower part of the main body 10-1, and a speaker 10-5 arranged on the main body 10-1. Among the members, the "menu screen display button" 10-2 is a button for displaying a menu screen in which icons indicating various applications are displayed. The display unit 10-3 is a touch panel, and when a user selects a destination name, the user can make a voice call with another mobile phone on the other side.

0319 Moreover, in the embodiment, as an example of content data, image data and sound data are described, but is not limited to this. Touch data may be employed. In this case, a sense of touch that a user touches on one terminal side is transmitted to another terminal side. Furthermore, the content data may be smell data. In this case, a smell (aroma) on one terminal side is transmitted to the other terminal side. Moreover, the content data may be at least one data among image data, sound data, touch data and smell data.

0320 Moreover, in the embodiment, the video conference held by the transmission system 1 is described, but is not limited. The transmission system 1 may be used for a meeting, a general conversation among family members or friends, or a presentation of information in one direction.

Although the present invention is described with reference to specific embodiment or variation, the respective embodiments or variations are merely illustrative. A person skilled in the art would understand various variations, modifications, alternatives, substitutions or the like. For convenience of description, an apparatus according to the embodiment of the present invention is described with reference to a functional block diagram. But such apparatus may be achieved by hardware, software or a combination thereof. The present invention is not limited to any of the embodiments and specific examples, but various variations, modifications, alternatives, substitutions or combinations may be made without departing from the scope of the present invention.

0321 The present application is based on Japanese Priority Application No. 2014-016955 filed on January 31, 2014, with the Japanese Patent Office, and the entire contents of Japanese Priority Application No. 2014-0165955 are hereby incorporated by reference.

### [Reference Signs List]

0322
10 transmission terminal
11 transmission/reception unit
16 display control unit
18 delay detection unit
19 storage/readout processing unit
31 transmission/reception unit
32 state detection unit
33 data quality confirmation unit
34 change quality management unit
35 data quality change unit
39 storage/readout processing unit
50 management system
51 transmission/reception unit (an example of reception unit, an example of transmission unit)
52 terminal authentication unit
53 state management unit
53a state setting unit (an example of setting unit)
53b state acquisition unit (an example of acquisition unit)
53c state change unit (an example of change unit)
54 terminal extraction unit
55 terminal state acquisition unit
56 primary narrowing unit
56a session ID generation unit
56b relay apparatus selection unit
56c selection unit
57 session management unit
58 quality decision unit
59 storage/readout processing unit
60 delay time management unit
61 decision unit
62 determination unit
63 change request information determination unit (an example of change information determination unit)
64 allowance determination unit
65 destination list management unit
66 supplemental request management unit
80 transmission terminal management system
81 transmission/reception unit
82 terminal authentication unit
83 extraction unit
84 destination list creation unit
85 supplemental approval request screen generation unit
89 storage/readout processing unit
90 load distribution apparatus
91 transmission/reception unit
92 sorting unit
93 storage/readout management unit
1000 non-volatile storage unit
1100 volatile storage unit
3000 non-volatile storage unit
3001 change quality management DB
5000 non-volatile storage unit (an example of terminal management unit)
5001 relay apparatus management DB
5002 terminal authentication management DB
5003 terminal management DB (an example of terminal management unit)
5004 destination list management DB
5005 session management DB
5007 quality management DB
5009 state change management DB (an example of state change management unit)
5010 supplemental request management DB
9001 forwarding destination sorting DB

## Claims

1. A management system comprising:
a sorting unit configured to receive an access request for a protection resource, an access to which is protected, transmitted from a communication apparatus, and sort as a forwarding destination of the access request to a first forwarding destination or a second forwarding destination based on a transmission path of the access request;
an allowance determination unit configured to determine whether an access to the protection resource by the access request sorted to the first forwarding destination is allowed; and
a readout processing unit configured to access the protection resource by the access request, the access of which is determined to be allowed by the allowance determination unit, or the access request sorted to the second forwarding destination by the sorting unit, and disclose the protection resource to the communication apparatus.

2. The management system according to claim 1,
wherein the sorting unit is configured to sort an access request from a network, to which the management system belongs, to the second forwarding destination, and sort an access request from another network other than the network to the first forwarding destination.

3. The management system according to claim 1 or 2,
wherein the sorting unit is configured to sort the access request based on an IP address of a request destination of an access.

4. The management system according to any one of claims 1 to 3,
wherein the allowance determination unit is configured to verify validity of a token, which is sent upon the access request, upon examining whether the access to the protection resource is allowed, and examine an authority of the token.

5. A management method executed by a management system comprising:
receiving an access request for a protection resource, an access to which is protected, transmitted from a communication apparatus, and sorting a forwarding destination of the access request to a first forwarding destination or a second forwarding destination based on a transmission path of the access request;
determining whether an access to the protection resource by the access request sorted to the first forwarding destination is allowed; and
accessing the protection resource by the access request, the access of which is determined to be allowed, or the access request sorted to the second forwarding destination, and disclosing the protection resource to the communication apparatus.

6. A program for causing a computer used in a communication system including a communication apparatus and a management apparatus coupled to the communication apparatus via a network to function, the program causing the computer to
receive an access request for a protection resource, an access to which is protected, transmitted from the communication apparatus, and sort a forwarding destination of the access request to a first forwarding destination or a second forwarding destination based on a transmission path of the access request;
determine whether an access to the protection resource by the access request sorted to the first forwarding destination is allowed; and
access the protection resource by the access request, the access of which is determined to be allowed, or the access request sorted to the second forwarding destination, and disclose the protection resource to the communication apparatus.
